(19) Europäisches Patentamt
European Patent Office
Office européen des brevets

(11) **EP 4 618 612 A1**

(12) **EUROPEAN PATENT APPLICATION**
published in accordance with Art. 153(4) EPC

(43) Date of publication:
**17.09.2025 Bulletin 2025/38**

(21) Application number: **23899988.2**

(22) Date of filing: **06.12.2023**

(51) International Patent Classification (IPC):
***H04W 24/08*** (2009.01)

(52) Cooperative Patent Classification (CPC):
**H04W 24/08; H04W 24/10; H04W 76/11;
H04W 84/12**

(86) International application number:
**PCT/CN2023/136627**

(87) International publication number:
**WO 2024/120414 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.12.2022 CN 202211557914**

(71) Applicant: **Huawei Technologies Co., Ltd.
Shenzhen, Guangdong 518129 (CN)**

(72) Inventors:
• **NAREN, Gerile
Shenzhen, Guangdong 518129 (CN)**

• **HU, Mengshi
Shenzhen, Guangdong 518129 (CN)**
• **DU, Rui
Shenzhen, Guangdong 518129 (CN)**
• **HAN, Xiao
Shenzhen, Guangdong 518129 (CN)**
• **LI, Yunbo
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **INFORMATION INDICATION METHODS IN WIRELESS SENSING, AND RELATED DEVICE**

(57) This application is applied to a sensing system, for example, the 802.11bf protocol or a next-generation sensing protocol of the 802.11bf protocol, and relates to the field of wireless communication, in particular, to an information indication method in WLAN sensing and a related apparatus. The method includes: An STA transmits an SBP request frame to request an AP to serve as a proxy of the STA to perform sensing measurement, where the SBP request frame carries indication information that indicates whether a sensing responder specified by the STA participates in TF sounding, NDPA sounding, or SR2SR sounding; and the AP replies with an SBP response frame to reject or accept the request of the STA. According to this application, an SBP initiator can have a function of setting a measurement parameter related to the sensing responder. This application is further applied to a UWB-based WPAN system and the like, including the 802.15 series protocol, and may be further applied to a WLAN system of the 802.11 series protocol, for example, 802.11be or a next generation of 802.11be like Wi-Fi 8.

S101: Transmit a sensing by proxy request frame, where the sensing by proxy request frame includes addresses of N sensing responders, an address of one sensing responder is used to identify one sensing responder, the sensing by proxy request frame further includes first indication information, and the first indication information indicates whether the N sensing responders participate in one or more of the following sensing measurement: TF sounding, NDPA sounding, or SR2SR sounding

S102: Transmit a sensing by proxy response frame

FIG. 5

## Description

This application claims priority to Chinese Patent Application No. 202211557914.9, filed with the China National Intellectual Property Administration on December 6, 2022 and entitled "INFORMATION INDICATION METHOD IN WLAN SENSING AND RELATED APPARATUS", which is incorporated herein by reference in its entirety.

## TECHNICAL FIELD

This application relates to the field of wireless communication technologies, and in particular, to an information indication method in WLAN sensing and a related apparatus.

## BACKGROUND

Due to wide deployment of wireless fidelity (wireless fidelity, Wi-Fi) devices and the growing demand for sensing (sensing), using widely available Wi-Fi devices for sensing has become a current research hotspot. In daily life, a signal transmitted by a Wi-Fi device is usually received only after being reflected, diffracted, and scattered by various obstacles. Due to this phenomenon, an actually received signal is usually a superposition of a plurality of signals. Therefore, a wireless signal may sense a physical environment that the wireless signal passes through, and a surrounding environment may be inferred by analyzing the wireless signal "modulated" by various obstacles. Therefore, a wireless local area network (wireless local area network, WLAN) sensing (sensing) technology (which may also be referred to as a WLAN sensing technology for short) is derived. WLAN sensing is a technology with broad application prospects. In the WLAN sensing technology, widely deployed Wi-Fi devices may transmit specific data or specific communication channel sounding frames to sense a surrounding environment, then receive signal echoes or feedback information generated by peer devices in a wireless network, and then extract corresponding parameters in the received signals based on specific algorithms for analysis, to obtain information about the surrounding environment.

The 802.11bf standard is a standard formulated by the Institute of Electrical and Electronics Engineers (institute of electrical and electronics engineers, IEEE) for WLAN sensing (WLAN sensing), and the standard specifies sensing protocols for a sub-7 GHz frequency band and a 60 GHz frequency band. The 802.11bf protocol introduces a special sensing scenario: sensing by proxy (sensing by proxy, SBP). The SBP means that a non-access point station (non-access point station, non-AP STA) may request an access point (access point, AP) to serve as a proxy of the non-access point station to perform WLAN sensing, and enable the AP to feed back a sensing measurement result to the non-access point station.

Currently, with development of the WLAN sensing technology, sensing performance of the SBP may be further improved.

## SUMMARY

Embodiments of this application provide an information indication method in WLAN sensing and a related apparatus, so that an SBP initiator can have a function of setting a measurement parameter related to a sensing responder, thereby helping the SBP initiator control and manage an SBP sensing procedure and parse an SBP measurement result.

The following describes this application from different aspects. It should be understood that the following implementations and beneficial effects of different aspects may be mutually referenced.

According to a first aspect, this application provides an information indication method in WLAN sensing. The method is applied to an SBP initiator, and the SBP initiator may be a non-AP STA. The method includes: The SBP initiator transmits a sensing by proxy request frame, to request an SBP responder to serve as a proxy (proxy) of the SBP initiator to initiate a sensing measurement procedure; and the SBP initiator receives a sensing by proxy response frame that is replied by the SBP responder and that is used to accept or reject the request of the SBP initiator. The sensing by proxy request frame includes first indication information, and the first indication information indicates whether the sensing responder participates in one or more of the following sensing measurement: trigger frame (trigger frame, TF) sounding (TF sounding), null data packet announcement (null data packet announcement, NDPA) sounding (NDPA sounding), or sensing responder-to-sensing responder (sensing responder-to-sensing responder, SR2SR) sounding (SR2SR sounding). Alternatively, the first indication information indicates one or more of the following: a sensing responder participating in TF sounding, a sensing responder participating in NDPA sounding, or a sensing responder participating in SR2SR sounding.

Optionally, the sensing by proxy request frame further includes addresses of N sensing responders, and an address of one sensing responder is used to identify one sensing responder. The first indication information specifically indicates whether the N sensing responders participate in one or more of the following sensing measurement: TF sounding, NDPA sounding, or SR2SR sounding. N is an integer greater than or equal to 1.

In this application, the SBP initiator sets, in an SBP setup phase, sensing measurement (namely, TF sounding, NDPA sounding, or SR2SR sounding) in which a sensing responder (specified by the SBP initiator) participates. This can not only enable the SBP initiator to have a function of setting a measurement parameter related to the sensing responder, thereby helping the SBP initiator control and manage an SBP sensing procedure, but also help the SBP initiator parse a sensing measurement report.

According to a second aspect, this application provides an information indication method in WLAN sensing. The method is applied to an SBP responder, and the SBP responder may be an AP. The method includes: The SBP responder receives a sensing by proxy request frame that is used to request the SBP responder to serve as a proxy (proxy) of an SBP initiator to initiate a sensing measurement procedure; and the SBP responder transmits a sensing by proxy response frame that is replied by the SBP responder and that is used to accept or reject the request of the SBP initiator. The sensing by proxy request frame includes first indication information, and the first indication information indicates whether the sensing responder participates in one or more of the following sensing measurement: TF sounding, NDPA sounding, or SR2SR sounding. Alternatively, the first indication information indicates one or more of the following: a sensing responder participating in TF sounding, a sensing responder participating in NDPA sounding, or a sensing responder participating in SR2SR sounding.

Optionally, the sensing by proxy request frame further includes addresses of N sensing responders, and an address of one sensing responder is used to identify one sensing responder. The first indication information specifically indicates whether the N sensing responders participate in one or more of the following sensing measurement: TF sounding, NDPA sounding, or SR2SR sounding. N is an integer greater than or equal to 1.

In a possible implementation of any one of the foregoing aspects, the first indication information is implemented using a bitmap (bitmap). The first indication information includes one or more of the following: a first bitmap, a second bitmap, or a third bitmap. A bit in the first bitmap indicates whether the N sensing responders participate in TF sounding, a bit in the second bitmap indicates whether the N sensing responders participate in NDPA sounding, and a bit in the third bitmap indicates whether the N sensing responders participate in SR2SR sounding. Lengths of the first bitmap, the second bitmap, and the third bitmap are all greater than or equal to N bits.

Optionally, the first indication information is carried in an SBP parameters element (SBP parameters element) of the sensing by proxy request frame.

Optionally, if the third bitmap is present, the first indication information includes L third bitmaps, where L is an integer greater than or equal to 1. A value of L is predefined, pre-configured, pre-negotiated, indicated in the SBP parameters element, or the like. One third bitmap corresponds to one SR2SR sounding pattern, and the SR2SR sounding pattern may describe a transmitter and a receiver that are of a sensing physical layer protocol data unit (physical layer protocol data unit, PPDU) in SR2SR sounding. Alternatively, one SR2SR sounding pattern may describe a group of roles in SR2SR sounding.

In this application, whether the sensing responder participates in various sensing measurement (for example, TF/NDPA/SR2SR sounding) is indicated in a bitmap manner. This manner barely modifies the SBP parameters element, is simple and clear, has low overheads, is easy to implement, and facilitates compatibility with an existing protocol.

In a possible implementation of any one of the foregoing aspects, the first indication information includes a fourth bitmap, a length of the fourth bitmap is M*N bits, every M bits in the fourth bitmap correspond to one sensing responder, and the M bits indicate whether a corresponding sensing responder participates in TF sounding, NDPA sounding, or SR2SR sounding. For example, M is equal to 2. This can reduce a number of bits.

In a possible implementation of any one of the foregoing aspects, the first indication information is implemented using a field corresponding to the sensing responder. The first indication information includes one or more of the following corresponding to the N sensing responders: a first field, a second field, or a third field. For example, one sensing responder corresponds to one or more of the following: one first field, one second field, or one third field. The first field indicates whether a sensing responder corresponding to the first field participates in TF sounding, the second field indicates whether a sensing responder corresponding to the second field participates in NDPA sounding, and the third field indicates whether a sensing responder corresponding to the third field participates in SR2SR sounding.

Optionally, a length of the third field is greater than or equal to L bits, where L is an integer greater than or equal to 1. A bit in the third field indicates whether the sensing responder corresponding to the third field participates in SR2SR sounding respectively corresponding to L SR2SR sounding patterns. One SR2SR sounding pattern corresponds to one or more times of SR2SR sounding. The SR2SR sounding pattern describes a transmitter and a receiver that are of a sensing PPDU in SR2SR sounding. Alternatively, one SR2SR sounding pattern may describe a group of roles in SR2SR sounding.

In this application, a field is designed for each sensing responder, and the field indicates one sensing responder and indicates whether the sensing responder participates in various sensing measurement (for example, TF/NDPA/SR2SR sounding). In this way, a meaning of the field is clear and is easy to understand, and the SBP responder can learn of complete information about the sensing responder in a parsing procedure.

In a possible implementation of any one of the foregoing aspects, the first indication information includes fourth fields corresponding to the N sensing responders, and one sensing responder corresponds to one fourth field. One fourth field indicates whether a sensing responder corresponding to the fourth field participates in TF sounding, NDPA sounding, or SR2SR sounding. For example, a length of the fourth field is 2 bits. This can reduce a number of bits.

In a possible implementation of any one of the foregoing aspects, the sensing by proxy request frame further includes second indication information, and the second indication information indicates whether the first indication information is present. Herein, the second indication information is set to a preset value (for example, 1), to indicate that the first indication information is present. It may be understood that whether the preset value is 0 or 1 is not limited in this application.

Optionally, the second indication information is carried in an SBP parameters control (SBP parameters control) field in the SBP parameters element.

Information following the SBP parameters control field in the SBP parameters element is determined based on the SBP parameters control field. Therefore, in this application, the second indication information is carried in the SBP parameters control field to indicate whether the first indication information is present. This design is more flexible, and facilitates compatibility with an existing protocol or an existing device.

In a possible implementation of any one of the foregoing aspects, the sensing by proxy request frame further includes one or more of the following: third indication information, fourth indication information, or fifth indication information. For example, one or more of the third indication information, the fourth indication information, or the fifth indication information is carried in the SBP parameters control field. The third indication information indicates whether the SBP initiator requests to perform SR2SR sounding in a sensing by proxy procedure. The fourth indication information indicates a number of SR2SR sounding patterns, namely, a value of L, and one SR2SR sounding pattern corresponds to one or more times of SR2SR sounding. The fifth indication information indicates a number of times of SR2SR sounding corresponding to each SR2SR sounding pattern. It may be understood that if the third indication information indicates that the SBP initiator does not perform SR2SR sounding in the sensing by proxy procedure, the fourth indication information and/or the fifth indication information may be set to reserved values/a reserved value, or the sensing by proxy request frame does not include the fourth indication information and/or the fifth indication information.

In this application, TF sounding and NDPA sounding are different from SR2SR sounding (for a specific difference, refer to descriptions in the method embodiments, and details are not described herein). Therefore, in this application, the sensing by proxy request frame carries more information related to SR2SR sounding. This helps the SBP initiator subsequently control and manage SR2SR sounding and parse a measurement result of SR2SR sounding.

In a possible implementation of any one of the foregoing aspects, the sensing by proxy request frame further includes role indication information, and the role indication information indicates roles of the N sensing responders in a sensing measurement instance. The roles in this application include one or more of the following: a sensing transmitter, a sensing receiver, and a sensing transmitter and a sensing receiver. Optionally, one sensing responder plays one role in one sensing measurement instance. In other words, one sensing responder plays a role of either a sensing transmitter, a sensing receiver, or both a sensing transmitter and a sensing receiver in one sensing measurement instance.

Optionally, the role indication information is carried in the SBP parameters element of the sensing by proxy request frame.

In this application, the SBP initiator sets a role of the sensing responder in an SBP setup phase. This can not only enable the SBP initiator to have a function of setting the role of the sensing responder, thereby helping the SBP initiator control and manage the SBP sensing procedure, but also help the SBP initiator parse a sensing measurement report.

In a possible implementation of any one of the foregoing aspects, the sensing by proxy request frame further includes role present indication information, and the role present indication information indicates whether the role indication information is present.

In a possible implementation of any one of the foregoing aspects, the sensing by proxy request frame further includes mandatory role indication information, and the mandatory role indication information indicates whether the N sensing responders need to satisfy an indication of the role indication information.

In a possible implementation of any one of the foregoing aspects, the sensing by proxy request frame further includes sixth indication information, and the sixth indication information indicates whether the N sensing responders need to satisfy an indication of the first indication information.

Optionally, the sixth indication information and/or the mandatory role indication information are/is carried in the SBP parameters control field in the SBP parameters element.

Optionally, if the sixth indication information indicates that the N sensing responders specified by the SBP initiator need to satisfy the indication of the first indication information, and the SBP responder can satisfy the indication of the first indication information in an SBP request frame, the SBP responder may indicate, in an SBP response frame, that an SBP request is accepted. If the SBP responder cannot satisfy the indication of the first indication information in an SBP request frame, the SBP responder may indicate, in an SBP response frame, that an SBP request is rejected, and carry an SBP parameters element in the SBP response frame to provide a recommended measurement parameter.

In this application, indication information is carried in the sensing by proxy request frame to notify the SBP responder whether the sensing responder specified by the SBP initiator needs to meet a requirement of the SBP initiator, to help the SBP responder determine whether the request of the SBP initiator can be accepted.

In a possible implementation of any one of the foregoing aspects, the sensing by proxy response frame includes one or more of the following: the first indication information or the role indication information. Meanings of the indication information are the same as or similar to those described above. Details are not described herein again.

Optionally, if the sensing by proxy response frame includes the first indication information, the sensing by proxy response frame further includes one or more of the following: the second indication information, the third indication information, the fourth indication information, the fifth indication information, or the sixth indication information (that indicates whether the sensing responder specified by the SBP responder needs to satisfy the indication of the first indication information). Meanings of the indication information are the same as or similar to those described above. Details are not described herein again.

Optionally, if the sensing by proxy response frame includes the role indication information, the sensing by proxy response frame further includes one or more of the following: the role present indication information or the mandatory role indication information (that indicates whether the sensing responder specified by the SBP responder needs to satisfy the role indication information). Meanings of the indication information are the same as or similar to those described above. Details are not described herein again.

According to a third aspect, an embodiment of this application provides a communication apparatus, configured to perform the method according to any one of the first aspect or the possible implementations of the first aspect. The communication apparatus includes a unit for performing the method according to any one of the first aspect or the possible implementations of the first aspect.

For example, the communication apparatus may be a non-AP STA or a chip, and the chip may be used in the non-AP STA.

According to a fourth aspect, an embodiment of this application provides a communication apparatus, configured to perform the method according to any one of the second aspect or the possible implementations of the second aspect. The communication apparatus includes a unit for performing the method according to any one of the second aspect or the possible implementations of the second aspect.

For example, the communication apparatus may be an AP or a chip, and the chip may be used in the AP.

In the third aspect or the fourth aspect, the communication apparatus may include a transceiver unit and a processing unit. For specific descriptions of the transceiver unit and the processing unit, refer to apparatus embodiments provided below. For beneficial effect of the third aspect and the fourth aspect, refer to related descriptions of the first aspect and the second aspect. Details are not described herein again.

According to a fifth aspect, this application provides an information indication method in WLAN sensing. The method is applied to an SBP initiator, and the SBP initiator may be a non-AP STA. The method includes: The SBP initiator transmits a sensing by proxy request frame, to request an SBP responder to serve as a proxy (proxy) of the SBP initiator to initiate a sensing measurement procedure; and the SBP initiator receives a sensing by proxy response frame that is replied by the SBP responder and that is used to accept or reject the request of the SBP initiator. The sensing by proxy request frame includes role indication information, and the role indication information indicates a role of the sensing responder in a sensing measurement instance. The role includes any one of the following: a sensing transmitter, a sensing receiver, and a sensing transmitter and a sensing receiver. Alternatively, the role indication information indicates one or more of the following: a sensing responder serving as a sensing transmitter, a sensing responder serving as a sensing receiver, or a sensing responder serving as both a sensing transmitter and a sensing receiver in the sensing measurement instance.

Optionally, the sensing by proxy request frame further includes addresses of N sensing responders, and an address of one sensing responder is used to identify one sensing responder. The role indication information specifically indicates roles of the N sensing responders in the sensing measurement instance. N is an integer greater than or equal to 1.

In this application, the SBP initiator sets a role of the sensing responder in an SBP setup phase. This can not only enable the SBP initiator to have a function of setting the role of the sensing responder, thereby helping the SBP initiator control and manage an SBP sensing procedure, but also help the SBP initiator parse a sensing measurement report.

According to a sixth aspect, this application provides an information indication method in WLAN sensing. The method is applied to an SBP responder, and the SBP responder may be an AP. The method includes: The SBP responder receives a sensing by proxy request frame that is used to request the SBP responder to serve as a proxy (proxy) of an SBP initiator to initiate a sensing measurement procedure; and the SBP responder transmits a sensing by proxy response frame that is replied by the SBP responder and that is used to accept or reject the request of the SBP initiator. The sensing by proxy request frame includes role indication information, and the role indication information indicates a role of the sensing responder in a sensing measurement instance. The role includes any one of the following: a sensing transmitter, a sensing receiver, and a sensing transmitter and a sensing receiver. Alternatively, the role indication information indicates one or more of the following: a sensing responder serving as a sensing transmitter, a sensing responder serving as a sensing receiver, or a sensing responder serving as both a sensing transmitter and a sensing receiver in the sensing measurement instance.

Optionally, the sensing by proxy request frame further includes addresses of N sensing responders, and an address of one sensing responder is used to identify one sensing responder. The role indication information specifically indicates roles of the N sensing responders in the sensing measurement instance. N is an integer greater than or equal to 1.

In a possible implementation of the fifth aspect or the sixth aspect, the role indication information is carried in an SBP parameters element of the sensing by proxy request frame.

In a possible implementation of the fifth aspect or the sixth aspect, the sensing by proxy request frame further includes role present indication information, and the role present indication information indicates whether the role indication information is present. Herein, the role present indication information is set to a preset value (for example, 1), to indicate that the role indication information is present.

In a possible implementation of the fifth aspect or the sixth aspect, the sensing by proxy request frame further includes mandatory role indication information, and the mandatory role indication information indicates whether the N sensing responders need to satisfy an indication of the role indication information.

Optionally, the mandatory role indication information is carried in an SBP parameters control field in the SBP parameters element.

In a possible implementation of the fifth aspect or the sixth aspect, the sensing by proxy response frame includes the role indication information. Optionally, the sensing by proxy response frame further includes one or more of the following: the role present indication information or the mandatory role indication information. Meanings of the indication information are the same as or similar to those described above. Details are not described herein again.

According to a seventh aspect, an embodiment of this application provides a communication apparatus, configured to perform the method according to any one of the fifth aspect or the possible implementations of the fifth aspect. The communication apparatus includes a unit for performing the method according to any one of the fifth aspect or the possible implementations of the fifth aspect.

For example, the communication apparatus may be a non-AP STA or a chip, and the chip may be used in the non-AP STA.

According to an eighth aspect, an embodiment of this application provides a communication apparatus, configured to perform the method according to any one of the sixth aspect or the possible implementations of the sixth aspect. The communication apparatus includes a unit for performing the method according to any one of the sixth aspect or the possible implementations of the sixth aspect.

For example, the communication apparatus may be an AP or a chip, and the chip may be used in the AP.

In the seventh aspect or the eighth aspect, the communication apparatus may include a transceiver unit and a processing unit. For specific descriptions of the transceiver unit and the processing unit, refer to apparatus embodiments provided below. For beneficial effect of the seventh aspect and the eighth aspect described above, refer to the related descriptions in the fifth aspect and the sixth aspect described above. Details are not provided herein.

According to a ninth aspect, this application provides an information indication method in WLAN sensing. The method includes: A first communication apparatus generates and transmits a first sensing element. The first sensing element is used by the first communication apparatus to exchange sensing capability information with a second communication apparatus. The first sensing element includes a first field, a length of the first field is greater than 4 bits, and the first field indicates a maximum total number of sensing measurement setups that the first communication apparatus can set up with the second communication apparatus.

For example, the first field may be a maximum number of supported sensing measurement setups (max number of supported setups) field, and is located in a sensing field in a sensing element. For ease of differentiation below, the first field is represented by the maximum number of supported sensing measurement setups (max number of supported setups) field. In some embodiments, for example, Embodiment 4 below, the two fields may be used interchangeably.

In this application, because there are seven reserved bits in a sensing (sensing) field in an existing sensing element, a length of the max number of supported setups field can be modified by reducing a number of existing reserved bits, so that the max number of supported setups field can indicate a total number of measurement setups (measurement setup, MS) that may be set up (that is, 0 MSs to 16 MSs).

With reference to the ninth aspect, in a possible implementation, the method further includes: The first communication apparatus receives a second sensing element transmitted by the second communication apparatus. The second sensing element is used by the second communication apparatus to exchange sensing capability information with the first communication apparatus, the second sensing element includes a second field, a length of the second field is greater than 4 bits, and the second field indicates a maximum total number of sensing measurement setups that the second communication apparatus can set up with the first communication apparatus. For example, the second field may alternatively be a maximum number of supported sensing measurement setups (max number of supported setups) field, and is located in the sensing field in the sensing element. For ease of differentiation below, the second field may alternatively be represented by the maximum number of supported sensing measurement setups (max number of supported setups) field. In some embodiments, for example, Embodiment 4 below, the two fields may be used interchangeably.

It may be understood that frame formats of the first sensing element and the second sensing element may be the same. In other words, fields included in the first sensing element and fields included in the second sensing element may be the same, but specific values of the fields may be different. In other words, specific values of the max number of supported setups field in the first sensing element and the max number of supported setups field in the second sensing element may be different, and meanings of the values are the same or similar. For details, refer to descriptions in the following embodiments. Details are not described herein due to space limitations.

According to a tenth aspect, this application provides an information indication method in WLAN sensing. The method includes: A second communication apparatus receives a first sensing element transmitted by a first communication apparatus, where the first sensing element is used by the first communication apparatus to exchange sensing capability information with the second communication apparatus; and the second communication apparatus parses the first sensing element, where the first sensing element includes a first field, a length of the first field is greater than 4 bits, and the first field indicates a maximum total number of sensing measurement setups that the first communication apparatus can set up with the second communication apparatus.

For example, the first field may be a maximum number of supported sensing measurement setups field, and is located in a sensing field in a sensing element. For ease of differentiation below, the first field is represented by the maximum number of supported sensing measurement setups field below. In some embodiments, for example, Embodiment 4 below, the two fields may be used interchangeably.

With reference to the tenth aspect, in a possible implementation, the method further includes: The second communication apparatus transmits a second sensing element to the first communication apparatus. The second sensing element is used by the second communication apparatus to exchange sensing capability information with the first communication apparatus, the second sensing element includes a second field, a length of the second field is greater than 4 bits, and the second field indicates a maximum total number of sensing measurement setups that the second communication apparatus can set up with the first communication apparatus. For example, the second field may alternatively be a maximum number of supported sensing measurement setups field, and is located in a sensing field in a sensing element. For ease of differentiation below, the second field may alternatively be represented by the maximum number of supported sensing measurement setups field. In some embodiments, for example, Embodiment 4 below, the two fields may be used interchangeably.

It may be understood that frame formats of the first sensing element and the second sensing element may be the same. In other words, fields included in the first sensing element and fields included in the second sensing element may be the same, but specific values of the fields may be different. In other words, specific values of the max number of supported setups field in the first sensing element and the max number of supported setups field in the second sensing element may be different, and meanings of the values are the same or similar. For details, refer to descriptions in the following embodiments. Details are not described herein due to space limitations.

According to an eleventh aspect, an embodiment of this application provides a communication apparatus, configured to perform the method according to any one of the ninth aspect or the possible implementations of the ninth aspect. The communication apparatus includes a unit for performing the method according to any one of the ninth aspect or the possible implementations of the ninth aspect.

According to a twelfth aspect, an embodiment of this application provides a communication apparatus, configured to perform the method according to any one of the tenth aspect or the possible implementations of the tenth aspect. The communication apparatus includes a unit for performing the method according to any one of the tenth aspect or the possible implementations of the tenth aspect.

In the eleventh aspect or the twelfth aspect, the communication apparatus may include a transceiver unit and a processing unit. For specific descriptions of the transceiver unit and the processing unit, refer to apparatus embodiments provided below. For beneficial effect of the eleventh aspect and the twelfth aspect described above, refer to the related descriptions in the ninth aspect and the tenth aspect described above. Details are not provided herein.

According to a thirteenth aspect, this application provides an information indication method in WLAN sensing. The method includes: A first communication apparatus generates and transmits a first sensing element. The first sensing element is used by the first communication apparatus to exchange sensing capability information with a second communication apparatus, and the first sensing element includes a first field and a second field. The first field indicates a maximum total number of trigger-based sensing measurement setups that the first communication apparatus can set up with the second communication apparatus. The second field indicates a maximum total number of non-trigger-based sensing measurement setups that the first communication apparatus can set up with the second communication apparatus.

For example, the first field and the second field may be located in a sensing field in a sensing element. The first field may also be referred to as a maximum number of supported trigger-based sensing measurement setups field. In some embodiments, for example, Embodiment 5 below, the two fields may be used interchangeably. Similarly, the second field may also be referred to as a maximum number of supported non-trigger-based sensing measurement setups field. In some embodiments, for example, Embodiment 5 below, the two fields may be used interchangeably. Certainly, the first field and the second field may alternatively have other names. This is not limited in this application. For ease of description in Embodiment 5 below, the maximum number of supported trigger-based sensing measurement setups field represents the first field, and the maximum number of supported non-trigger-based sensing measurement setups field represents the second field.

In this application, two fields are added to the sensing field in the sensing element, one field indicates a maximum total number of TB sensing measurement setups that a device transmitting the sensing element can set up with a device receiving the sensing element, and the other field indicates a maximum total number of non-TB sensing measurement setups that the device transmitting the sensing element can set up with the device receiving the sensing element. In this way, not only a total number of MSs that may be set up (that is, 0 MSs to 16 MSs) can be indicated, but also types of MSs can be distinguished.

With reference to the thirteenth aspect, in a possible implementation, the method further includes: The first communication apparatus receives a second sensing element transmitted by the second communication apparatus. The second sensing element is used by the second communication apparatus to exchange sensing capability information with the first communication apparatus. A third field included in the second sensing element indicates a maximum total number of trigger-based sensing measurement setups that the second communication apparatus can set up with the first communication apparatus. A fourth field included in the second sensing element indicates a maximum total number of non-trigger-based sensing measurement setups that the second communication apparatus can set up with the first communication apparatus.

For example, the third field may also be referred to as a maximum number of supported trigger-based sensing measurement setups field. In some embodiments, for example, Embodiment 5 below, the two fields may be used interchangeably. Similarly, the fourth field may also be referred to as a maximum number of supported non-trigger-based sensing measurement setups field. In some embodiments, for example, Embodiment 5 below, the two fields may be used interchangeably. Certainly, the third field and the fourth field may alternatively have other names. This is not limited in this application. It may be understood that frame formats of the first sensing element and the second sensing element may be the same. In other words, fields included in the first sensing element and fields included in the second sensing element may be the same, but specific values of the fields may be different.

According to a fourteenth aspect, this application provides an information indication method in WLAN sensing. The method includes: A second communication apparatus receives a first sensing element transmitted by a first communication apparatus, where the first sensing element is used by the first communication apparatus to exchange sensing capability information with the second communication apparatus; and the second communication apparatus parses the first sensing element, where the first sensing element includes a first field and a second field. The first field indicates a maximum total number of trigger-based sensing measurement setups that the first communication apparatus can set up with the second communication apparatus. The second field indicates a maximum total number of non-trigger-based sensing measurement setups that the first communication apparatus can set up with the second communication apparatus.

For example, the first field and the second field may be located in a sensing field in a sensing element. The first field may also be referred to as a maximum number of supported trigger-based sensing measurement setups field. In some embodiments, for example, Embodiment 5 below, the two fields may be used interchangeably. Similarly, the second field may also be referred to as a maximum number of supported non-trigger-based sensing measurement setups field. In some embodiments, for example, Embodiment 5 below, the two fields may be used interchangeably. Certainly, the first field and the second field may alternatively have other names. This is not limited in this application. For ease of description in Embodiment 5 below, the maximum number of supported trigger-based sensing measurement setups field represents the first field, and the maximum number of supported non-trigger-based sensing measurement setups field represents the second field.

With reference to the fourteenth aspect, in a possible implementation, the method further includes: The second communication apparatus transmits a second sensing element to the first communication apparatus, where the second sensing element is used by the second communication apparatus to exchange sensing capability information with the first communication apparatus. A third field included in the second sensing element indicates a maximum total number of trigger-based sensing measurement setups that the second communication apparatus can set up with the first communication apparatus, and a fourth field included in the second sensing element indicates a maximum total number of non-trigger-based sensing measurement setups that the second communication apparatus can set up with the first communication apparatus.

For example, the third field may also be referred to as a maximum number of supported trigger-based sensing measurement setups field. In some embodiments, for example, Embodiment 5 below, the two fields may be used interchangeably. Similarly, the fourth field may also be referred to as a maximum number of supported non-trigger-based sensing measurement setups field. In some embodiments, for example, Embodiment 5 below, the two fields may be used interchangeably. Certainly, the third field and the fourth field may alternatively have other names. This is not limited in this application. It may be understood that frame formats of the first sensing element and the second sensing element may be the same. In other words, fields included in the first sensing element and fields included in the second sensing element may be the same, but specific values of the fields may be different.

According to a fifteenth aspect, an embodiment of this application provides a communication apparatus, configured to perform the method according to any one of the thirteenth aspect or the possible implementations of the thirteenth aspect. The communication apparatus includes a unit for performing the method according to any one of the thirteenth aspect or the possible implementations of the thirteenth aspect.

According to a sixteenth aspect, an embodiment of this application provides a communication apparatus, configured to perform the method according to any one of the fourteenth aspect or the possible implementations of the fourteenth aspect. The communication apparatus includes a unit for performing the method according to any one of the fourteenth aspect or the possible implementations of the fourteenth aspect.

In the fifteenth aspect or the sixteenth aspect, the communication apparatus may include a transceiver unit and a processing unit. For specific descriptions of the transceiver unit and the processing unit, refer to apparatus embodiments provided below. For beneficial effect of the fifteenth aspect and the sixteenth aspect described above, refer to the related descriptions in the thirteenth aspect and the fourteenth aspect described above. Details are not provided herein.

According to a seventeenth aspect, this application provides an information indication method in WLAN sensing. The method is applied to a sensing initiator, and the method includes: The sensing initiator transmits a sensing measurement setup request frame and receives a sensing measurement setup response frame, where the sensing measurement setup request frame is used to request to set up a sensing measurement setup with a sensing responder, and the sensing measurement setup response frame is used to accept or reject the request of the sensing initiator. The sensing measurement setup request frame includes first measurement setup indication information, and the first measurement setup indication information indicates whether the sensing initiator can set up another sensing measurement setup. Optionally, the first measurement setup indication information further specifically indicates whether the sensing initiator can serve as a sensing responder to set up another sensing measurement setup.

In this application, in a sensing measurement setup phase, whether a new sensing measurement setup can be set up is indicated by using measurement indication information, so that two exchange parties learn of respective capabilities, to avoid a case in which one party still transmits the sensing measurement setup request frame to the other party to request to set up a new sensing measurement setup when the other party cannot set up the new sensing measurement setup. In this way, sensing measurement setup efficiency is improved, and there is no need to terminate an existing sensing measurement setup to release a resource, that is, there is no need to transmit a sensing measurement setup termination frame, thereby reducing signaling overheads.

According to an eighteenth aspect, this application provides an information indication method in WLAN sensing. The method is applied to a sensing responder, and the method includes: The sensing responder receives a sensing measurement setup request frame, where the sensing measurement setup request frame is used to request to set up a sensing measurement setup with a sensing responder; and the sensing responder receives and transmits a sensing measurement setup response frame, where the sensing measurement setup response frame is used to accept or reject the request of the sensing initiator. The sensing measurement setup request frame includes first measurement setup indication information, and the first measurement setup indication information indicates whether the sensing initiator can set up another sensing measurement setup. Optionally, the first measurement setup indication information further specifically indicates whether the sensing initiator can serve as a sensing responder to set up another sensing measurement setup.

In a possible implementation of the seventeenth aspect or the eighteenth aspect, the sensing measurement setup response frame includes second measurement setup indication information, and the second measurement setup indication information indicates whether the sensing responder can set up another sensing measurement setup. Optionally, the second measurement setup indication information further specifically indicates whether the sensing responder can serve as a sensing responder to set up another sensing measurement setup.

According to a nineteenth aspect, an embodiment of this application provides a communication apparatus, configured to perform the method according to any one of the seventeenth aspect or the possible implementations of the seventeenth aspect. The communication apparatus includes a unit for performing the method according to any one of the seventeenth aspect or the possible implementations of the seventeenth aspect.

According to a twentieth aspect, an embodiment of this application provides a communication apparatus, configured to perform the method according to any one of the eighteenth aspect or the possible implementations of the eighteenth aspect. The communication apparatus includes units for performing the method according to any one of the eighteenth aspect or the possible implementations of the eighteenth aspect.

In the nineteenth aspect or the twentieth aspect, the communication apparatus may include a transceiver unit and a processing unit. For specific descriptions of the transceiver unit and the processing unit, refer to apparatus embodiments provided below. For beneficial effect of the nineteenth aspect and the twentieth aspect, refer to related descriptions of the seventeenth aspect and the eighteenth aspect. Details are not described herein again.

According to a twenty-first aspect, this application provides a communication apparatus. The communication apparatus includes a processor, configured to perform the method according to any one of the first aspect, the fifth aspect, or the possible implementations of the first aspect or the fifth aspect. Alternatively, the processor is configured to execute a program stored in a memory, and when the program is executed, the method according to any one of the first aspect, the fifth aspect, or the possible implementations of the first aspect or the fifth aspect is performed.

In a possible implementation, the memory is located outside the communication apparatus.

In a possible implementation, the memory is located inside the communication apparatus.

In this application, the processor and the memory may alternatively be integrated into one component. In other words, the processor and the memory may alternatively be integrated together.

In a possible implementation, the communication apparatus further includes a transceiver, and the transceiver is configured to receive a frame or transmit a frame. For example, the transceiver may be configured to receive a sensing by proxy response frame or transmit a sensing by proxy request frame.

In this application, the communication apparatus may be an SBP initiator, a chip in an SBP initiator, or the like.

According to a twenty-second aspect, this application provides a communication apparatus. The communication apparatus includes a processor, configured to perform the method according to any one of the second aspect, the sixth aspect, or the possible implementations of the second aspect or the sixth aspect. Alternatively, the processor is configured to execute a program stored in a memory, and when the program is executed, the method according to any one of the second aspect, the sixth aspect, or the possible implementations of the second aspect or the sixth aspect is performed.

In a possible implementation, the memory is located outside the communication apparatus.

In a possible implementation, the memory is located inside the communication apparatus.

In this application, the processor and the memory may alternatively be integrated into one component. In other words, the processor and the memory may alternatively be integrated together.

In a possible implementation, the communication apparatus further includes a transceiver, and the transceiver is configured to receive a frame or transmit a frame. For example, the transceiver may be configured to transmit a sensing by proxy response frame or receive a sensing by proxy request frame.

In this application, the communication apparatus may be an SBP responder, a chip in an SBP responder, or the like.

According to a twenty-third aspect, this application provides a communication apparatus. The communication apparatus includes a processor, configured to perform the method according to any one of the ninth aspect, the thirteenth aspect, or the possible implementations of the ninth aspect or the thirteenth aspect. Alternatively, the processor is configured to execute a program stored in a memory, and when the program is executed, the method according to any one of the ninth aspect, the thirteenth aspect, or the possible implementations of the ninth aspect or the thirteenth aspect is performed.

In a possible implementation, the memory is located outside the communication apparatus.

In a possible implementation, the memory is located inside the communication apparatus.

In this application, the processor and the memory may alternatively be integrated into one component. In other words, the processor and the memory may alternatively be integrated together.

In a possible implementation, the communication apparatus further includes a transceiver, and the transceiver is configured to receive a frame or transmit a frame. For example, the transceiver may be configured to transmit a first sensing element. For example, the transceiver may be further configured to receive a second sensing element.

In this application, the communication apparatus may be a first communication apparatus, a chip in a first communication apparatus, or the like.

According to a twenty-fourth aspect, this application provides a communication apparatus. The communication apparatus includes a processor, configured to perform the method according to any one of the tenth aspect, the fourteenth aspect, or the possible implementations of the tenth aspect or the fourteenth aspect. Alternatively, the processor is configured to execute a program stored in a memory, and when the program is executed, the method according to any one of the tenth aspect, the fourteenth aspect, or the possible implementations of the tenth aspect or the fourteenth aspect is performed.

In a possible implementation, the memory is located outside the communication apparatus.

In a possible implementation, the memory is located inside the communication apparatus.

In this application, the processor and the memory may alternatively be integrated into one component. In other words, the processor and the memory may alternatively be integrated together.

In a possible implementation, the communication apparatus further includes a transceiver, and the transceiver is configured to receive a frame or transmit a frame. For example, the transceiver may be configured to receive a first sensing element. For example, the transceiver may be further configured to transmit a second sensing element.

In this application, the communication apparatus may be a second communication apparatus, a chip in a second communication apparatus, or the like.

According to a twenty-fifth aspect, this application provides a communication apparatus. The communication apparatus includes a processor, configured to perform the method according to any one of the seventeenth aspect or the possible implementations of the seventeenth aspect. Alternatively, the processor is configured to execute a program stored in a memory, and when the program is executed, the method according to any one of the seventeenth aspect or the possible implementations of the seventeenth aspect is performed.

In a possible implementation, the memory is located outside the communication apparatus.

In a possible implementation, the memory is located inside the communication apparatus.

In this application, the processor and the memory may alternatively be integrated into one component. In other words, the processor and the memory may alternatively be integrated together.

In a possible implementation, the communication apparatus further includes a transceiver, and the transceiver is configured to receive a frame or transmit a frame. For example, the transceiver may be configured to receive a sensing measurement setup response frame or transmit a sensing measurement setup request frame.

In this application, the communication apparatus may be a sensing initiator, a chip in a sensing initiator, or the like.

According to a twenty-sixth aspect, this application provides a communication apparatus. The communication apparatus includes a processor, configured to perform the method according to any one of the eighteenth aspect or the possible implementations of the eighteenth aspect. Alternatively, the processor is configured to execute a program stored in a memory, and when the program is executed, the method according to any one of the eighteenth aspect or the possible implementations of the eighteenth aspect is performed.

In a possible implementation, the memory is located outside the communication apparatus.

In a possible implementation, the memory is located inside the communication apparatus.

In this application, the processor and the memory may alternatively be integrated into one component. In other words, the processor and the memory may alternatively be integrated together.

In a possible implementation, the communication apparatus further includes a transceiver, and the transceiver is configured to receive a frame or transmit a frame. For example, the transceiver may be configured to transmit a sensing measurement setup response frame or receive a sensing measurement setup request frame.

In this application, the communication apparatus may be a sensing responder, a chip in a sensing responder, or the like.

According to a twenty-seventh aspect, this application provides a communication apparatus. The communication apparatus includes a logic circuit and an interface, and the logic circuit is coupled to the interface. The logic circuit and the interface are configured to perform the method according to any one of the first aspect, the second aspect, the fifth aspect, the sixth aspect, the ninth aspect, the tenth aspect, the thirteenth aspect, the fourteenth aspect, the seventeenth aspect, the eighteenth aspect, or the possible implementations of any one of the foregoing aspects.

According to a twenty-eighth aspect, this application provides a computer-readable storage medium. The computer-readable storage medium is configured to store a computer program, and when the computer program is run on a computer, the method according to any one of the first aspect, the second aspect, the fifth aspect, the sixth aspect, the ninth aspect, the tenth aspect, the thirteenth aspect, the fourteenth aspect, the seventeenth aspect, the eighteenth aspect, or the possible implementations of any one of the foregoing aspects is performed.

According to a twenty-ninth aspect, an embodiment of this application provides a computer program product. The computer program product includes a computer program or computer code, and when the computer program or the computer code is run on a computer, the method according to any one of the first aspect, the second aspect, the fifth aspect, the sixth aspect, the ninth aspect, the tenth aspect, the thirteenth aspect, the fourteenth aspect, the seventeenth aspect, the eighteenth aspect, or the possible implementations of any one of the foregoing aspects is performed.

According to a thirtieth aspect, this application provides a computer program. When the computer program is run on a computer, the method according to any one of the first aspect, the second aspect, the fifth aspect, the sixth aspect, the ninth aspect, the tenth aspect, the thirteenth aspect, the fourteenth aspect, the seventeenth aspect, the eighteenth aspect, or the possible implementations of any one of the foregoing aspects is performed.

According to a thirty-first aspect, this application provides a wireless communication system. The wireless communication system includes a sensing by proxy initiator and a sensing by proxy responder. The sensing by proxy initiator is configured to perform the method according to any one of the first aspect, the fifth aspect, or the possible implementations of the first aspect or the fifth aspect, and the sensing by proxy responder is configured to perform the method according to any one of the second aspect, the sixth aspect, or the possible implementations of the second aspect or the sixth aspect.

According to a thirty-second aspect, this application provides a wireless communication system. The wireless communication system includes a first communication apparatus and a second communication apparatus. The first communication apparatus is configured to perform the method according to any one of the ninth aspect, the thirteenth aspect, or the possible implementations of the ninth aspect or the thirteenth aspect, and the second communication apparatus is configured to perform the method according to any one of the tenth aspect, the fourteenth aspect, or the possible implementations of the tenth aspect or the fourteenth aspect.

According to a thirty-third aspect, this application provides a wireless communication system. The wireless communication system includes a sensing initiator and a sensing responder. The sensing initiator is configured to perform the method according to any one of the seventeenth aspect or the possible implementations of the seventeenth aspect, and the sensing responder is configured to perform the method according to any one of the eighteenth aspect or the possible implementations of the eighteenth aspect.

For technical effect achieved in the foregoing aspects, refer to each other or refer to beneficial effect in the following method embodiments. Details are not described herein.

**BRIEF DESCRIPTION OF DRAWINGS**

FIG. 1 is a diagram of a trigger-based sensing measurement instance according to an embodiment of this application;

FIG. 2 is a diagram of an SBP procedure according to an embodiment of this application;

FIG. 3 is a diagram of a frame format of a sensing element according to an embodiment of this application;

FIG. 4a is a diagram of a structure of an access point according to an embodiment of this application;

FIG. 4b is a diagram of a structure of a station according to an embodiment of this application;

FIG. 5 is a first schematic flowchart of an information indication method in WLAN sensing according to an embodiment of this application;

FIG. 6a is a diagram of a frame format of an SBP request frame according to an embodiment of this application;

FIG. 6b is a diagram of a frame format of an SBP response frame according to an embodiment of this application;

FIG. 7a is a diagram of a first frame format of an SBP parameters element according to an embodiment of this application;

FIG. 7b is a diagram of a second frame format of an SBP parameters element according to an embodiment of this application;

FIG. 8 is a diagram of a first frame format of an SBP parameters control field according to an embodiment of this application;

FIG. 9a is a diagram of a third frame format of an SBP parameters element according to an embodiment of this application;

FIG. 9b is a diagram of a fourth frame format of an SBP parameters element according to an embodiment of this application;

FIG. 10 is a diagram of a second frame format of an SBP parameters control field according to an embodiment of this application;

FIG. 11 is a first schematic flowchart of an information indication method in WLAN sensing according to an embodiment of this application;

FIG. 12 is a diagram of a fifth frame format of an SBP parameters element according to an embodiment of this application;

FIG. 13 is a diagram of a sixth frame format of an SBP parameters element according to an embodiment of this application;

FIG. 14 is a diagram of a third frame format of an SBP parameters control field according to an embodiment of this application;

FIG. 15 is a diagram of a seventh frame format of an SBP parameters element according to an embodiment of this application;

FIG. 16 is a third schematic flowchart of an information indication method in WLAN sensing according to an embodiment of this application;

FIG. 17 is a diagram of an eighth frame format of an SBP parameters element according to an embodiment of this application;

FIG. 18 is a diagram of a fourth frame format of an SBP parameters control field according to an embodiment of this application;

FIG. 19 is a diagram of a ninth frame format of an SBP parameters element according to an embodiment of this application;

FIG. 20 is a fourth schematic flowchart of an information indication method in WLAN sensing according to an embodiment of this application;

FIG. 21 is a diagram of a frame format of a sensing field in a sensing element according to an embodiment of this application;

FIG. 22 is a fifth schematic flowchart of an information indication method in WLAN sensing according to an embodiment of this application;

FIG. 23 is a diagram of another frame format of a sensing field in a sensing element according to an embodiment of this application;

FIG. 24 is a sixth schematic flowchart of an information indication method in WLAN sensing according to an embodiment of this application;

FIG. 25 is a diagram of a frame format of a sensing measurement setup request frame according to an embodiment of this application;

FIG. 26a is a diagram of a frame format of a measurement setup control field according to an embodiment of this application;

FIG. 26b is a diagram of another frame format of a measurement setup control field according to an embodiment of this application;

FIG. 27 is a diagram of a frame format of a sensing measurement setup response frame according to an embodiment of this application;

FIG. 28 is a diagram of still another frame format of a sensing field in a sensing element according to an embodiment of this application;

FIG. 29 is a diagram of a structure of a communication apparatus according to an embodiment of this application;

FIG. 30 is a diagram of another structure of a communication apparatus according to an embodiment of this application; and

FIG. 31 is a diagram of still another structure of a communication apparatus according to an embodiment of this application.

## DESCRIPTION OF EMBODIMENTS

The following clearly and completely describes technical solutions in embodiments of this application with reference to accompanying drawings in embodiments of this application.

In descriptions of this application, "first", "second", and the like are merely used to distinguish between different objects but do not indicate a particular order. In addition, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. "At least one of the following items (pieces)" or a similar expression thereof indicates any combination of these items, and includes a single item (piece) or any combination of a plurality of items (pieces). For example, at least one item (piece) of a, b, or c may represent a, b, c, a and b, a and c, b and c, or a, b, and c, where a, b, and c each may be singular or plural.

In addition, the terms "include", "have", and any variants thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

In this application, the term "example", "for example", or the like represents giving an example, an illustration, or a description. Any embodiment or design scheme described as "example", "such as" or "for example" in this application should not be explained as being more preferred or having more advantages than another embodiment or design scheme. Exactly, use of the word "example", "such as", "for example", or the like is intended to present a related concept in a specific manner.

It should be understood that, in this application, "when", "if", and "provided that" all mean that an apparatus performs corresponding processing in an objective situation, and are not intended to limit time, and the terms do not mean that the apparatus is required to perform a determining action during implementation, and do not mean any other limitation.

In this application, an element represented in a singular form is intended to represent "one or more", but does not represent "one and only one", unless otherwise specified.

It may be understood that in embodiments of this application, "B corresponding to A" indicates that there is a correspondence between A and B, and B may be determined based on A. Determining B based on A does not mean that B is determined based only on A, and B may alternatively be determined based on A and/or other information.

The following briefly describes some related content, terms, or nouns in this application.

1. WLAN sensing technology

The WLAN sensing (WLAN sensing) technology is a sensing technology based on a radar technology. Certainly, the WLAN sensing technology may alternatively be a sensing technology based on any wireless carrier communication, and is not limited to the sensing technology based on the radar technology. Sensing based on the radar technology is used as an example. A radar includes a transmit antenna and a receive antenna. The transmit antenna transmits an electromagnetic wave, the electromagnetic wave is reflected when encountering a target (target), and a reflected wave is received by the receive antenna. A radar system analyzes feature information of the target, such as a location, a shape, a motion feature, and a motion track, through signal processing based on changes of a transmitted wave and a received wave. Radar sensing has many unique advantages. For example, the radar is not affected by lighting conditions, and has a capability of penetrating obstacles, so that personal privacy can be better protected. In addition, the radar has a farther sensing range, and does not cause harm to people or animals. An advantage of implementing sensing by using the radar technology is mainly reflected in detection of a moving object, and a motion status of the target, such as a motion direction and a motion speed, is observed and interpreted through Doppler effect of an echo of the target.

Introducing the sensing technology into a WLAN has a good business prospect. The WLAN sensing technology may be applied to different scenarios.

For example, in sports, this technology may be used to detect motion statuses and motion tracks of a person and a ball; and in a home environment, this technology may be used to perform human body fall detection to prevent an elderly person from falling down. Channel state information (channel state information, CSI) is processed to interpret a motion status and a track of a person. The WLAN sensing technology can fully utilize existing WLAN resources without requiring massive costs. In a future densely deployed WLAN, there are a plurality of STAs in a coverage area of one AP, and the AP may perform proper resource scheduling for these STAs to improve a throughput and robustness of a system.

2. Roles in WLAN sensing

A sensing initiator (sensing initiator) is a station that initiates a sensing procedure by transmitting a WLAN sensing measurement setup request frame (sensing initiator: A station (STA) that initiates a WLAN sensing procedure by transmitting the WLAN sensing measurement setup request frame).

A sensing responder (sensing responder) is a station that participates in the WLAN sensing procedure by responding to the sensing initiator (sensing responder: A station (STA) that participates in a WLAN sensing procedure by responding to a sensing initiator).

A sensing transmitter (sensing transmitter) is a station that transmits PPDUs used for sensing measurement in the sensing procedure (sensing transmitter: A station (STA) that transmits PPDUs used for measurements in a WLAN sensing procedure).

A sensing receiver (sensing receiver) is a station that receives physical layer (physical layer, PHY) protocol data units (PHY protocol data unit, PPDU) transmitted by the sensing transmitter and obtains a measurement result in the WLAN sensing procedure (sensing receiver: A station (STA) that receives PPDUs sent by a sensing transmitter and obtains measurements in a WLAN sensing procedure).

A sensing by proxy initiator (SBP initiator) is a station that transmits an SBP request frame (sensing by proxy (SBP) initiator: A non-AP STA that transmits an SBP request frame).

A sensing by proxy responder (SBP responder) is an AP that is an intended recipient of the SBP request frame (sensing by proxy (SBP) responder: An AP that is the intended recipient of an SBP request frame).

3. Common sensing (non-sensing by proxy)

The 802.11bf protocol specifies sensing protocols for a sub-7 GHz frequency band and a 60 GHz frequency band. According to the 802.11bf protocol, a general sensing procedure may include the following five phases:

(1) In a sensing session setup (sensing session setup) phase, a sensing session is set up between stations, and a sensing initiator and a sensing responder exchange sensing capability information in this phase. It may be understood that the sensing session is a protocol reached between two stations, that is, the sensing initiator and the sensing responder. One sensing initiator may maintain sensing sessions with a plurality of sensing responders, but the plurality of sensing sessions still need to be set up one by one.

(2) In a sensing measurement setup (sensing measurement setup) phase, the sensing initiator and the sensing responder negotiate and unify measurement parameters used in the sensing procedure, for example, a role of the sensing responder or parameters such as a measurement feedback type. The role herein means that the sensing responder serves as a sensing transmitter (sensing transmitter, sensing TX) or a sensing receiver (sensing receiver, sensing RX) to participate in a sensing measurement procedure.

(3) In a sensing measurement instance (sensing measurement instance) phase, sensing measurement occurs in a sensing measurement instance, and one sensing measurement instance allows participation of a plurality of sensing responders.

(4) In a sensing measurement setup termination (sensing measurement setup termination) phase, a sensing measurement setup corresponding to a sensing responder is terminated (that is, sensing measurement is no longer performed based on the group of measurement parameters), and the sensing responder is no longer bound to the corresponding sensing measurement setup, but the sensing responder may still be in the sensing session.

(5) In a sensing session termination (sensing session termination) phase, a sensing session is terminated, and sensing measurement is not performed.

In the sub-7 GHz frequency band, sensing measurement may be classified into two types: sensing measurement between one AP and one or more non-AP STAs, and sensing measurement between a plurality of non-AP STAs.

It may be understood that the non-AP STA may be referred to as a STA for short, and the non-AP STA and the STA may be used interchangeably in this specification.

There are two types of sensing measurement between one AP and one or more non-AP STAs: trigger-based (trigger-based, TB) sensing measurement and non-trigger-based (non-trigger-based, non-TB) sensing measurement. In TB-type sensing measurement, the AP serves as a sensing initiator to initiate a sensing measurement procedure, and the one or more non-AP STAs serve as sensing responders to participate in the sensing measurement procedure. In non-TB-type sensing measurement, the non-AP STA serves as a sensing initiator to initiate a sensing measurement procedure, and an AP serves as a sensing responder to participate in the sensing measurement procedure. Some embodiments of this application mainly focus on trigger-based sensing measurement. For details, refer to descriptions in the following embodiments.

Trigger-based sensing measurement between one AP and one or more non-AP STAs includes trigger frame (trigger frame, TF) sounding (TF sounding) and null data packet announcement (null data packet announcement, NDPA) sounding (NDPA sounding). In TF sounding, the one or more non-AP STAs serve as sensing transmitters to transmit null data packets (null data packet, NDP) to the AP, and the AP serves as a sensing receiver to receive the NDPs for sensing measurement. In NDPA sounding, the AP serves as a sensing transmitter to transmit an NDP to the one or more non-AP STAs, and these non-AP STAs serve as sensing receivers to receive the NDP for sensing measurement.

Sensing measurement between a plurality of non-AP STAs is TB-type sensing measurement, and sensing measurement between the plurality of non-AP STAs occurs between a plurality of sensing responders, and is referred to as sensing responder-to-sensing responder (sensing responder-to-sensing responder, SR2SR) sounding (SR2SR sounding) in a protocol. In SR2SR sounding, one non-AP STA (sensing responder) serves as a sensing transmitter to transmit an NDP to one or more other non-AP STAs (sensing responders), and the one or more non-AP STAs serve as sensing receivers to receive the NDP for sensing measurement.

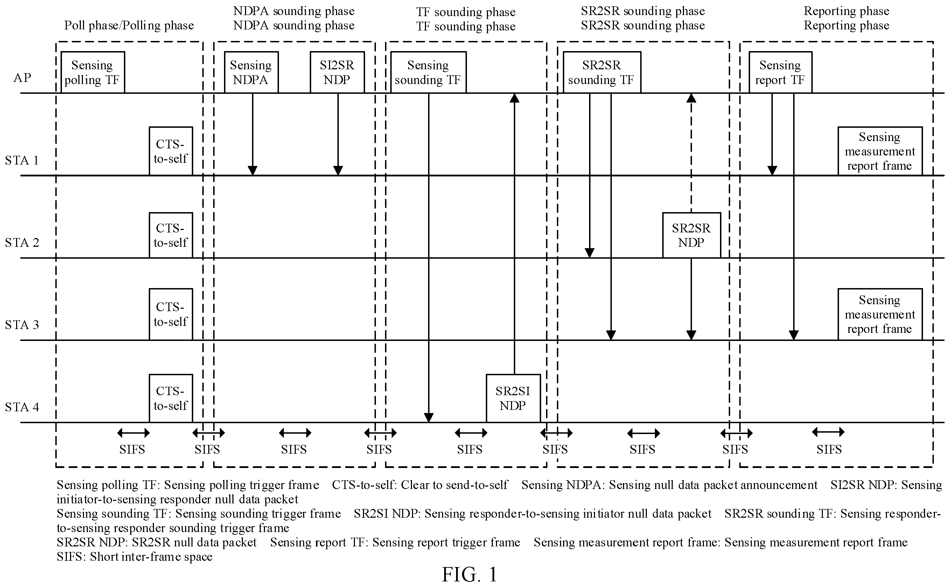

FIG. 1 is a diagram of a trigger-based sensing measurement instance according to an embodiment of this application. As shown in FIG. 1, the trigger-based sensing measurement instance includes but is not limited to one or more of the following phases: a polling phase (polling phase), one or more sounding phases (for example, one or more of an NDPA sounding phase, a TF sounding phase, and an SR2SR sounding phase), and a reporting phase (reporting phase). In the polling phase, an AP transmits a sensing polling (sensing polling) trigger frame (trigger frame, TF) to a STA 1, a STA 2, a STA 3, and a STA 4. If the STA 1, the STA 2, the STA 3, and the STA 4 are allowed to perform transmission, the STA 1, the STA 2, the STA 3, and the STA 4 replies with CTS (clear to send)-to-self (clear to send-to-self) frames after one short inter-frame space (short inter-frame space, SIFS). In the NDPA sounding phase, the AP transmits a sensing NDPA (sensing NDPA) frame to the STA 1; after one SIFS, the AP transmits an NDP to the STA 1, where the NDP is transmitted from a sensing initiator to a sensing responder (SI2SR), and therefore is represented by an SI2SR NDP in FIG. 1; and the STA 1 receives the NDP for sensing measurement. In the TF sounding phase, the AP transmits a sensing sounding trigger frame (sensing sounding TF) to the STA 4; after one SIFS, the STA 4 transmits an NDP to the AP, where the NDP is transmitted from a sensing responder to a sensing initiator (SR2SI), and therefore is represented by an SR2SI NDP in FIG. 1; and the AP receives the NDP for sensing measurement. In the SR2SR sounding phase, the AP transmits an SR2SR sounding trigger frame (SR2SR sounding TF) to the STA 2 and the STA 3; after one SIFS, the STA 2 transmits an NDP to the STA 3, where the NDP is transmitted from a sensing responder to a sensing responder (SR2SR), and therefore is represented by an SR2SR NDP in FIG. 1; and the STA 3 receives the NDP for sensing measurement. In the reporting phase, if the AP transmits a sensing report trigger frame (sensing report TF) to the STA 1 and the STA 3, after one SIFS, the STA 1 and the STA 3 separately return a corresponding sensing measurement report frame (sensing measurement report frame) to the AP.

4. Sensing by proxy

The 802.11bf protocol further specifies a special sensing scenario: sensing by proxy (sensing by proxy, SBP). SBP means that a non-AP STA may request an AP to serve as a proxy (proxy) of the non-AP STA to perform WLAN sensing, and enable the AP to feed back a sensing measurement result to the non-AP STA. The non-AP STA that initiates a sensing by proxy procedure is referred to as an SBP initiator (SBP initiator), and the AP that participates in the sensing by proxy procedure as a proxy (proxy) is referred to as an SBP responder (SBP responder). In addition, the AP is also a sensing initiator (sensing initiator) in a sensing procedure. The sensing by proxy procedure may include but is not limited to one or more of the following phases:

(1) In an SBP setup (SBP setup) phase, the SBP initiator (usually a non-AP STA) requests to set up SBP with the SBP responder (usually an AP), and the SBP responder receives or rejects the SBP setup request.
(2) A WLAN sensing (WLAN sensing) phase includes a sensing measurement setup and a trigger-based (TB) sensing measurement instance. In the sensing measurement setup, the SBP responder (which is also a sensing initiator, namely, an AP) and one or more sensing responders (namely, other non-AP STAs) negotiate and set a measurement parameter of WLAN sensing. In the trigger-based sensing measurement instance, TB-type sensing measurement occurs. TB-type sensing measurement includes TF sounding, NDPA sounding, and SR2SR sounding. Therefore, in the SBP procedure, one sensing measurement instance may implement three types of sensing measurement: TF sounding, NDPA sounding, and SR2SR sounding.
(3) In an SBP reporting (SBP reporting) phase, the SBP responder reports a sensing measurement result to the SBP initiator.
(4) In an SBP termination (SBP termination) phase, the SBP procedure is terminated. The termination phase may be initiated by either the SBP initiator or the SBP responder.

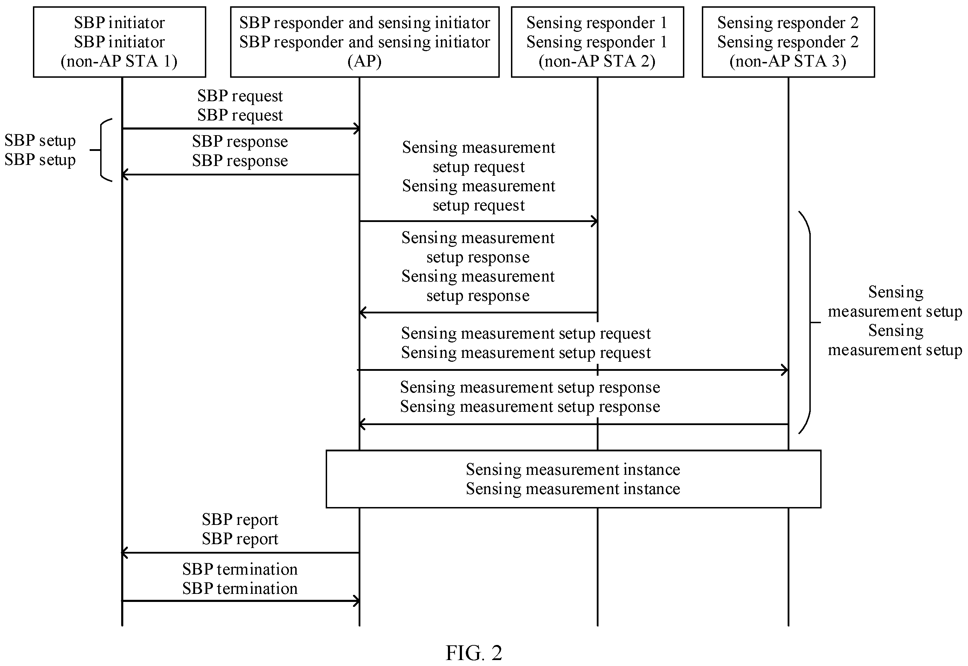

FIG. 2 is a diagram of an SBP procedure according to an embodiment of this application. As shown in FIG. 2, in an SBP setup phase, an SBP initiator (non-AP STA 1) transmits an SBP request (SBP request) frame to an SBP responder (AP), to request the SBP responder (AP) to serve as a proxy of the SBP initiator (non-AP STA 1) to initiate a sensing measurement procedure; and the SBP responder (AP) replies with an SBP response (SBP response) frame to accept or reject the request from the SBP initiator. In a sensing measurement setup phase, a sensing initiator (AP) separately transmits a sensing measurement setup request (sensing measurement setup request) frame to a sensing responder 1 (non-AP STA 2) and a sensing responder 2 (non-AP STA 3), and the sensing responder 1 (non-AP STA 2) and the sensing responder 2 (non-AP STA 3) separately reply with a sensing measurement setup response (sensing measurement setup response) frame. In a sensing measurement instance, TB-type sensing measurement occurs. After sensing measurement is completed, the SBP responder (AP) feeds back an SBP report (SBP report) to the SBP initiator (non-AP STA 1). After receiving the SBP report, the SBP initiator (non-AP STA 1) may transmit an SBP termination frame to terminate the SBP procedure.

It may be understood that, for specific frame formats and meanings of various frames in FIG. 2, refer to an existing standard protocol, for example, the existing 802.11bf protocol. Details are not described herein due to space limitations.

5. Sensing session setup and sensing measurement setup

In a common sensing (non-sensing by proxy) procedure, a sensing initiator and a sensing responder may exchange sensing capability information in a sensing session setup phase, and negotiate and unify measurement parameters in the sensing measurement setup phase. In an existing standard protocol, one sensing initiator may set up a maximum of 8 sensing measurement setups (measurement setup, MS) with one sensing responder, and one sensing measurement setup may be understood as a group of measurement parameters. Each sensing measurement setup may be uniquely identified by using a medium access control (medium access control, MAC) address and a measurement setup identifier (MS identifier, MSID) of the sensing initiator, and the MSID is usually represented by 3 bits (bit). Because the sensing initiator and the sensing responder may need a memory and a processing module to store and process the sensing capability information, a measurement report, and the like to maintain one MS, a total number of MSs that can be maintained by one sensing initiator or one sensing responder is limited. In an existing standard, the sensing initiator and the sensing responder exchange "a maximum number of MSs that the sensing initiator or the sensing responder can maintain with a peer end" as the sensing capability information in the sensing session setup phase, and 4 bits usually indicate the maximum number of MSs that can be maintained. The 4 bits may indicate 0 to 8 MSs.

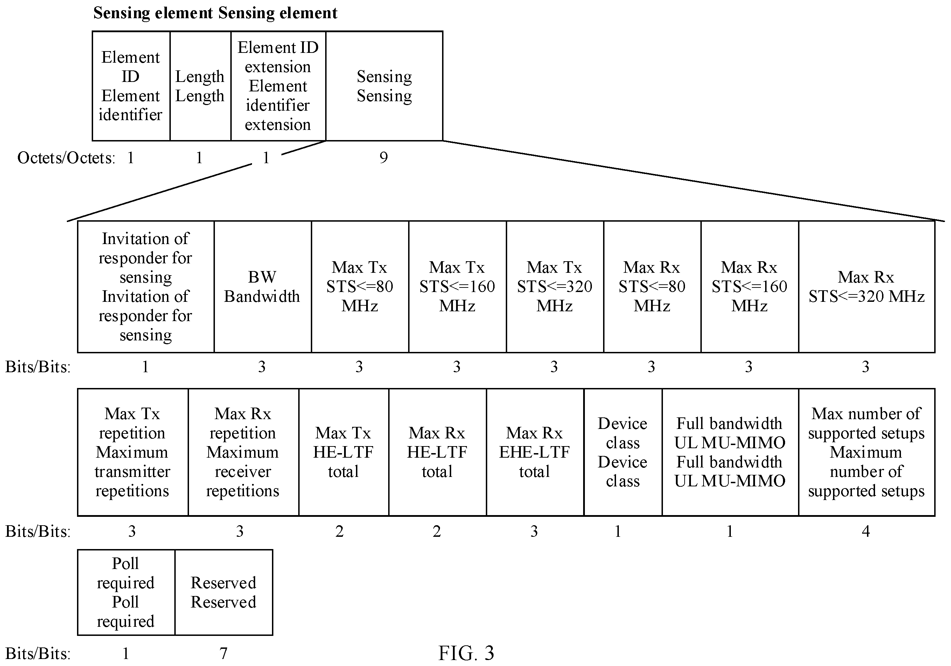

In the existing standard, respective sensing capability information of the sensing initiator and the sensing responder may be exchanged using a sensing element (sensing element). FIG. 3 is a diagram of a frame format of a sensing element according to an embodiment of this application. As shown in FIG. 3, the sensing element may include but is not limited to one or more of the following: an element identifier (element ID) field, a length (length) field, an element identifier extension (element ID extension) field, and a sensing (sensing) field. The sensing (sensing) field includes at least a maximum number of supported (sensing measurement) setups (max number of supported setups) field, and a length of the max number of supported setups field is 4 bits. The max number of supported setups field may indicate a maximum total number of (sensing) measurement setups (MSs) that a transmitting device of the sensing element can set up with a receiving device of the sensing element, or indicate a maximum number of MSs that a transmitting device of the sensing element can maintain with a receiving device of the sensing element. It may be understood that, for names and meanings of other fields in the sensing field shown in FIG. 3, refer to an existing standard, for example, the 802.11bf standard. Details are not described herein due to space limitations.

The following briefly describes an access point (AP) and a non-access point station (non-AP STA) in this application.

In this specification, the non-access point station (non-AP STA) may also be referred to as a station (station, STA) for short, and the two may be used interchangeably.

The access point (for example, the AP in FIG. 1 or the AP in FIG. 2) is an apparatus having a wireless communication function, supports communication by using a WLAN protocol, and has a function of communicating with another device (for example, a station or another access point) in a WLAN network. Certainly, the access point may further have a function of communicating with another device. In a WLAN system, an access point may be referred to as an access point station (access point station, AP STA). The apparatus having the wireless communication function may be an entire device, or may be a chip or processing system installed in an entire device. A device in which the chip or the processing system is installed may implement the methods and the functions in embodiments of this application under control of the chip or the processing system. The AP in embodiments of this application is an apparatus that provides a service for the STA, and may support 802.11 series protocols. For example, the AP may be a communication entity, for example, a communication server, a router, a switch, or a bridge. The AP may include a macro base station, a micro base station, a relay station, and the like in various forms. Certainly, the AP may alternatively be a chip or a processing system in these devices in various forms, to implement the methods and the functions in embodiments of this application.

The station (for example, any STA in FIG. 1 or any non-AP STA in FIG. 2) is an apparatus having the wireless communication function, supports communication by using a WLAN protocol, and has a capability of communicating with another station or access point in the WLAN network. In the WLAN system, a station may be referred to as a non-access point station (non-access point station, non-AP STA). For example, the STA is any user communication device that allows a user to communicate with an AP and further communicate with the WLAN. The apparatus having the wireless communication function may be an entire device, or may be a chip or processing system installed in an entire device. A device in which the chip or the processing system is installed may implement the methods and the functions in embodiments of this application under control of the chip or the processing system. For example, the STA may be user equipment that can connect to the internet, for example, a tablet computer, a desktop computer, a laptop computer, a notebook computer, an ultra-mobile personal computer (Ultra-mobile personal computer, UMPC), a handheld computer, a netbook, a personal digital assistant (personal digital assistant, PDA), or a mobile phone. Alternatively, the STA may be an internet of things node in an internet of things, a vehicle-mounted communication apparatus in an internet of vehicles, an entertainment device, a game device or system, a global positioning system device, or the like. The STA may alternatively be a chip and a processing system in the foregoing terminals.

The WLAN system can provide high-speed and low-latency transmission. With continuous evolution of WLAN application scenarios, the WLAN system is to be applicable to more scenarios or industries, for example, the internet of things industry, the internet of vehicles industry, the banking industry, enterprise offices, exhibition halls of stadiums, concert halls, hotel rooms, dormitories, wards, classrooms, supermarkets, squares, streets, production workshops, and warehouses. Certainly, a device (for example, an access point or a station) that supports WLAN communication may be a sensor node (for example, a smart water meter, a smart electricity meter, or a smart air detection node) in a smart city, a smart device in a smart home (for example, a smart camera, a projector, a display, a television, a stereo, a refrigerator, or a washing machine), a node in an internet of things, an entertainment terminal (for example, augmented reality (augmented reality, AR), virtual reality (virtual reality, VR), or another wearable device), a smart device in smart office (for example, a printer, a projector, a loudspeaker, or a stereo), an internet of vehicle device in an internet of vehicles, infrastructure in daily life scenarios (for example, a vending machine, a self-service navigation station in a supermarket, a self-service cash register device, or a self-service ordering machine), a device in a large sports and music venue, or the like. Specific forms of the station and the access point are not limited in embodiments of this application, and are merely examples for description herein.

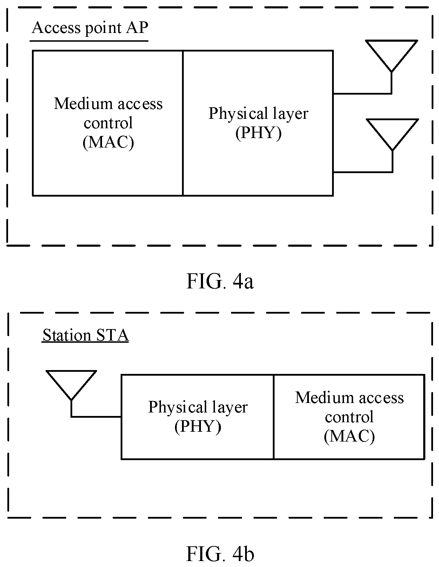

It should be understood that the 802.11 standard focuses on a physical layer (physical layer, PHY) and a medium access control (medium access control, MAC) layer. In an example, FIG. 4a is a diagram of a structure of an access point according to an embodiment of this application. The AP may be a multi-antenna/multi-radio frequency AP, or may be a single-antenna/single-radio frequency AP. The antenna/radio frequency is used to transmit/receive a data packet (the data packet in this specification may also be referred to as a physical layer protocol data unit (PHY protocol data unit, PPDU)). In an implementation, an antenna or a radio frequency part of the AP may be separated from a main body of the AP, that is, may be remotely disposed. In FIG. 4a, the AP may include a physical layer processing circuit and a medium access control processing circuit. The physical layer processing circuit may be configured to process a physical layer signal, and the MAC layer processing circuit may be configured to process a MAC layer signal. In another example, FIG. 4b is a diagram of a structure of a station according to an embodiment of this application. FIG. 4b shows a diagram of a structure of a single-antenna/single-radio frequency STA. In an actual scenario, a STA may alternatively be a multi-antenna/multi-radio frequency STA, and may be a device with more than two antennas. The antenna/radio frequency is configured to transmit/receive a data packet. In an implementation, an antenna or a radio frequency part of the STA may be separated from a main body of the STA, that is, may be remotely disposed. In FIG. 4b, the STA may include a PHY processing circuit and a MAC processing circuit. The physical layer processing circuit may be configured to process a physical layer signal, and the MAC layer processing circuit may be configured to process a MAC layer signal.

The following describes in detail the technical solutions provided in this application with reference to more accompanying drawings.

In this application, unless otherwise specified, for same or similar parts of embodiments or implementations, refer to each other. In embodiments of this application and implementations/methods/implementation methods in embodiments, unless otherwise specified or there is a logical conflict, terms and/or descriptions are consistent and may be mutually referenced between different embodiments and between the implementations/methods/implementation methods in embodiments. Technical features in different embodiments and the implementations/methods/implementation methods in embodiments may be combined to form a new embodiment, implementation, method, or implementation method based on an internal logical relationship of the technical features. The following implementations of this application are not intended to limit the protection scope of this application.

It can be learned from the foregoing TB-type non-sensing by proxy procedure (that is, common sensing in the foregoing third point) that a sensing initiator (sensing initiator) may negotiate and unify measurement parameters used in a sensing procedure with a sensing responder (sensing responder). For example, as a device that initiates the sensing procedure (namely, a sensing initiator), an AP may determine, in a sensing measurement setup (sensing measurement setup) phase, which sensing responders participate in TF sounding, NDPA sounding, or SR2SR sounding. In addition, the AP may determine a role of each sensing responder in TF sounding, NDPA sounding, or SR2SR sounding. To be specific, each sensing responder serves as a sensing transmitter (referred to as TX for short below), a sensing receiver (referred to as RX for short below), or both a sensing transmitter (TX) and a sensing receiver (RX) in TF sounding, NDPA sounding, or SR2SR sounding. These measurement parameters are very important for sensing effect and for parsing a sensing measurement result.

However, in an SBP procedure, an SBP initiator (SBP initiator) does not have a capability of setting measurement parameters related to sensing responders (sensing responder) (for example, which sensing responders participate in TF sounding, NDPA sounding, or SR2SR sounding, and a role of each sensing responder).

In a possible implementation, the SBP initiator may transfer, to the SBP responders in an SBP setup phase through a sensing measurement setup parameters element (sensing measurement parameters element), common measurement parameters used for sensing. In other words, these common measurement parameters are applied to all sensing responders, and the SBP initiator cannot set different measurement parameters for different sensing responders, for example, a role of each sensing responder and sensing measurement that is of a specific TB-type and in which each sensing responder participates (TB-type sensing measurement includes TF sounding, NDPA sounding, and SR2SR sounding). However, the role of the sensing responder and sensing measurement that is of the specific TB-type and in which the sensing responder participates are very important for sensing effect and for parsing a sensing measurement result by the SBP initiator.

In view of this, embodiments of this application provide an information indication method in WLAN sensing. The method may be applied to the sensing by proxy procedure shown in FIG. 2. In the method, an SBP initiator is provided with a function of setting a measurement parameter related to a sensing responder in an SBP setup phase, to help the SBP initiator control and manage an SBP sensing procedure and parse an SBP report, thereby improving sensing performance.

Optionally, a sensing by proxy initiator in embodiments of this application may be the non-AP STA 1 shown in FIG. 2, and a sensing by proxy responder in embodiments of this application may be the AP shown in FIG. 2. A sensing responder in embodiments of this application includes but is not limited to the non-AP STA 2 and the non-AP STA 3 shown in FIG. 2. The sensing by proxy initiator, the sensing by proxy responder, and the sensing responder in embodiments of this application may all support a WLAN sensing protocol, for example, 802.11bf or a next-generation protocol of 802.11bf.

Embodiment 1

Embodiment 1 of this application mainly describes how to indicate, in an SBP setup phase, a sensing responder to participate in sensing measurement of a specific TB-type.

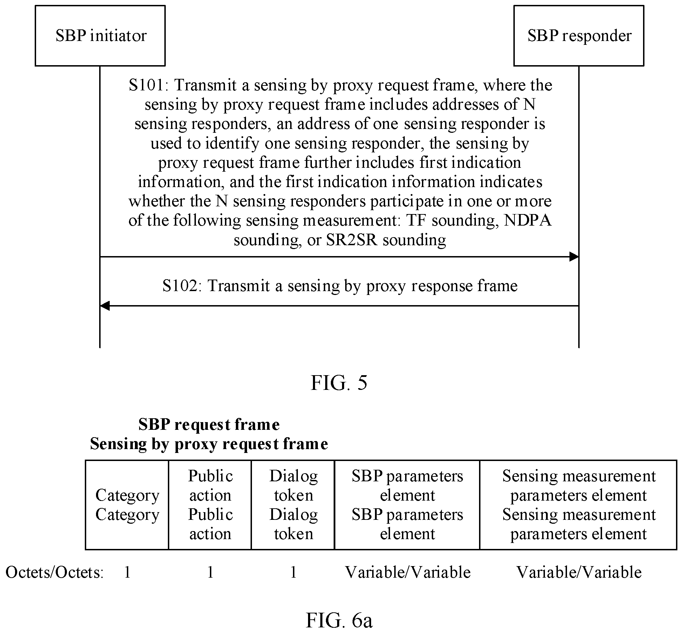

FIG. 5 is a first schematic flowchart of an information indication method in WLAN sensing according to an embodiment of this application. As shown in FIG. 5, the information indication method in WLAN sensing includes but is not limited to the following steps:

S101: An SBP initiator transmits a sensing by proxy request frame, where the sensing by proxy request frame includes addresses of N sensing responders, an address of one sensing responder is used to identify one sensing responder, the sensing by proxy request frame further includes first indication information, and the first indication information indicates whether the N sensing responders participate in one or more of the following sensing measurement: TF sounding, NDPA sounding, or SR2SR sounding. N is an integer greater than or equal to 1.

Correspondingly, an SBP responder receives the sensing by proxy request frame.

S102: The SBP responder transmits a sensing by proxy response frame.

Correspondingly, the SBP initiator receives the sensing by proxy response frame.

Optionally, in the SBP setup phase, the SBP initiator transmits the SBP request frame to the SBP responder, where the SBP request frame may be used to request the SBP responder to serve as a proxy (proxy) of the SBP initiator to perform sensing measurement. In other words, the SBP request frame allows a non-AP STA to invoke an SBP procedure (the SBP request frame allows a non-AP STA to invoke an SBP procedure). After receiving the SBP request frame, the SBP responder replies with the SBP response frame. The SBP response frame may be used to accept or reject the request of the SBP initiator.

In a possible implementation, the SBP request frame may carry a measurement parameter related to a sensing responder, for example, the first indication information, and the first indication information may indicate whether the sensing responder participates in one or more of the following sensing measurement: TF sounding, NDPA sounding, or SR2SR sounding. If the SBP responder can satisfy the measurement parameter carried in the SBP request frame, the SBP responder may indicate, in the SBP response frame, that an SBP request is accepted. If the SBP responder cannot satisfy the measurement parameter carried in the SBP request frame, the SBP responder may indicate, in the SBP response frame, that the SBP request is rejected. Optionally, if the SBP responder rejects the SBP request, the SBP responder may further provide a recommended measurement parameter in the SBP response frame.

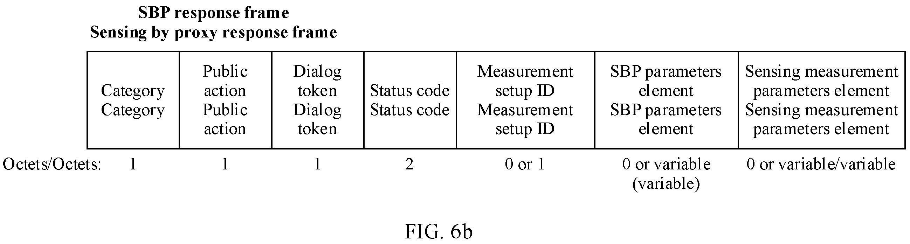

FIG. 6a is a diagram of a frame format of an SBP request frame according to an embodiment of this application. As shown in FIG. 6a, the SBP request frame includes but is not limited to a variable (variable) SBP parameters element (SBP parameters element). For example, the SBP parameters element may carry the measurement parameter related to the sensing responder, for example, the first indication information, to indicate whether (the sensing responder specified by the SBP initiator) participates in one or more of the following sensing measurement: TF sounding, NDPA sounding, or SR2SR sounding. FIG. 6b is a diagram of a frame format of an SBP response frame according to an embodiment of this application. As shown in FIG. 6b, the SBP response frame includes but is not limited to a status code (status code) field. The status code field indicates that the SBP request is accepted or rejected. Optionally, if the status code field indicates that the SBP request is rejected, the SBP response frame may further include a variable (variable) SBP parameters element, and the SBP parameters element may carry the measurement parameter recommended by the SBP responder. For example, the SBP parameters element also carries the first indication information, to indicate whether the sensing responder (specified by the SBP responder) participates in one or more of the following sensing measurement: TF sounding, NDPA sounding, or SR2SR sounding. Optionally, if the status code field indicates that the SBP request is accepted, the SBP response frame may also include a variable (variable) SBP parameters element, and the SBP parameters element may be the same as the SBP parameters element carried in the SBP request frame.

It may be understood that, for meanings of fields that are not described in FIG. 6a and FIG. 6b, refer to an existing standard, for example, the 802.1 1bf standard. Details are not described herein.

The following describes the SBP parameters element (SBP parameters element) in detail.

In a possible implementation, the SBP parameters element includes the first indication information, and the first indication information may indicate whether the sensing responder participates in one or more of the following sensing measurement: TF sounding (TF sounding), NDPA sounding (NDPA sounding), or SR2SR sounding (SR2SR sounding). Optionally, the SBP parameters element further includes the addresses of the N sensing responders, and an address of one sensing responder is used to identify one sensing responder. In this case, the first indication information may specifically indicate whether the N sensing responders identified by the addresses of the N sensing responders participate in one or more of the following sensing measurement: TF sounding, NDPA sounding, or SR2SR sounding.

In another possible implementation, the first indication information may indicate one or more of the following: the sensing responder participating in TF sounding (TF sounding), the sensing responder participating in NDPA sounding (NDPA sounding), or the sensing responder participating in SR2SR sounding (SR2SR sounding).

Implementation 1

The first indication information may be implemented using a bitmap (bitmap). In a possible implementation, the first indication information may include one or more of the following: a first bitmap, a second bitmap, or a third bitmap. A bit in the first bitmap may indicate whether the N sensing responders participate in TF sounding, a bit in the second bitmap may indicate whether the N sensing responders participate in NDPA sounding, and a bit in the third bitmap may indicate whether the N sensing responders participate in SR2SR sounding. Lengths of the first bitmap, the second bitmap, and the third bitmap are all greater than or equal to N bits.

In some scenarios, 1 bit corresponds to one sensing responder. Because all fields in the SBP parameters element are in a unit of octet (octets), the lengths of the first bitmap, the second bitmap, and the third bitmap may also be in a unit of octet. When the length of the first bitmap is greater than N bits, a length of valid bits in the first bitmap is N, and one valid bit in the first bitmap corresponds to one sensing responder. Similarly, when the length of the second bitmap is greater than N bits, a length of valid bits in the second bitmap is N, and one valid bit in the second bitmap corresponds to one sensing responder. Similarly, when the length of the third bitmap is greater than N bits, a length of valid bits in the third bitmap is N, and one valid bit in the third bitmap corresponds to one sensing responder. Therefore, meanings of the first bitmap, the second bitmap, and the third bitmap may alternatively be represented as follows: One valid bit in the first bitmap indicates whether a sensing responder corresponding to the valid bit participates in TF sounding, one valid bit in the second bitmap indicates whether a sensing responder corresponding to the valid bit participates in NDPA sounding, and one valid bit in the third bitmap indicates whether a sensing responder corresponding to the valid bit participates in SR2SR sounding.

It may be understood that if the length of the first bitmap is equal to N bits, it indicates that all bits in the first bitmap are valid bits. Similarly, if the length of the second bitmap is equal to N bits, it indicates that all bits in the second bitmap are valid bits. Similarly, if the length of the third bitmap is equal to N bits, it indicates that all bits in the third bitmap are valid bits.

In some other scenarios, a plurality of bits correspond to one sensing responder. For example, every 2 bits or every 3 bits correspond to one sensing responder. A correspondence between values of the plurality of bits and sensing responders may be pre-defined or pre-configured. This is not limited in this embodiment of this application.

In another possible implementation, the first indication information may include a fourth bitmap, and M bits in the fourth bitmap correspond to one sensing responder. In this case, a length of the fourth bitmap is M*N bits, and the bits correspond to the N sensing responders. Every M bits in the fourth bitmap indicate whether a corresponding sensing responder participates in TF sounding, NDPA sounding, or SR2SR sounding. For example, M is equal to 2. When values of 2 bits in the fourth bitmap are 01 (binary), it indicates that a sensing responder corresponding to the 2 bits participates in TF sounding; when values of 2 bits in the fourth bitmap are 10 (binary), it indicates that a sensing responder corresponding to the 2 bits participates in NDPA sounding; when values of 2 bits in the fourth bitmap are 11 (binary), it indicates that a sensing responder corresponding to the 2 bits participates in SR2SR sounding; or when values of 2 bits in the fourth bitmap are 00 (binary), the 2 bits indicate reserved. It may be understood that a mapping relationship between the values of the M bits, and TF sounding, NDPA sounding, and SR2SR sounding is not limited in this embodiment of this application. It may be further understood that, with development of a standard, a value of M may be greater than 2 bits, or may be less than 2 bits.

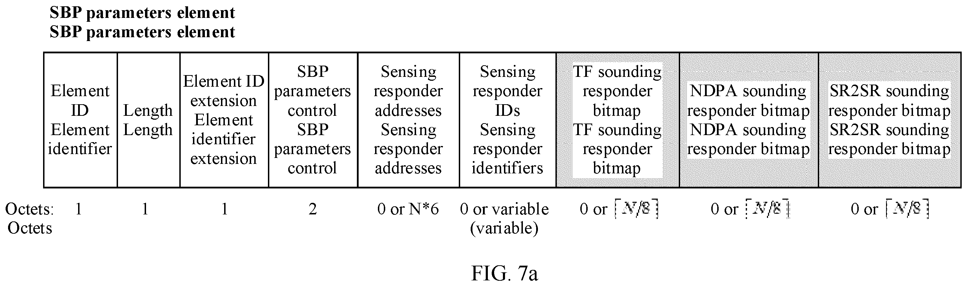

For ease of understanding, the following uses an example in which 1 bit corresponds to one sensing responder. FIG. 7a is a diagram of a first frame format of an SBP parameters element according to an embodiment of this application. As shown in FIG. 7a, the SBP parameters element may include but is not limited to one or more of the following: an SBP parameters control (SBP parameters control) field, a sensing responder addresses (sensing responder addresses) field, a TF sounding responder bitmap (TF sounding responder bitmap), an NDPA sounding responder bitmap (NDPA sounding responder bitmap), or an SR2SR sounding responder bitmap (SR2SR sounding responder bitmap). The TF sounding responder bitmap (namely, the first bitmap) indicates whether each of the N sensing responders participates in TF sounding, the NDPA sounding responder bitmap (namely, the second bitmap) indicates whether each of the N sensing responders participates in NDPA sounding, and the SR2SR sounding responder bitmap (namely, the third bitmap) indicates whether each of the N sensing responders participates in SR2SR sounding. The SBP initiator may provide N candidate sensing responders in the SBP request frame, and the candidate sensing responders are indicated using the sensing responder addresses field. Herein, one sensing responder addresses field includes the addresses of the N sensing responders. One valid bit in the TF/NDPA/SR2SR sounding responder bitmap corresponds to one sensing responder identified by an address that is of the sensing responder and that is in the sensing responder addresses field.

It may be understood that, for meanings of other fields that are not described in FIG. 7a, refer to an existing standard. Details are not described herein. It may be further understood that names, lengths, a sequence, and the like of the TF sounding responder bitmap, the NDPA sounding responder bitmap, and the SR2SR sounding responder bitmap in FIG. 7a are merely examples. This is not limited in this embodiment of this application.

For example, the TF/NDPA/SR2SR sounding responder bitmap is in a unit of octet, and a length of the TF/NDPA/SR2SR sounding responder bitmap is $\lceil N/8 \rceil$ octets. $\lceil x \rceil$ represents rounding up x, and same symbols below represent a same meaning. Details are not described again. It is assumed that N is equal to 8, and the length of the TF sounding responder bitmap is 1 octet. In this case, when the TF sounding responder bitmap is 10010011 (herein, an example in which 1 indicates participation and 0 indicates no participation is used), it indicates that sensing responders 1, 4, 7, and 8 participate in TF sounding, and other sensing responders (that is, sensing responders 2, 3, 5, and 6) do not participate in TF sounding. It is assumed that N is equal to 4, the NDPA sounding responder bitmap is 1 octet, and the first 4 bits of the NDPA sounding responder bitmap are valid bits. In this case, when the first 4 bits of the NDPA sounding responder bitmap are 1001 (herein, an example in which 1 indicates participation and 0 indicates no participation is used), it indicates that sensing responders 1 and 4 participate in NDPA sounding, and other sensing responders do not participate in NDPA sounding; and the last 4 bits of the NDPA sounding responder bitmap may be understood as padding (padding) bits, and are set to reserved values. It is assumed that N is equal to 10, the SR2SR sounding responder bitmap is 2 octets, and the first 10 bits of the SR2SR sounding responder bitmap are valid bits. In this case, when the first 10 bits of the SR2SR sounding responder bitmap are 1001001101 (herein, an example in which 1 indicates participation and 0 indicates no participation is used), it indicates that sensing responders 1, 4, 7, 8, and 10 participate in SR2SR sounding, and other sensing responders do not participate in SR2SR sounding; and the last 6 bits of the SR2SR sounding responder bitmap may be understood as padding bits, and are set to reserved values. It may be understood that sensing responders participating in TF sounding, NDPA sounding, and SR2SR sounding may overlap. For example, some sensing responders may participate in TF sounding, and may also participate in NDPA sounding or SR2SR sounding.

It may be understood that, in TF sounding and NDPA sounding, a role (that is, TX/RX/TX and RX) of a sensing responder is fixed. Regardless of a number of times of measurement, for TF sounding, a non-AP STA transmits an NDP to an AP for sensing measurement, and for NDPA sounding, an AP transmits an NDP to a non-AP STA for sensing measurement. However, in SR2SR sounding, a role (that is, TX/RX/TX and RX) of a sensing responder is not fixed. In other words, for a plurality of times of measurement, a non-AP STA that transmits an NDP may be different from a non-AP STA that receives the NDP. For example, in a first time of SR2SR sounding, a non-AP STA 1 transmits an NDP, and a non-AP STA 3 and a non-AP STA 4 receive the NDP for measurement; and in a second time of SR2SR sounding, a non-AP STA 2 transmits an NDP, and the non-AP STA 1 and a non-AP STA 6 receive the NDP for measurement. Therefore, a number of indication fields (namely, the third bitmap) indicating whether to participate in SR2SR sounding may also be consistent with a number of groups of roles of sensing responders in SR2SR sounding.

Therefore, because a role of a sensing responder in SR2SR sounding is not fixed, the first indication information in this embodiment of this application may further include a plurality of third bitmaps. Optionally, if the third bitmap is present in the first indication information, the first indication information may include L third bitmaps, where L is an integer greater than or equal to 1. A value of L may be pre-defined, pre-configured, pre-negotiated, indicated by the SBP parameters element (for details, refer to the following descriptions), or the like. One third bitmap may correspond to one SR2SR sounding pattern, and one SR2SR sounding pattern corresponds to one or more times of SR2SR sounding. In this case, one third bitmap also corresponds to one or more times of SR2SR sounding. For example, one third bitmap may indicate whether the N sensing responders participate in SR2SR sounding corresponding to an SR2SR sounding pattern corresponding to the third bitmap. The SR2SR sounding pattern may describe a transmitter and a receiver that are of a sensing PPDU (for example, an NDP) in SR2SR sounding. Alternatively, one SR2SR sounding pattern may describe a group of roles in SR2SR sounding (that is, a sensing responder serving as TX, a sensing responder serving as RX, or a sensing responder serving as both TX and RX).

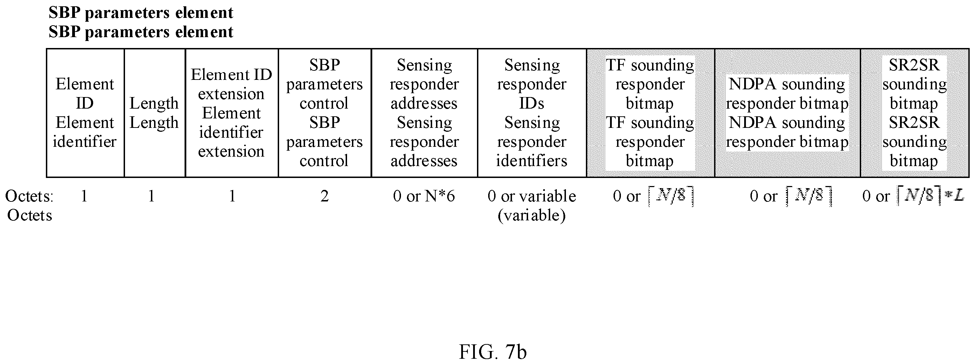

FIG. 7b is a diagram of a second frame format of an SBP parameters element according to an embodiment of this application. As shown in FIG. 7b, the SBP parameters element may include but is not limited to one or more of the following: an SBP parameters control (SBP parameters control) field, a sensing responder addresses (sensing responder addresses) field, a TF sounding responder bitmap (TF sounding responder bitmap), an NDPA sounding responder bitmap (NDPA sounding responder bitmap), or L SR2SR sounding bitmaps (SR2SR sounding bitmap). The TF sounding responder bitmap (namely, the first bitmap) indicates whether each of the N sensing responders participates in TF sounding, and the NDPA sounding responder bitmap (namely, the second bitmap) indicates whether each of the N sensing responders participates in NDPA sounding. The L SR2SR sounding bitmaps (namely, the L third bitmaps) correspond to L SR2SR sounding patterns, one SR2SR sounding bitmap corresponds to one SR2SR sounding pattern, and there may be one or more times of SR2SR sounding in one SR2SR sounding pattern. One SR2SR sounding bitmap (namely, one third bitmap) indicates whether each of the N sensing responders participates in SR2SR sounding corresponding to the SR2SR sounding bitmap. The SBP initiator may provide N candidate sensing responders in the SBP request frame, and the candidate sensing responders are indicated using the sensing responder addresses field. Herein, one sensing responder addresses field includes the addresses of the N sensing responders. One valid bit in the TF/NDPA sounding responder bitmap corresponds to one sensing responder identified by an address that is of the sensing responder and that is in the sensing responder addresses field. Similarly, one valid bit in the SR2SR sounding bitmap also corresponds to one sensing responder identified by an address that is of the sensing responder and that is in the sensing responder addresses field. For example, valid bits in a same location sequence in the L SR2SR sounding bitmaps may correspond to a same sensing responder. For example, L is equal to 2. In this case, a first valid bit in a first SR2SR sounding bitmap and a first valid bit in a second SR2SR sounding bitmap may correspond to a same sensing responder.

It may be understood that, for meanings of other fields that are not described in FIG. 7b, refer to an existing standard. Details are not described herein. It may be further understood that names, lengths, a sequence, and the like of the TF sounding responder bitmap, the NDPA sounding responder bitmap, and the SR2SR sounding bitmap in FIG. 7b are merely examples. This is not limited in this embodiment of this application.

For example, the TF/NDPA sounding responder bitmap is in a unit of octet, and a length of the TF/NDPA sounding responder bitmap is $\lceil N/8 \rceil$ octets. $\lceil x \rceil$ represents rounding up x, and same symbols below represent a same meaning. Details are not described again. The SR2SR sounding bitmap is also in a unit of octet, and a length of a single SR2SR sounding bitmap is also $\lceil N/8 \rceil$ octets. It is assumed that N is equal to 10, each SR2SR sounding bitmap has 2 octets. It is assumed the first 10 bits of each SR2SR sounding bitmap are valid bits. In this case, when first 10 bits of an SR2SR sounding bitmap are 1001001101 (herein, an example in which 1 indicates participation and 0 indicates no participation is used), it indicates that sensing responders 1, 4, 7, 8, and 10 participate in SR2SR sounding corresponding to an SR2SR sounding pattern corresponding to the SR2SR sounding bitmap, and other sensing responders do not participate in SR2SR sounding. The last 6 bits of the SR2SR sounding bitmap may be understood as padding bits, and are set to reserved values. It may be understood that sensing responders participating in TF sounding, NDPA sounding, and SR2SR sounding may overlap. For example, some sensing responders may participate in TF sounding, and may also participate in NDPA sounding or SR2SR sounding.

In some scenarios, a frame format of the SBP parameters element may be a combination of those in FIG. 7a and FIG. 7b. For example, the SBP parameters element may include both an SR2SR sounding responder bitmap and L SR2SR sounding bitmaps. Certainly, for specific meanings of the SR2SR sounding responder bitmap and the SR2SR sounding bitmaps, refer to descriptions in FIG. 7a and FIG. 7b. Details are not described herein again.

In some possible implementations, whether the first bitmap (for example, the TF sounding responder bitmaps in FIG. 7a and FIG. 7b), the second bitmap (for example, the NDAP sounding responder bitmaps in FIG. 7a and FIG. 7b), and the third bitmap (for example, the SR2SR sounding responder bitmap in FIG. 7a and the SR2SR sounding bitmap in FIG. 7b) are present in the SBP parameters element may be determined based on the SBP parameters control (SBP parameters control) field. In other words, the SBP parameters element further includes second indication information, and the second indication information may indicate whether the first indication information is present. For example, the second indication information is located in the SBP parameters control field. In this embodiment of this application, the second indication information may be set to a preset value (for example, 1), to indicate that the first indication information is present. It may be understood that whether the preset value is 1 or 0 is not limited in this embodiment of this application.

For example, the first indication information includes one or more of the following: the first bitmap, the second bitmap, or the third bitmap. Correspondingly, the second indication information may include one or more of the following: a first bitmap present field, a second bitmap present field, or a third bitmap present field. The first bitmap present field may indicate whether the first bitmap is present, the second bitmap present field may indicate whether the second bitmap is present, and the third bitmap present field may indicate whether the third bitmap is present. In this embodiment of this application, at least one of the first bitmap present field, the second bitmap present field, or the third bitmap present field is set to a preset value (for example, 1, and the preset value may alternatively be 0).

Optionally, the SBP parameters control field in the SBP parameters element may further include one or more of the following: third indication information, fourth indication information, or fifth indication information. The third indication information may indicate whether the SBP initiator requests to perform SR2SR sounding in a sensing by proxy procedure. The fourth indication information may indicate a number of SR2SR sounding patterns, and one SR2SR sounding pattern corresponds to one or more times of SR2SR sounding. The fifth indication information may indicate a number of times of SR2SR sounding corresponding to each SR2SR sounding pattern. When a frame format of the SBP parameters element uses that shown in FIG. 7a, the SBP parameters control field may include the third indication information. When a frame format of the SBP parameters element uses that shown in FIG. 7b, the SBP parameters control field may include the third indication information, and optionally, may further include the fourth indication information and/or the fifth indication information. It may be understood that, when the frame format of the SBP parameters element uses that shown in FIG. 7b, if the third indication information indicates that the SBP initiator does not perform SR2SR sounding in the sensing by proxy procedure, the fourth indication information and/or the fifth indication information may be set to reserved values, or the SBP parameters control field does not include the fourth indication information and/or the fifth indication information.

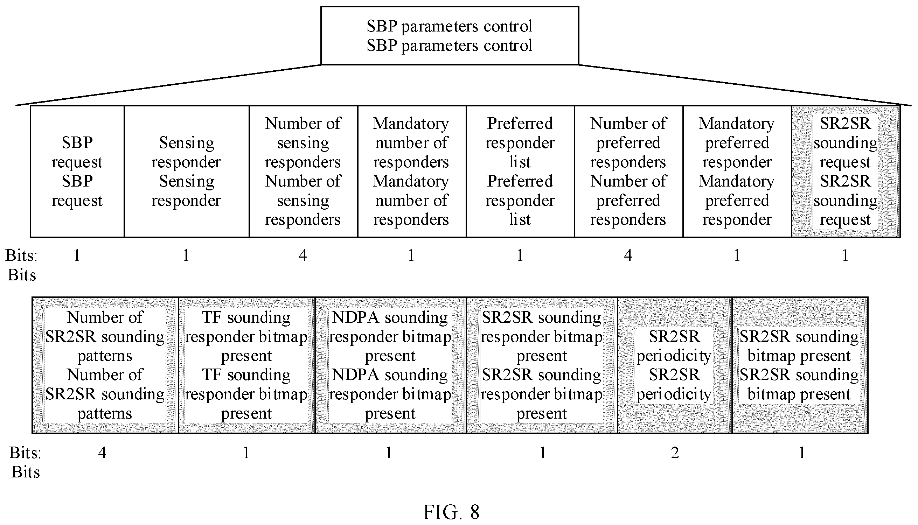

FIG. 8 is a diagram of a first frame format of an SBP parameters control field according to an embodiment of this application. A length of the SBP parameters control field shown in FIG. 8 may be greater than or equal to 2 octets, for example, 3 octets or 4 octets. The length of the SBP parameters control field is not limited in this embodiment of this application. As shown in FIG. 8, the SBP parameters control field includes but is not limited to one or more of the following: an SR2SR sounding request (SR2SR sounding request) field, a TF sounding responder bitmap present (TF sounding responder bitmap present) field, an NDPA sounding responder bitmap present (NDPA sounding responder bitmap present) field, an SR2SR sounding responder bitmap present (SR2SR sounding responder bitmap present) field, a number of SR2SR sounding patterns (number of SR2SR sounding patterns) field, an SR2SR periodicity (SR2SR periodicity) field, or an SR2SR sounding bitmap present (SR2SR sounding bitmap present) field.

A length of the SR2SR sounding request field (namely, the third indication information) is 1 bit, and the 1 bit indicates whether the SBP initiator requests to perform SR2SR sounding in the sensing by proxy procedure. The TF sounding responder bitmap present field (namely, the first bitmap present field) and the NDPA sounding responder bitmap present field (namely, the second bitmap present field) each are represented by using 1 bit, to respectively indicate whether the TF/NDPA sounding responder bitmap (namely, the first bitmap/the second bitmap) is present in the SBP parameters element. The SR2SR sounding responder bitmap present field is represented by using 1 bit, and the 1 bit indicates whether the SR2SR sounding responder bitmap is present in the SBP parameters element. The SR2SR sounding bitmap present field is also represented by using 1 bit, and the 1 bit indicates whether the SR2SR sounding bitmap is present in the SBP parameters element. In some scenarios, the SR2SR sounding responder bitmap present field and the SR2SR sounding bitmap present field may coexist, or only one of the two fields may exist. This is not limited in this embodiment of this application. The number of SR2SR sounding patterns field (namely, the fourth indication information) indicates a number of SR2SR sounding patterns, namely, a value of L. The SR2SR periodicity field (namely, the fifth indication information) indicates a number of times of SR2SR sounding corresponding to each SR2SR sounding pattern. If the SR2SR periodicity field indicates that the number of times of SR2SR sounding corresponding to each SR2SR sounding pattern is T, $(L \times T)$ times of SR2SR sounding is performed in total. It may be understood that, for meanings of other fields that are not described in FIG. 8, refer to an existing standard. Details are not described herein.

Optionally, if the SR2SR sounding bitmap present field (the third bitmap present field) indicates that the SR2SR sounding bitmap (the third bitmap) is not present, the number of SR2SR sounding patterns field (the fourth indication information) may be set to a reserved value. If the SR2SR sounding request field (the third indication information) indicates that the SBP initiator does not perform SR2SR sounding in the SBP procedure, a value of the SR2SR sounding responder bitmap present field may be 0, indicating that the SR2SR sounding responder bitmap is not present in the SBP parameters element; and/or a value of the SR2SR sounding bitmap present field may be 0, indicating that the SR2SR sounding bitmap is not present in the SBP parameters element.

It may be understood that names, lengths, a sequence, and the like of the fields in FIG. 8 are merely examples. This is not limited in this embodiment of this application.

In this embodiment of this application, whether the sensing responder participates in various sensing measurement (for example, TF/NDPA/SR2SR sounding) is indicated in a bitmap manner. This manner barely modifies the SBP parameters element, is simple and clear, has low overheads, is easy to implement, and facilitates compatibility with an existing protocol.

Implementation 2

The first indication information may be implemented using a field corresponding to the sensing responder. In a possible implementation, one sensing responder may correspond to one or more of the following: one first field, one second field, or one third field. In this case, the first indication information may include one or more of the following corresponding to the N sensing responders: the first field, the second field, or the third field. The first field may indicate whether the sensing responders corresponding to the first field participate in TF sounding, the second field may indicate whether the sensing responders corresponding to the second field participate in NDPA sounding, and the third field may indicate whether sensing responders corresponding to the third field participate in SR2SR sounding.

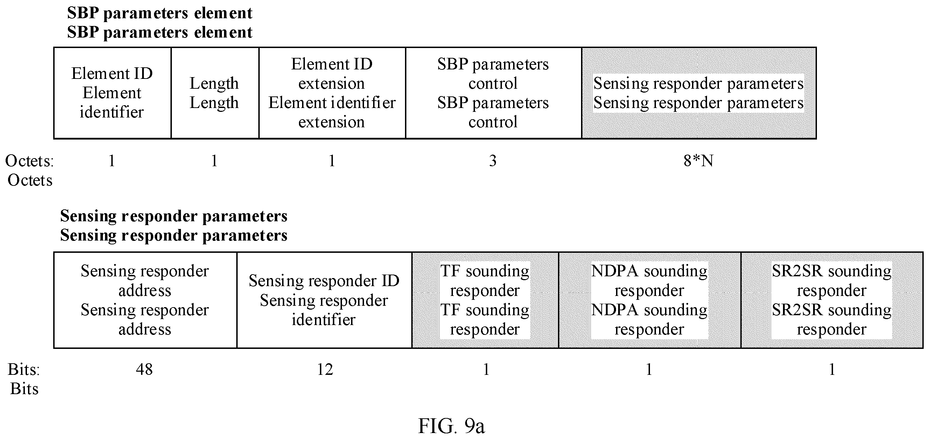

For example, a field may be added to the SBP parameters element, and the field may be used to carry a feature parameter of the sensing responder, for example, an address of the sensing responder, an ID of the sensing responder, whether to participate in TF sounding, whether to participate in NDPA sounding, or whether to participate in SR2SR sounding. FIG. 9a is a diagram of a third frame format of an SBP parameters element according to an embodiment of this application. As shown in FIG. 9a, the SBP parameters element may include but is not limited to an SBP parameters control (SBP parameters control) field and N sensing responder parameters (sensing responder parameters) fields. For example, a length of each sensing responder parameters field may be 8 octets, or may be greater than or less than 8 octets. The length of the sensing responder parameters field is not limited in this embodiment of this application. One sensing responder parameters field carries a feature parameter of one sensing responder. In other words, the first indication information may be carried in the sensing responder parameters field in the SBP parameters element.

One sensing responder parameters field may include but is not limited to one or more of the following: a sensing responder address (sensing responder address) field, a sensing responder identifier (sensing responder ID) field, a TF sounding responder field (namely, the first field), an NDPA sounding responder field (namely, the second field), or an SR2SR sounding responder field (namely, the third field). Herein, one sensing responder address field carries an address of one sensing responder. A length of the TF sounding responder field (namely, the first field) in one sensing responder parameters field may be 1 bit, and the 1 bit indicates whether a corresponding sensing responder (which is a sensing responder indicated by a sensing responder address field in a same sensing responder parameters field) participates in TF sounding. Similarly, a length of the NDPA sounding responder field (namely, the second field) in one sensing responder parameters field may be 1 bit, and the 1 bit indicates whether a corresponding sensing responder (which is a sensing responder indicated by a sensing responder address field in a same sensing responder parameters field) participates in NDPA sounding. A length of the SR2SR sounding responder field (namely, the third field) may alternatively be 1 bit, and 1 bit indicates whether a corresponding sensing responder (which is a sensing responder indicated by a sensing responder address field located in a same sensing responder parameters field) participates in SR2SR sounding. It may be understood that, for meanings of other fields that are not described in FIG. 9a, refer to an existing standard. Details are not described herein. It may be further understood that names, lengths, a sequence, and the like of the fields in FIG. 9a are merely examples. This is not limited in this embodiment of this application.

Optionally, because a role of a sensing responder in SR2SR sounding is not fixed, a length of the third field may be greater than or equal to L bits, and the third field corresponds to L SR2SR sounding patterns. L is an integer greater than or equal to 1. A bit in the third field may indicate whether a sensing responder corresponding to the third field participates in SR2SR sounding respectively corresponding to the L SR2SR sounding patterns. One SR2SR sounding pattern corresponds to one or more times of SR2SR sounding. The SR2SR sounding pattern may describe a transmitter and a receiver that are of a sensing PPDU (for example, an NDP) in SR2SR sounding. Alternatively, one SR2SR sounding pattern may describe a group of roles in SR2SR sounding.

In some scenarios, 1 bit corresponds to one SR2SR sounding pattern. When the length of the third field is greater than L bits, a length of valid bits in the third field is L, and one valid bit in the third field corresponds to one SR2SR sounding pattern. In this case, a meaning of the third field may be further described as follows: One valid bit in the third field indicates whether a sensing responder corresponding to the third field participates in SR2SR sounding corresponding to an SR2SR sounding pattern corresponding to the valid bit. It may be understood that, if the length of the third field is equal to L bits, it indicates that all bits of the third field are valid bits. In some other scenarios, a plurality of bits correspond to one SR2SR sounding pattern. For example, every 2 bits or every 3 bits correspond to one SR2SR sounding pattern. A correspondence between values of the plurality of bits and SR2SR sounding patterns may be pre-defined or pre-configured. This is not limited in this embodiment of this application.

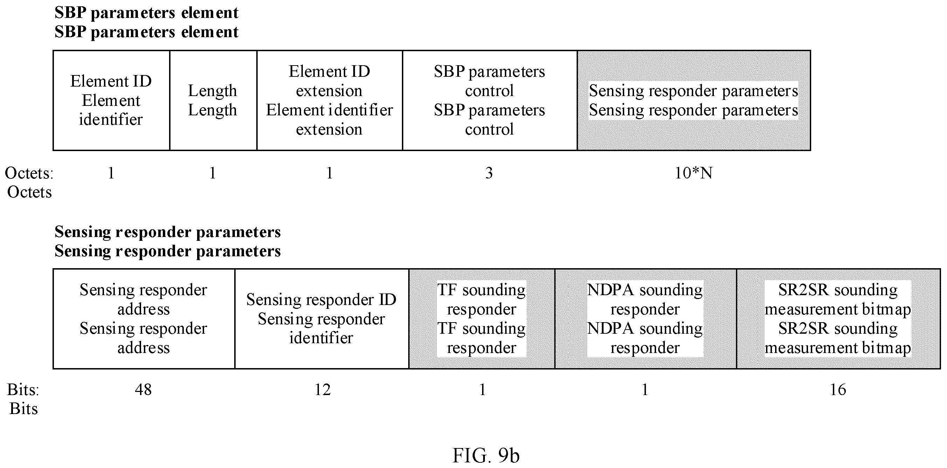

For example, FIG. 9b is a diagram of a fourth frame format of an SBP parameters element according to an embodiment of this application. As shown in FIG. 9b, the SBP parameters element may include but is not limited to an SBP parameters control (SBP parameters control) field and N sensing responder parameters (sensing responder parameters) fields. For example, a length of each sensing responder parameters field may be 10 octets, or may be greater than or less than 10 octets. The length of the sensing responder parameters field is not limited in this embodiment of this application. One sensing responder parameters field carries a feature parameter of one sensing responder. In other words, the first indication information may be carried in the sensing responder parameters field in the SBP parameters element.

One sensing responder parameters field may include but is not limited to one or more of the following: a sensing responder address (sensing responder address) field, a sensing responder identifier (sensing responder ID) field, a TF sounding responder field (namely, the first field), an NDPA sounding responder field (namely, the second field), or an SR2SR sounding measurement bitmap (SR2SR sounding measurement bitmap) (namely, the third field). Herein, one sensing responder address field carries an address of one sensing responder. A length of the TF sounding responder field (namely, the first field) in one sensing responder parameters field may be 1 bit, and the 1 bit indicates whether a corresponding sensing responder (which is a sensing responder indicated by a sensing responder address field in a same sensing responder parameters field) participates in TF sounding. Similarly, a length of the NDPA sounding responder field (namely, the second field) in one sensing responder parameters field may be 1 bit, and the 1 bit indicates whether a corresponding sensing responder (which is a sensing responder indicated by a sensing responder address field in a same sensing responder parameters field) participates in NDPA sounding. The SR2SR sounding measurement bitmap (namely, the third field) may indicate whether a corresponding sensing responder (which is a sensing responder indicated by a sensing responder address field in a same sensing responder parameters field) participates in SR2SR sounding respectively corresponding to the L SR2SR sounding patterns. It may be understood that, for meanings of other fields that are not described in FIG. 9b, refer to an existing standard. Details are not described herein. It may be further understood that names, lengths, a sequence, and the like of the fields in FIG. 9b are merely examples. This is not limited in this embodiment of this application.

For example, it is assumed that a length of the SR2SR sounding measurement bitmap is 16 bits, L is equal to 10, the first 10 bits of the SR2SR sounding measurement bitmap are valid bits, and one valid bit corresponds to one SR2SR sounding pattern. In this case, when the first 10 bits of the SR2SR sounding measurement bitmap are 1110011010 (herein, an example in which 1 indicates participation and 0 indicates no participation is used), it indicates that a corresponding sensing responder participates in SR2SR sounding respectively corresponding to first, second, third, sixth, seventh, and ninth SR2SR sounding patterns, and does not participate in SR2SR sounding respectively corresponding to fourth, fifth, eighth, and tenth SR2SR sounding patterns; and remaining 6 bits of the SR2SR sounding measurement bitmap may be set to reserved values.

In some scenarios, a frame format of the SBP parameters element may be a combination of those in FIG. 9a and FIG. 9b. For example, the SBP parameters element may include both an SR2SR sounding responder field and an SR2SR sounding measurement bitmap. Certainly, for specific meanings of the SR2SR sounding responder field and the SR2SR sounding measurement bitmap, refer to descriptions in FIG. 9a and FIG. 9b. Details are not described herein again.

In some possible implementations, the SBP parameters control field shown in FIG. 9a may include third indication information. The SBP parameters control field shown in FIG. 9b may include the third indication information, optionally, may further include fourth indication information, and optionally, may further include fifth indication information. In this implementation, one sensing responder corresponds to one first field, one second field, and one third field. The third indication information may indicate whether the SBP initiator requests to perform SR2SR sounding in a sensing by proxy procedure. The fourth indication information may indicate a number of SR2SR sounding patterns, and one SR2SR sounding pattern corresponds to one or more times of SR2SR sounding. The fifth indication information may indicate a number of times of SR2SR sounding corresponding to each SR2SR sounding pattern. It may be understood that, if the third indication information indicates that the SBP initiator does not perform SR2SR sounding in the sensing by proxy procedure, the fourth indication information and/or the fifth indication information may be set to reserved values, or the SBP parameters control field does not include the fourth indication information and/or the fifth indication information. It may be further understood that, if the third indication information indicates that the SBP initiator does not perform SR2SR sounding in the sensing by proxy procedure, the SR2SR sounding measurement bitmap or the SR2SR sounding responder field included in the sensing responder parameters field may be set to a reserved value, to indicate that the SBP initiator does not participate in SR2SR sounding.

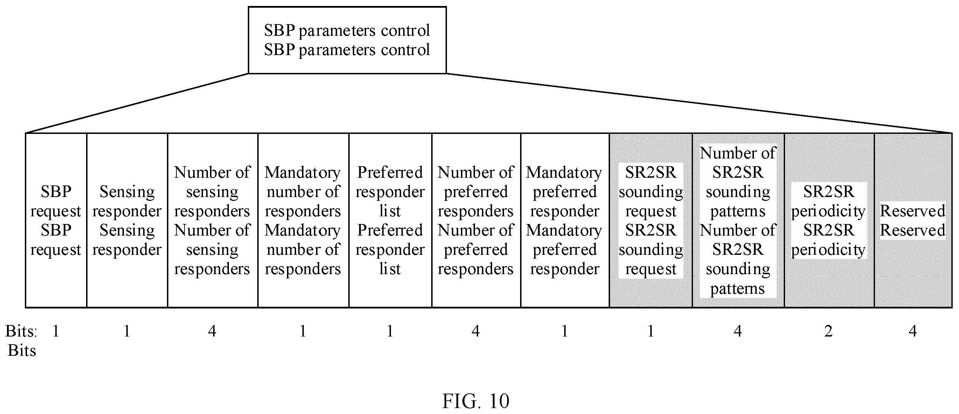

FIG. 10 is a diagram of a second frame format of an SBP parameters control field according to an embodiment of this application. A length of the SBP parameters control field shown in FIG. 10 may be greater than or equal to 2 octets, for example, 3 octets or 4 octets. The length of the SBP parameters control field is not limited in this embodiment of this application. As shown in FIG. 10, the SBP parameters control field includes but is not limited to one or more of the following: an SR2SR sounding request (SR2SR sounding request) field, a number of SR2SR sounding patterns (number of SR2SR sounding patterns) field, or an SR2SR periodicity (SR2SR periodicity) field. For specific meanings of the SR2SR sounding request field (namely, the third indication information), the number of SR2SR sounding patterns field (namely, the fourth indication information), and the SR2SR periodicity field (namely, the fifth indication information), refer to the foregoing descriptions (FIG. 8). Details are not described herein again. It may be understood that, for meanings of other fields that are not described in FIG. 10, refer to an existing standard. Details are not described herein. It may be further understood that names, lengths, a sequence, and the like of the fields in FIG. 10 are merely examples. This is not limited in this embodiment of this application.

Optionally, the SBP parameters control field in the SBP parameters element may further include second indication information (not shown in FIG. 10), and the second indication information may indicate whether the first indication information is present. In other words, whether the sensing responder parameters field includes the first field (for example, the TF sounding responder fields in FIG. 9a and FIG. 9b), the second field (for example, the NDPA sounding responder fields in FIG. 9a and FIG. 9b), or the third field (for example, the SR2SR sounding responder field in FIG. 9a or the SR2SR sounding measurement bitmap in FIG. 9b) may be determined based on the SBP parameters control (SBP parameters control) field.

For example, the second indication information may include one or more of the following: a TF sounding responder present field, an NDPA sounding responder present field, an SR2SR sounding responder present field, or an SR2SR sounding measurement bitmap present field. The TF sounding responder present field may indicate whether the TF sounding responder field is present in the sensing responder parameters field. The NDPA sounding responder present field may indicate whether the NDPA sounding responder field is present in the sensing responder parameters field. The SR2SR sounding measurement bitmap present field may indicate whether the SR2SR sounding measurement bitmap is present in the sensing responder parameters field. The SR2SR sounding responder present field may indicate whether the SR2SR sounding responder field is present in the sensing responder parameters field. In some scenarios, both the SR2SR sounding responder present field and the SR2SR sounding measurement bitmap present field may be present, or only one of the two fields may be present. This is not limited in this embodiment of this application.

In this embodiment of this application, at least one of the TF sounding responder present field, the NDPA sounding responder present field, the SR2SR sounding responder present field, or the SR2SR sounding measurement bitmap present field is set to a preset value (for example, 1), to indicate presence.

For example, if the TF/NDPA sounding responder present field indicates that the TF/NDPA sounding responder field is present in the sensing responder parameters field, each sensing responder parameters field includes the TF/NDPA sounding responder field. On the contrary, if the TF/NDPA sounding responder present field indicates that the TF/NDPA sounding responder field is not present in the sensing responder parameters field, the TF/NDPA sounding responder field is not present in each sensing responder parameters field. The SR2SR sounding measurement bitmap present field and the SR2SR sounding responder present field are similar, and are not enumerated herein.

In another possible implementation, one sensing responder may correspond to one fourth field. In this case, the first indication information may include fourth fields corresponding to the N sensing responders, and one fourth field indicates whether a sensing responder corresponding to the fourth field participates in TF sounding, NDPA sounding, or SR2SR sounding. For example, a length of the fourth field is 2 bits. When a value of a fourth field is 01 (binary), it indicates that a sensing responder corresponding to the fourth field participates in TF sounding; when a value of a fourth field is 10 (binary), it indicates that a sensing responder corresponding to the fourth field participates in NDPA sounding; when a value of a fourth field is 11 (binary), it indicates that a sensing responder corresponding to the fourth field participates in SR2SR sounding; or when a value of a fourth field is 00 (binary), it indicates reserved. It may be understood that a mapping relationship between values of the fourth field, and TF sounding, NDPA sounding, and SR2SR sounding is not limited in this embodiment of this application. It may be further understood that, with development of a standard, a value of M may be greater than 2 bits, or may be less than 2 bits.

In this embodiment of this application, a field (for example, the sensing responder parameters field) is designed for each sensing responder, and the field indicates one sensing responder and indicates whether the sensing responder participates in various sensing measurement (for example, TF/NDPA/SR2SR sounding). A meaning is clear and is easy to understand.

In a possible implementation, the SBP parameters element (for example, as shown in any one of FIG. 7a, FIG. 7b, FIG. 9a, or FIG. 9b) may further include sixth indication information, and the sixth indication information may indicate whether the N sensing responders specified by the SBP initiator need to satisfy an indication of the first indication information. For example, the sixth indication information is located in the SBP parameters control field (for example, FIG. 8 or FIG. 10).

Optionally, if the SBP request frame carries the sixth indication information, the sixth indication information indicates that the N sensing responders specified by the SBP initiator need to satisfy the indication of the first indication information, and the SBP responder can satisfy the indication of the first indication information in the SBP request frame, the SBP responder may indicate, in the SBP response frame, that the SBP request is accepted. If the SBP responder cannot satisfy the indication of the first indication information in the SBP request frame, the SBP responder may indicate, in the SBP response frame, that the SBP request is rejected, and carry the SBP parameters element in the SBP response frame to provide a recommended measurement parameter, for example, the first indication information. Alternatively, if the SBP responder finds, in an SBP procedure that has been set up, that the SBP responder cannot satisfy the indication of the first indication information in the SBP request frame, the SBP responder may transmit an SBP termination frame to the SBP initiator to terminate the current SBP procedure, and the SBP responder may carry the SBP parameters element in the SBP termination frame to provide a recommended measurement parameter. The SBP initiator may determine, based on the recommended measurement parameter, whether to retransmit the SBP request frame.

In this embodiment of this application, the SBP initiator sets, in the SBP setup phase, sensing measurement of a specific TB-type (TF sounding, NDPA sounding, SR2SR sounding) in which the sensing responder specified by the SBP initiator participates. This can not only enable the SBP initiator to have a function of setting a measurement parameter related to the sensing responder, thereby helping the SBP initiator control and manage the SBP sensing procedure, but also help the SBP initiator parse a sensing measurement report, thereby improving sensing performance.

Embodiment 2

Embodiment 2 of this application mainly describes how to indicate a role of a sensing responder in an SBP setup phase.

Embodiment 2 of this application may be separately implemented, or may be implemented in combination with Embodiment 1. This is not limited in this application.

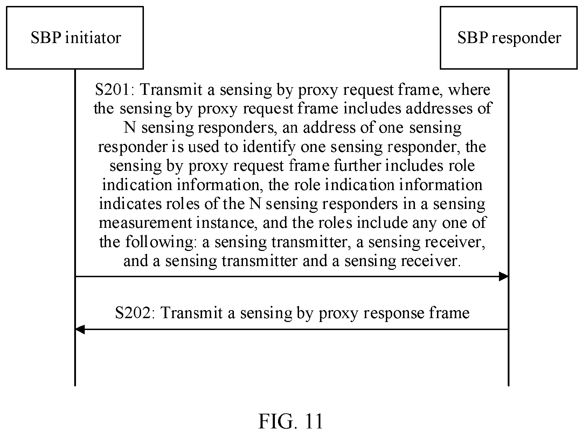

FIG. 11 is a second schematic flowchart of an information indication method in WLAN sensing according to an embodiment of this application. As shown in FIG. 11, the information indication method in WLAN sensing includes but is not limited to the following steps: S201: An SBP initiator transmits a sensing by proxy request frame, where the sensing by proxy request frame includes addresses of N sensing responders, an address of one sensing responder is used to identify one sensing responder, the sensing by proxy request frame further includes role indication information, the role indication information indicates roles of the N sensing responders in a sensing measurement instance, and the roles include any one of the following: a sensing transmitter, a sensing receiver, and a sensing transmitter and a sensing receiver. N is an integer greater than or equal to 1.

Correspondingly, an SBP responder receives the sensing by proxy request frame.

S202: The SBP responder transmits a sensing by proxy response frame.

Correspondingly, the SBP initiator receives the sensing by proxy response frame.

Optionally, in the SBP setup phase, the SBP initiator transmits the SBP request frame to the SBP responder, where the SBP request frame may be used to request the SBP responder to serve as a proxy (proxy) of the SBP initiator for sensing measurement. In other words, the SBP request frame allows a non-AP STA to invoke an SBP procedure. After receiving the SBP request frame, the SBP responder replies with the SBP response frame. The SBP response frame may be used to accept or reject the request of the SBP initiator. A frame format of the SBP request frame is shown in FIG. 6a, and a frame format of the SBP response frame is shown in FIG. 6b. Details are not described herein again.

In a possible implementation, the SBP request frame may carry a measurement parameter related to the sensing responder, for example, the role indication information, and the role indication information may indicate a role of the sensing responder in the sensing measurement instance. If the SBP responder can satisfy a role indicated in the SBP request frame, the SBP responder may indicate, in the SBP response frame, that the SBP request is accepted. If the SBP responder cannot satisfy a role indicated in the SBP request frame, the SBP responder may indicate, in the SBP response frame, that the SBP request is rejected. Optionally, if the SBP responder rejects the SBP request, the SBP responder may further provide a recommended role in the SBP response frame.

The role in this embodiment of this application may include one or more of the following: a sensing transmitter (TX for short), a sensing receiver (RX for short), and a sensing transmitter and a sensing receiver (TX and RX for short).

In a possible implementation, the role indication information may be located in an SBP parameters element. Optionally, the SBP parameters element further includes the addresses of the N sensing responders, and an address of one sensing responder is used to identify one sensing responder. In this case, the role indication information may specifically indicate roles of the N sensing responders identified by the addresses of the N sensing responders in the sensing measurement instance. In other words, the role indication information indicates whether a role of each sensing responder in the sensing measurement instance is TX, RX, or both TX and RX.

In another possible implementation, the role indication information may indicate one or more of the following: a sensing responder serving as a sensing transmitter (TX), a sensing responder serving as a sensing receiver (RX), or a sensing responder serving as a sensing transmitter and a sensing receiver (TX and RX) in the sensing measurement instance.

The following describes the SBP parameters element (SBP parameters element) in detail.

Implementation 1

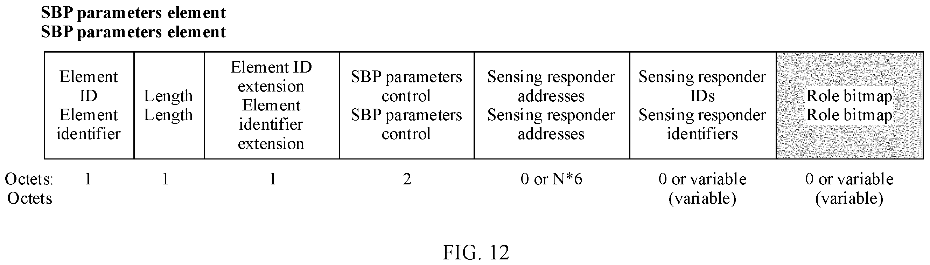

Optionally, the role indication information is implemented using a bitmap (bitmap), and bits in the role indication information may indicate the roles of the N sensing responders in the sensing measurement instance. Specifically, a role bitmap (role bitmap) may be added to the SBP parameters element to carry the role indication information. FIG. 12 is a diagram of a fifth frame format of an SBP parameters element according to an embodiment of this application. As shown in FIG. 12, the SBP parameters element may include but is not limited to the role bitmap (role bitmap). The role bitmap (namely, the role indication information) may indicate which one of a sensing transmitter (TX), a sensing receiver (RX), and a sensing transmitter and a sensing receiver (TX and RX) is a role of each sensing responder in the sensing measurement instance. It may be understood that, for meanings of other fields that are not described in FIG. 12, refer to an existing standard. Details are not described herein. It may be further understood that a name, a length, a sequence, and the like of the role bitmap in FIG. 12 are merely examples. This is not limited in this embodiment of this application. The following describes two indication manners of the role bitmap by using examples.

For example, each sensing responder may correspond to 2 bits. In this case, the role bitmap needs $\lceil (N/8)*2 \rceil$ bytes (byte), where $\lceil x \rceil$ indicates rounding up x. It may be understood that, because there are three roles: serving only as TX, serving only as RX, and serving as both TX and RX, 2 bits are required for one sensing responder to indicate a role of the sensing responder in the sensing measurement instance. For example, 10 (binary) represents TX, 01 (binary) represents RX, 11 (binary) represents TX and RX, and 00 (binary) is a reserved value. If N is equal to 4, when the role bitmap is 10010111, it indicates that a sensing responder 1 is TX in the sensing measurement instance, a sensing responder 2 is RX in the sensing measurement instance, a sensing responder 3 is RX in the sensing measurement instance, and a sensing responder 4 is TX and RX in the sensing measurement instance. Optionally, if a length of the role bitmap is greater than 2N bits, the first 2N bits of the role bitmap may be valid bits, and indicate the roles of the N sensing responders in the sensing measurement instance; and remaining bits are padding bits and are set to reserved values.

For another example, 3 prefix bits indicate whether the three roles TX, RX, and TX and RX exist. In this case, each sensing responder may correspond to 1 bit. For example, it is assumed that the prefix bits are 110 (binary), indicating that only TX and RX exist; and it is assumed that the prefix bits are 111 (binary), indicating that TX, RX, and TX and RX exist. If N is equal to 8, when the role bitmap is 11011011110, the first 3 bits 110 indicate that sensing responders serve only as TX and only as RX, and do not serve as TX and RX; and the last 8 bits are bounded by "0" (including 0), a number of 0s indicates a number of roles, 110/11110 indicates sensing responders 1, 2, and 3 are TX in the sensing measurement instance, and sensing responders 4, 5, 6, 7, and 8 are RX in the sensing measurement instance. When the role bitmap is 11111010110, the first 3 bits 111 indicate that sensing responders serve only as TX, only as RX, and as TX and RX; and the last 8 bits are still bounded by "0" (including 0), a number of 0s indicates a number of roles, 110/10/110 indicates that sensing responders 1, 2, and 3 are TX in the sensing measurement instance, sensing responders 4 and 5 are RX in the sensing measurement instance, and sensing responders 6, 7, and 8 are TX and RX in the sensing measurement instance. It may be understood that, in addition to the first 3 prefix bits, other bits in the role bitmap are not necessarily bounded by 0, and may alternatively be bounded by 1. This is not limited in this embodiment of this application. It may be further understood that, in this case, the role bitmap needs $\lceil (N+3)/8 \rceil$ bytes (byte), where $\lceil x \rceil$ indicates rounding up x. Optionally, if the length of the role bitmap is greater than (N+3) bits, the first (N+3) bits of the role bitmap may be valid bits, and indicate the roles of the N sensing responders in the sensing measurement instance; and remaining bits are padding bits and are set to reserved values.

In this embodiment of this application, a role of a sensing responder is indicated in a bitmap manner. This manner reduces overheads, is simple to implement, and facilitates compatibility with an existing protocol.

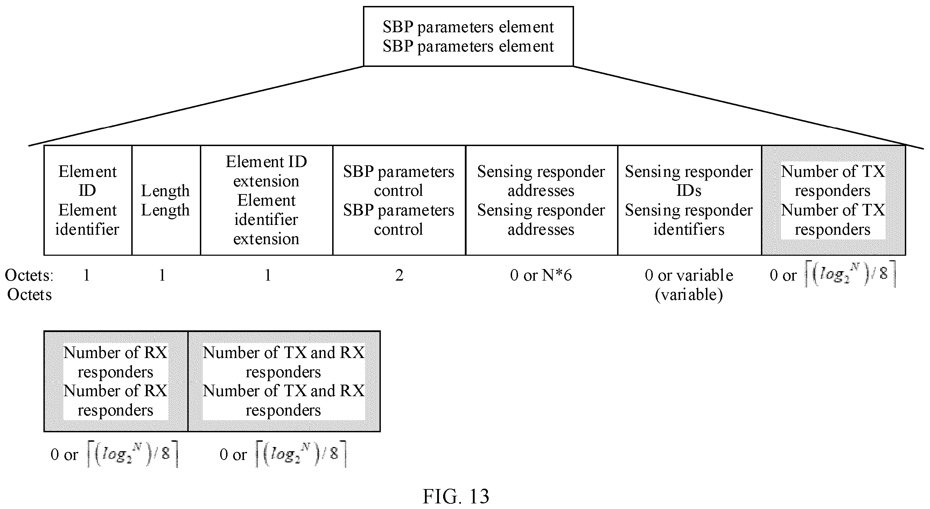

Optionally, the role indication information is implemented using three fields. The role indication information may indicate which of the N sensing responders serve as sensing transmitters (TX), which sensing responders serve as sensing receivers (RX), and which sensing responders serve as both sensing transmitters and sensing receivers (TX and RX). FIG. 13 is a diagram of a sixth frame format of an SBP parameters element according to an embodiment of this application. As shown in FIG. 13, the SBP parameters element may include but is not limited to one or more of the following: a number of TX responders (number of TX responders) field, a number of RX responders (number of RX responders) field, and a number of TX and RX responders (number of TX and RX responders) field. When a value of the number of TX responders field is P, it indicates that $1^{st}$ to $P^{th}$ sensing responders in the N sensing responders serve as sensing transmitters (TX) in the sensing measurement instance. When a value of the number of RX responders field is Q, it indicates that $(P+1)^{th}$ to $(P+Q)^{th}$ sensing responders in the N sensing responders serve as sensing receivers (RX) in the sensing measurement instance. When a value of the number of TX and RX responders field is K, it indicates that $(P+Q+1)^{th}$ to $(P+Q+K)^{th}$ sensing responders in the N sensing responders serve as both sensing transmitters and sensing receivers (TX and RX) in the sensing measurement instance. A value of (P+Q+K) may be less than or equal to N. For example, if the number of TX responders field, the number of RX responders field, and the number of TX and RX responders field are present, a length of each of the number of TX responders field, the number of RX responders field, and the number of TX and RX responders field is $\lceil (log_2^{N})/8 \rceil$ octets.

It may be understood that, for meanings of other fields that are not described in FIG. 13, refer to an existing standard. Details are not described herein. It may be further understood that names, lengths, a sequence, and the like of the fields in FIG. 13 are merely examples. This is not limited in this embodiment of this application.

In this embodiment of this application, the number P of sensing responders that serve as TX, the number Q of sensing responders that serve as RX, and the number K of sensing responders that serve as TX and RX are indicated by the fields, that is, which sensing responders serve as TX, which sensing responders serve as RX, and which sensing responders serve as TX and RX are indicated. This requires a small number of bits, reduces overheads, and facilitates understanding. In addition, additional information is provided, that is, a number of sensing responders that serve as respective roles is provided.

In some possible implementations, whether the role indication information is present in the SBP parameters element may be determined based on an SBP parameters control (SBP parameters control) field. In this case, the SBP parameters element may further include role present indication information, and the role present indication information may indicate whether the role indication information is present. For example, the role present indication information is located in the SBP parameters control field. In some scenarios, for example, when this embodiment of this application is independently implemented, the role present indication information is set to a preset value (for example, 1, and the preset value may alternatively be 0), to indicate that the role indication information is present. In some other scenarios, for example, when this embodiment of this application is implemented in combination with Embodiment 1, the role present indication information may be randomly set. This is not limited.

Optionally, the SBP parameters control field may further include mandatory role indication information, and the mandatory role indication information may indicate whether the N sensing responders need to satisfy an indication of the role indication information. It may be understood that, if the SBP request frame carries the mandatory role indication information, the mandatory role indication information indicates that the N sensing responders specified by the SBP initiator need to satisfy the indication of the role indication information, and the SBP responder can satisfy the indication of the role indication information in the SBP request frame, the SBP responder may indicate, in the SBP response frame, that the SBP request is accepted. If the SBP responder cannot satisfy the indication of the role indication information in the SBP request frame, the SBP responder may indicate, in the SBP response frame, that the SBP request is rejected, and include the SBP parameters element in the SBP response frame to provide recommended role indication information. Alternatively, when the SBP responder finds, in an SBP procedure that has been set up, that the SBP responder cannot satisfy the indication of the role indication information in the SBP request frame, the SBP responder carries the SBP parameters element in an SBP termination frame to provide recommended role indication information. The SBP initiator may determine, based on the recommended role indication information, whether to retransmit the SBP request frame.

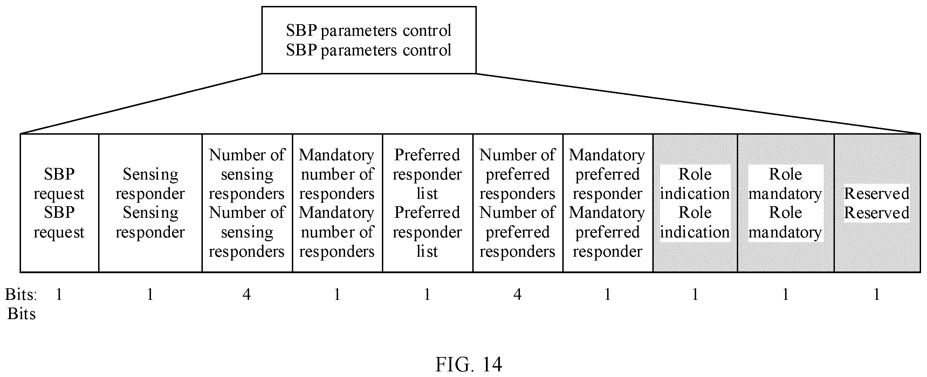

FIG. 14 is a diagram of a third frame format of an SBP parameters control field according to an embodiment of this application. A length of the SBP parameters control field shown in FIG. 14 may be equal to 2 octets. The length of the SBP parameters control field is not limited in this embodiment of this application. As shown in FIG. 14, the SBP parameters control field includes but is not limited to one or more of the following: a role indication (role indication) field or a role mandatory (role mandatory) field. A length of the role indication field (namely, the role present indication information) may be 1 bit, and the 1 bit indicates whether the role indication information is present in the SBP parameters element. A length of the role mandatory field may be 1 bit, and the 1 bit indicates whether the sensing responder needs to satisfy the indication (or role setting) of the role indication information. It may be understood that, for meanings of other fields that are not described in FIG. 14, refer to an existing standard. Details are not described herein. It may be further understood that names, lengths, and an arrangement sequence of the role indication field and the role mandatory field in FIG. 14 are merely examples. This is not limited in this embodiment of this application.

Implementation 2

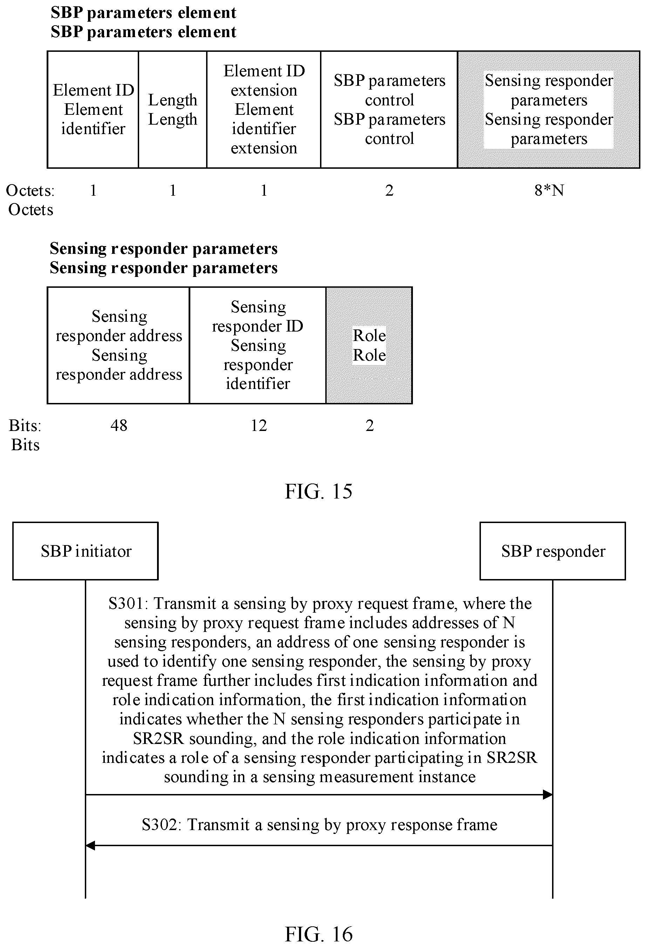

The role indication information may be implemented using a field corresponding to the sensing responder. For example, one sensing responder corresponds to one role (role) field, and the role field is used to carry the role indication information. FIG. 15 is a diagram of a seventh frame format of an SBP parameters element according to an embodiment of this application. As shown in FIG. 15, the SBP parameters element may include but is not limited to an SBP parameters control (SBP parameters control) field and N sensing responder parameters (sensing responder parameters) fields. For example, a length of each sensing responder parameters field may be 8 octets, or may be greater than or less than 8 octets. The length of the sensing responder parameters field is not limited in this embodiment of this application. One sensing responder parameters field may include but is not limited to one or more of the following: a sensing responder address (sensing responder address) field, a sensing responder identifier (sensing responder ID) field, and a role (role) field. Herein, one sensing responder address field carries an address of one sensing responder. A length of the role field (namely, the role indication information) may be 2 bits, and the 2 bit may indicate that which one of a sensing transmitter (TX), a sensing receiver (RX), and a sensing transmitter and a sensing receiver (TX and RX) is a role of a corresponding sensing responder (which is a sensing responder indicated by a sensing responder address field in a same sensing responder parameters field) in the sensing measurement instance. It may be understood that names, lengths, a sequence, and the like of the fields in FIG. 15 are merely examples. This is not limited in this embodiment of this application.

Optionally, the SBP parameters control field may further include one or more of the following: role present indication information or mandatory role indication information. The role present indication information may indicate whether the role indication information is present. The mandatory role indication information may indicate whether the N sensing responders need to satisfy an indication of the role indication information. For example, a length of the SBP parameters control field in FIG. 15 is 2 octets, and a frame format of the SBP parameters control field may be shown in FIG. 14. It may be understood that, if the role indication field in FIG. 14 indicates that there is no role indication information, the role field in FIG. 15 may be set to a reserved value, to indicate that there is no role.

In this embodiment of this application, a field (for example, the sensing responder parameters field) is designed for each sensing responder, and the field indicates one sensing responder and a role of the sensing responder. In this way, a meaning of the field is clear and is easy to understand, and the SBP responder can learn of complete information about the sensing responder in a parsing procedure.

In some scenarios, if this embodiment of this application is implemented in combination with Embodiment 1, Implementation 1 of this embodiment of this application may be combined with Implementation 1 of Embodiment 1. For example, the SBP parameters element may include the fields in FIG. 7a (or FIG. 7b) and FIG. 12 (or FIG. 13), and the SBP parameters control field may include the fields in FIG. 8 and FIG. 14. Implementation 2 of this embodiment of this application may be combined with Implementation 2 of Embodiment 1. For example, the sensing responder parameters field may include the fields in FIG. 9a (or FIG. 9b) and FIG. 15, and the SBP parameters control field may include the fields in FIG. 10 and FIG. 14. Details are not described herein again.

In this embodiment of this application, the SBP initiator sets a role (TX, RX, or TX and RX) of the sensing responder in the SBP setup phase. This can not only enable the SBP initiator to have a function of setting a measurement parameter related to the sensing responder, thereby helping the SBP initiator control and manage an SBP sensing procedure, but also help the SBP initiator parse a sensing measurement report.

Embodiment 3

Embodiment 3 of this application is an example in which Embodiment 1 and Embodiment 2 are implemented in combination.

It may be understood that Embodiment 1 provides a solution of setting, in an SBP setup phase, sensing measurement of a specific TB-type (TF sounding, NDPA sounding, SR2SR sounding) that a sensing responder participates in, and Embodiment 2 provides a solution of setting a role (TX, RX, or TX and RX) of a sensing responder in the SBP setup phase. Embodiment 1 and Embodiment 2 can be used together. For a sensing responder participating in TF sounding, a role of the sensing responder in a sensing measurement instance is TX. For a sensing responder participating in NDPA sounding, a role of the sensing responder in a sensing measurement instance is RX. In other words, for a sensing responder that participates in TF sounding or NDPA sounding, a role of the sensing responder in a sensing measurement instance is fixed. For a sensing responder participating in SR2SR sounding, a role of the sensing responder in a sensing measurement instance is not fixed. For example, the sensing responder participating in SR2SR sounding may be TX in a first SR2SR measurement instance, and is RX in a next SR2SR measurement instance.

Therefore, in this embodiment of this application, for different SR2SR measurement instances, whether a sensing responder participates in the SR2SR measurement instances and a role of the sensing responder in the SR2SR measurement instances are indicated.

Specifically, FIG. 16 is a third schematic flowchart of an information indication method in WLAN sensing according to an embodiment of this application. As shown in FIG. 16, the information indication method in WLAN sensing includes but is not limited to the following steps:

S301: An SBP initiator transmits a sensing by proxy request frame, where the sensing by proxy request frame includes addresses of N sensing responders, an address of one sensing responder is used to identify one sensing responder, the sensing by proxy request frame further includes first indication information and role indication information, the first indication information indicates whether the N sensing responders participate in SR2SR sounding, and the role indication information indicates a role of a sensing responder participating in SR2SR sounding in a sensing measurement instance. N is an integer greater than or equal to 1. The role includes any one of the following: a sensing transmitter, a sensing receiver, or a sensing transmitter and a sensing receiver.

Correspondingly, an SBP responder receives the sensing by proxy request frame.

S302: The SBP responder transmits a sensing by proxy response frame.

Correspondingly, the SBP initiator receives the sensing by proxy response frame.

Optionally, for implementations of step S301 and step S302 in this embodiment of this application, refer to the implementations of step S101 and step S102 in Embodiment 1, or refer to the implementations of step S201 and step S202 in Embodiment 2. Details are not described herein again.

Optionally, the first indication information may indicate whether each of the N sensing responders participates in SR2SR sounding, or indicate a sensing responder participating in SR2SR sounding. The role indication information may indicate which one of a sensing transmitter (TX), a sensing receiver (RX), and a sensing transmitter and a sensing receiver (TX and RX) is the role of the sensing responder participating in SR2SR sounding in the sensing measurement instance. For example, for an implementation of the first indication information, refer to related descriptions in Embodiment 1. Details are not described herein again. For example, for an implementation of the role indication information, refer to related descriptions in Embodiment 2. Details are not described herein again.

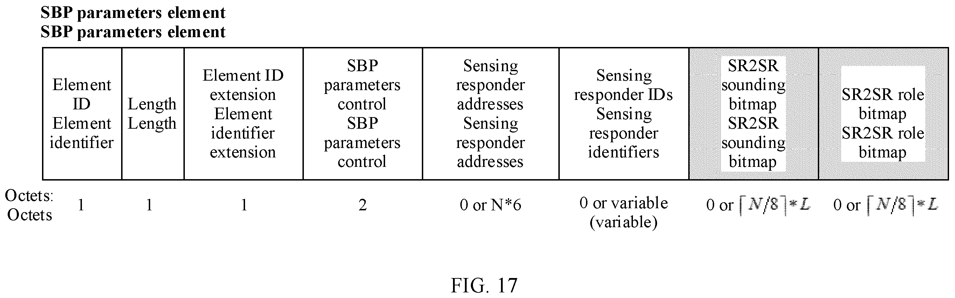

In a possible implementation, the first indication information may be implemented using a bitmap, and one valid bit corresponds to one sensing responder. The role indication information may also be implemented using a bitmap. In this embodiment of this application, one sensing responder in one SR2SR sounding pattern can appear only in one role. In other words, in one SR2SR sounding pattern, a sensing responder is either TX or RX, and a sensing responder cannot be both TX and RX. Therefore, one valid bit may represent a role of one sensing responder. FIG. 17 is a diagram of an eighth frame format of an SBP parameters element according to an embodiment of this application. As shown in FIG. 17, the SBP parameters element may include but is not limited to L SR2SR sounding bitmaps (the first indication information) and L SR2SR role bitmaps (SR2SR role bitmap) (the role indication information). A value of L may be predefined, pre-negotiated, pre-configured, or indicated in an SBP parameters control field in the SBP parameters element (for a specific indication manner, refer to related descriptions in Embodiment 1, and details are not described herein again). One SR2SR sounding bitmap corresponds to one SR2SR sounding pattern, and one SR2SR sounding bitmap may indicate which sensing responders participate in SR2SR sounding and which sensing responders do not participate in SR2SR sounding in one SR2SR sounding pattern. One SR2SR role bitmap also corresponds to one SR2SR sounding pattern, and one SR2SR role bitmap may indicate a role of a sensing responder participating in SR2SR sounding in one SR2SR sounding pattern. It may be understood that, for meanings of other fields that are not described in FIG. 17, refer to an existing standard. Details are not described herein. It may be further understood that names, lengths, a sequence, and the like of the fields in FIG. 17 are merely examples. This is not limited in this embodiment of this application.

For example, N is equal to 8. It is assumed that a value of a first SR2SR sounding bitmap is 10011010, it indicates that sensing responders 1, 4, 5, and 7 participate in SR2SR sounding corresponding to a first SR2SR sounding pattern. In this case, roles, that is, TX or RX, of the four sensing responders 1, 4, 5, and 7 need to be indicated in the SR2SR role bitmap. In the SR2SR role bitmap, it is assumed that the first 4 bits are valid bits, and other bits are set to reserved values. For example, 1 indicates TX, and 0 indicates RX. If the SR2SR role bitmap is 1000xxxx ("xxxx" indicates reserved values), it indicates that a sensing responder 1 is TX, and sensing responders 4, 5, and 7 are RX. It may be understood that whether 1 or 0 represents TX is not limited in this embodiment of this application.

Optionally, the SBP parameters element may further include one or more of the following: second indication information, role present indication information, third indication information, fourth indication information, fifth indication information, or mandatory role indication information. The second indication information may indicate whether the first indication information is present. In this embodiment of this application, the second indication information is set to a preset value (for example, 1), to indicate that the first indication information is present. The role present indication information may indicate whether the role indication information is present. In this embodiment of this application, the role present indication information is also set to a preset value (for example, 1), to indicate that the role indication information is present. The third indication information may indicate whether the SBP initiator requests to perform SR2SR sounding in a sensing by proxy procedure. In this embodiment of this application, the third indication information is also set to a preset value (for example, 1), to indicate that the SBP initiator requests to perform SR2SR sounding in the sensing by proxy procedure. The fourth indication information may indicate a number of SR2SR sounding patterns, namely, a value of L. The fifth indication information may indicate a number of times of SR2SR sounding corresponding to each SR2SR sounding pattern. The mandatory role indication information may indicate whether a sensing responder participating in SR2SR sounding needs to satisfy an indication of the role indication information.

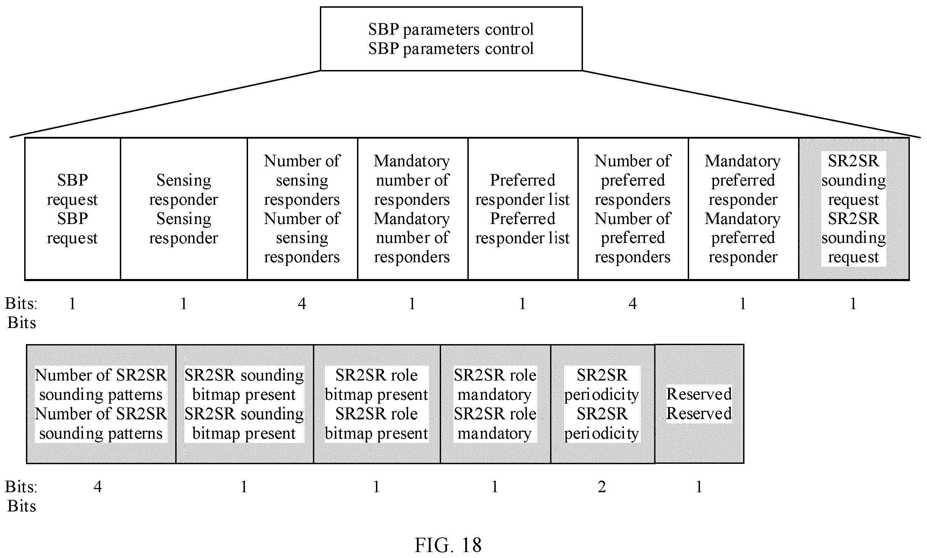

For example, FIG. 18 is a diagram of a fourth frame format of an SBP parameters control field according to an embodiment of this application. A length of the SBP parameters control field shown in FIG. 18 may be greater than 2 octets, for example, 3 octets or 4 octets. The length of the SBP parameters control field is not limited in this embodiment of this application. As shown in FIG. 18, the SBP parameters control field includes but is not limited to one or more of the following: an SR2SR sounding request field (namely, the third indication information), a number of SR2SR sounding patterns field (namely, the fourth indication information), an SR2SR sounding bitmap present field (namely, the second indication information), an SR2SR role bitmap present (SR2SR role bitmap present) field (namely, the role indication information), an SR2SR role mandatory (SR2SR role mandatory) field (namely, the mandatory role indication information), or an SR2SR periodicity field (namely, the fifth indication information). The SR2SR role bitmap present field indicates whether an SR2SR role bitmap is present, and the SR2SR role mandatory field indicates whether the sensing responder participating in SR2SR sounding needs to satisfy an indication of the SR2SR role bitmap. For meanings of other fields, refer to related descriptions in Embodiment 1 and Embodiment 2. Details are not described herein again. It may be understood that names, lengths, a sequence, and the like of the fields in FIG. 18 are merely examples. This is not limited in this embodiment of this application.

Optionally, if the SBP parameters element of the SBP request frame carries the mandatory role indication information (for example, the SR2SR role mandatory field), the mandatory role indication information indicates that the sensing responder participating in SR2SR sounding needs to satisfy the indication of the role indication information (for example, the SR2SR role bitmap), and the SBP responder can satisfy the indication of the role indication information in the SBP request frame, the SBP responder may indicate, in the SBP response frame, that the SBP request is accepted. If the SBP responder cannot satisfy the indication of the role indication information in the SBP request frame, the SBP responder may indicate, in the SBP response frame, that the SBP request is rejected, and may carry the SBP parameters element in the SBP response frame to provide a recommended role. Alternatively, after the SBP responder indicates, in the SBP response frame, that the SBP request is rejected, the SBP responder carries the SBP parameters element in an SBP termination frame to provide a recommended role. The SBP initiator may determine, based on the recommended role, whether to retransmit the SBP request frame.

In this embodiment of this application, whether the sensing responder participates in SR2SR sounding and a role of the sensing responder participating in SR2SR sounding in the sensing measurement instance are indicated in a bitmap manner. This manner barely modifies the SBP parameters element, is simple and clear, and is easy to understand and implement.

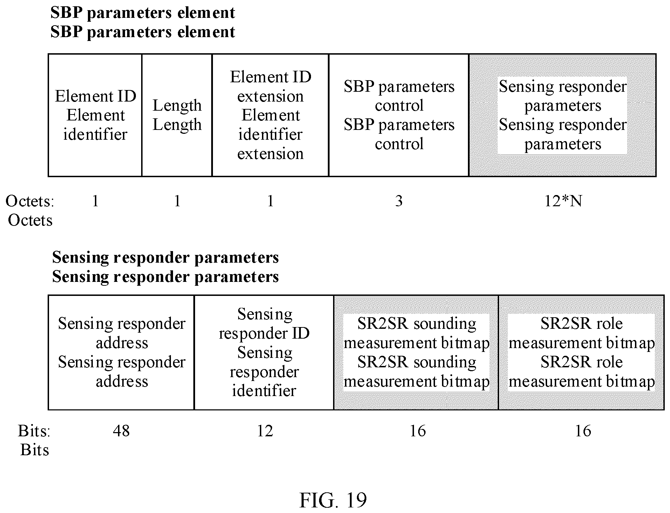

In another possible implementation, the first indication information may be implemented using a field corresponding to the sensing responder, and the role indication information may also be implemented using the field corresponding to the sensing responder. In this embodiment of this application, one sensing responder in one SR2SR sounding pattern can appear only in one role. In other words, in one SR2SR sounding pattern, a sensing responder is either TX or RX, and a sensing responder cannot be both TX and RX. Therefore, one valid bit may represent a role of one sensing responder. FIG. 19 is a diagram of a ninth frame format of an SBP parameters element according to an embodiment of this application. As shown in FIG. 19, the SBP parameters element may include but is not limited to an SBP parameters control field and N sensing responder parameters fields. For example, a length of each sensing responder parameters field may be 12 octets, or may be greater than or less than 12 octets. The length of the sensing responder parameters field is not limited in this embodiment of this application. One sensing responder parameters field carries a feature parameter of one sensing responder.

In other words, both the first indication information and the role indication information may be carried in the sensing responder parameters field in the SBP parameters element.

One sensing responder parameters field may include but is not limited to one or more of the following: a sensing responder address (sensing responder address) field, a sensing responder identifier (sensing responder ID) field, an SR2SR sounding measurement bitmap (SR2SR sounding measurement bitmap) (namely, the first indication information), and an SR2SR role measurement bitmap (SR2SR role measurement bitmap) (namely, the role indication information). Herein, one sensing responder address field carries an address of one sensing responder. Both a length of the SR2SR sounding measurement bitmap and a length of the SR2SR role measurement bitmap are greater than or equal to L bits. One valid bit in the SR2SR sounding measurement bitmap corresponds to one SR2SR sounding pattern, and one SR2SR sounding pattern corresponds to one or more times of SR2SR sounding. The SR2SR sounding pattern may describe a transmitter and a receiver that are of a sensing PPDU (for example, an NDP) in SR2SR sounding, or one SR2SR sounding pattern may describe a group of roles in SR2SR sounding. The SR2SR sounding measurement bitmap may indicate whether the sensing responder indicated by the sensing responder address field participates in SR2SR sounding respectively corresponding to L SR2SR sounding patterns. The SR2SR role measurement bitmap may indicate a role of the sensing responder indicated by the sensing responder address field in SR2SR sounding.

For example, L is equal to 8, and it is assumed that the first L bits of the SR2SR sounding measurement bitmap are valid bits. When values of the first 8 bits of the SR2SR sounding measurement bitmap are 10011010 (herein, an example in which 1 indicates participation and 0 indicates no participation is used), it indicates that the sensing responder indicated by the sensing responder address field participates in SR2SR sounding respectively corresponding to first, fourth, fifth, and seventh SR2SR sounding patterns, and does not participate in SR2SR sounding respectively corresponding to second, third, sixth, and eighth SR2SR sounding patterns; and remaining bits of the SR2SR sounding measurement bitmap may be set to reserved values. In this case, the SR2SR role measurement bitmap needs to indicate roles, namely, TX or RX, of the sensing responder indicated by the sensing responder address field in SR2SR sounding corresponding to the first, fourth, fifth, and seventh SR2SR sounding patterns. In the SR2SR role measurement bitmap, it is assumed that the first 4 bits are valid bits, and other bits are set to reserved values. For example, 1 indicates TX, and 0 indicates RX. If the SR2SR role measurement bitmap is 1000xxxx ("xxxx" indicates reserved values), it indicates that the sensing responder indicated by the sensing responder address field is TX in SR2SR sounding corresponding to the first SR2SR sounding pattern, and the corresponding sensing responder is RX in SR2SR sounding corresponding to the fourth, fifth, and seventh SR2SR sounding patterns. It may be understood that whether 1 or 0 represents TX is not limited in this embodiment of this application.

Optionally, the SBP parameters element may include third indication information, optionally, may further include fourth indication information, and optionally, may further include fifth indication information. The third indication information may indicate whether the SBP initiator requests to perform SR2SR sounding in a sensing by proxy procedure. In this embodiment of this application, the third indication information is set to a preset value (for example, 1), to indicate that the SBP initiator requests to perform SR2SR sounding in the sensing by proxy procedure. The fourth indication information may indicate a number of SR2SR sounding patterns, namely, a value of L. The fifth indication information may indicate a number of times of SR2SR sounding corresponding to each SR2SR sounding pattern. For example, a frame format of the SBP parameters control field in FIG. 19 may use that shown in FIG. 10. Details are not described herein again.

It may be understood that, if the third indication information indicates that the SBP initiator does not perform SR2SR sounding in the sensing by proxy procedure, both the SR2SR sounding measurement bitmap and the SR2SR role measurement bitmap in FIG. 19 are set to reserved values.

In this embodiment of this application, a field (for example, the sensing responder parameters field) is designed for each sensing responder, and the field indicates one sensing responder, indicates whether the sensing responder participates in SR2SR sounding, and indicates a role of the sensing responder in SR2SR sounding. In this way, a meaning of the field is clear and is easy to understand, and the SBP responder can learn of complete information about the sensing responder in a parsing procedure.

In this embodiment of this application, the SBP initiator sets, in the SBP setup phase, both sensing responders participating in SR2SR sounding and roles of these sensing responders in an SR2SR sensing measurement instance. This can not only enable the SBP initiator to have a function of setting measurement parameters related to the sensing responders, thereby helping the SBP initiator control and manage the SBP sensing procedure, but also help the SBP initiator parse a sensing measurement report.

It can be learned from the foregoing fifth point (that is, "5. Sensing session setup and sensing measurement setup") that, when an existing max number of supported setups field indicates a maximum number of measurement setups (MS) that can be maintained, whether a transmitting device is an AP or a non-AP STA is not distinguished, that is, whether a type of a (sensing) measurement setup MS is a TB-type (that is, the AP is a sensing initiator) or a non-TB-type (that is, the non-AP STA is a sensing initiator) is not distinguished. For example, an AP serving as a sensing initiator may set up a maximum of 8 TB-type MSs with a non-AP STA, and the AP may further serve as a sensing responder to set up a maximum of 8 non-TB-type MSs with the same non-AP STA. In this case, one AP or one non-AP STA can set up a maximum of 16 MSs (that is, 8 TB-type MSs and 8 non-TB-type MSs), or may set up 0 MSs. Therefore, there are 17 values (that is, 0 to 16) in total. However, the existing max number of supported setups field (4 bits) cannot represent 17 values.

Therefore, this embodiment of this application provides another information indication method in WLAN sensing, to modify an existing sensing capability exchange field, so that the sensing capability exchange field can indicate a total number of MSs that may be set up, and types of MSs (that is, a TB-type or a non-TB-type) can be further distinguished.

Optionally, both a first communication apparatus and a second communication apparatus in this embodiment of this application may support a WLAN sensing protocol, for example, 802.11bf or a next-generation protocol of 802.11bf.

Embodiment 4

Embodiment 4 of this application mainly describes extending a max number of supported setups field in a sensing session setup (sensing session setup) phase, so that the max number of supported setups field can indicate a total number of MSs that may be set up.

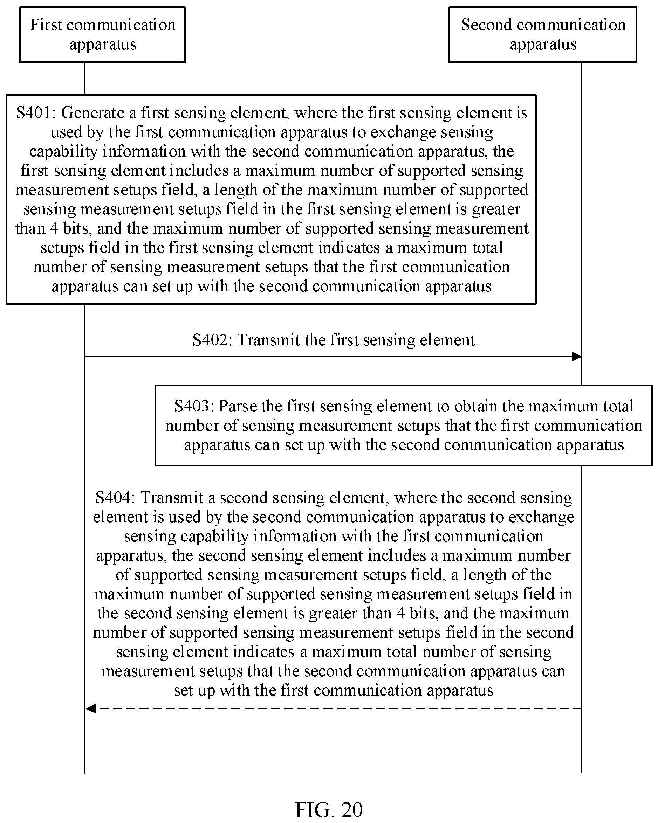

FIG. 20 is a fourth schematic flowchart of an information indication method in WLAN sensing according to an embodiment of this application. The method may be applied to a sensing session setup phase in a general sensing procedure. In the method, a first communication apparatus may be a sensing initiator, and a second communication apparatus may be a sensing responder. Certainly, in the method, the first communication apparatus may alternatively be a sensing responder, and the second communication apparatus is a sensing initiator. This is not limited in this embodiment of this application.

As shown in FIG. 20, the information indication method in WLAN sensing includes but is not limited to the following steps:

S401: The first communication apparatus generates a first sensing element, where the first sensing element is used by the first communication apparatus to exchange sensing capability information with the second communication apparatus, the first sensing element includes a maximum number of supported sensing measurement setups field, a length of the maximum number of supported sensing measurement setups field in the first sensing element is greater than 4 bits, and the maximum number of supported sensing measurement setups field in the first sensing element indicates a maximum total number of sensing measurement setups that the first communication apparatus can set up with the second communication apparatus.

S402: The first communication apparatus transmits the first sensing element to the second communication apparatus.

Correspondingly, the second communication apparatus receives the first sensing element.

S403: The second communication apparatus parses the first sensing element, to obtain the maximum total number of sensing measurement setups that the first communication apparatus can set up with the second communication apparatus.

Optionally, the information indication method in WLAN sensing further includes:

S404: The second communication apparatus transmits a second sensing element to the first communication apparatus, where the second sensing element is used by the second communication apparatus to exchange sensing capability information with the first communication apparatus, the second sensing element includes a maximum number of supported sensing measurement setups field, a length of the maximum number of supported sensing measurement setups field in the second sensing element is greater than 4 bits, and the maximum number of supported sensing measurement setups field in the second sensing element indicates a maximum total number of sensing measurement setups that the second communication apparatus can set up with the first communication apparatus.

Correspondingly, the first communication apparatus receives the second sensing element, and may parse the second sensing element to obtain the maximum total number of sensing measurement setups that the second communication apparatus can set up with the first communication apparatus.

In a possible implementation, a sensing initiator and a sensing responder may exchange respective sensing capability information by using a sensing element (sensing element). In this embodiment of this application, because there are 7 reserved bits in a sensing (sensing) field in an existing sensing element (for example, the frame format shown in FIG. 3), a length of the max number of supported setups field can be modified by reducing a number of existing reserved bits, so that the max number of supported setups field can indicate a total number of MSs that may be set up.

Specifically, the first communication apparatus and the second communication apparatus exchange respective sensing capability information by using the sensing element. For example, the first communication apparatus transmits the first sensing element that carries the sensing capability information of the first communication apparatus to the second communication apparatus; and the second communication apparatus transmits the second sensing element that carries the sensing capability information of the second communication apparatus to the first communication apparatus. Frame formats of the first sensing element and the second sensing element may be the same. In other words, fields included in the first sensing element and fields included in the second sensing element may be the same, but specific values of the fields may be different. Lengths of the maximum number of supported sensing measurement setups fields (namely, the max number of supported setups field) in the first sensing element and the second sensing element are both greater than 4 bits. For example, the maximum number of supported sensing measurement setups field (namely, the max number of supported setups field) is located in a sensing (sensing) field in the sensing element.

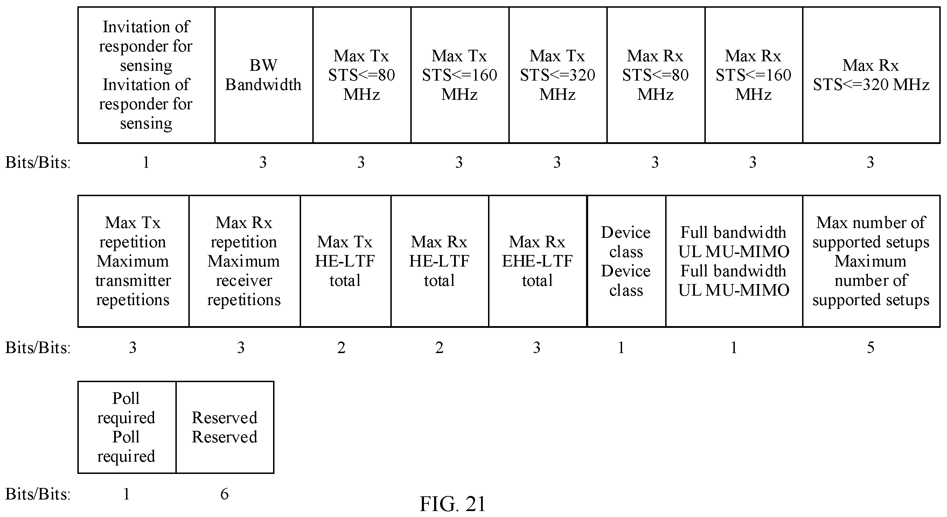

FIG. 21 is a diagram of a frame format of a sensing field in a sensing element according to an embodiment of this application. As shown in FIG. 21, the sensing field includes but is not limited to a max number of supported setups field whose length is 5 bits. Each communication apparatus can set up a maximum of 16 MSs (that is, 8 TB-type MSs and 8 non-TB-type MSs), or may set up 0 MSs. In other words, each communication apparatus has 17 possible total numbers of MSs (that is, 0 MSs to 16 MSs). Therefore, the max number of supported setups field needs to be represented by at least 5 bits. The max number of supported setups field may indicate a maximum total number of (sensing) measurement setups (MS) that a device transmitting the sensing element can set up with a device receiving the sensing element, or indicate a maximum number of MSs that a device transmitting the sensing element can maintain with a device receiving the sensing element.

It may be understood that, for names and meanings of fields in the sensing field shown in FIG. 21, refer to an existing standard, for example, the 802.11bf standard. Details are not described herein.

In this embodiment of this application, a length of the max number of supported setups field is extended from 4 bits to more than 4 bits, so that the max number of supported setups field can indicate a total number of MSs that may be set up (that is, 0 MSs to 16 MSs). In addition, a meaning of the max number of supported setups field may not be changed, and a length of the sensing field may not be changed, thereby facilitating compatibility with an existing protocol.

Embodiment 5

Embodiment 5 of this application mainly describes a newly added field in a sensing session setup (sensing session setup) phase, to distinguish between types (namely, a TB-type or a non-TB-type) of MSs.

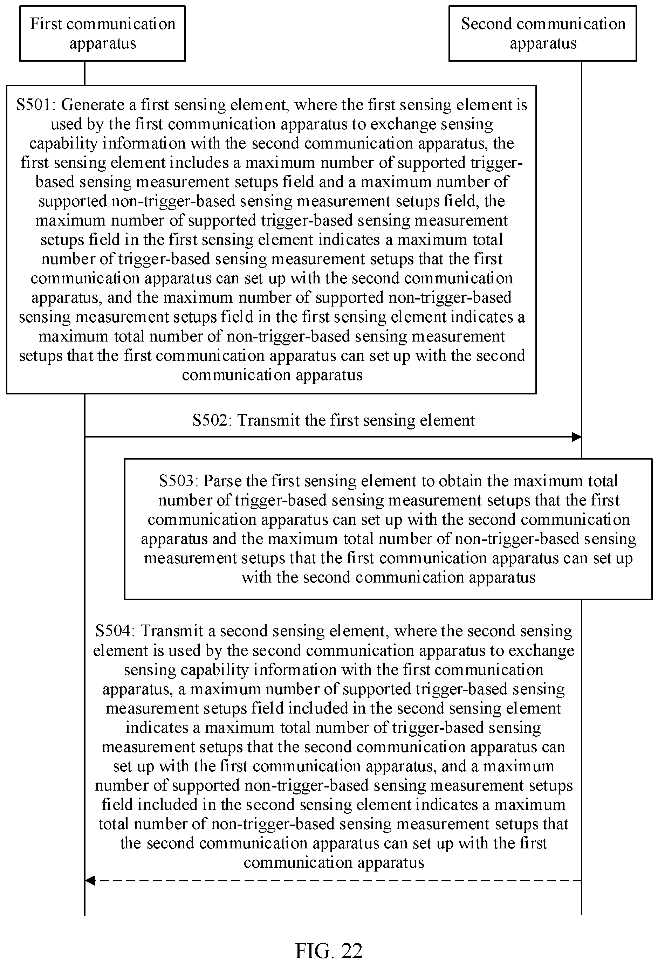

FIG. 22 is a fifth schematic flowchart of an information indication method in WLAN sensing according to an embodiment of this application. The method may be applied to a sensing session setup phase in a general sensing procedure. In the method, a first communication apparatus may be a sensing initiator, and a second communication apparatus may be a sensing responder. Certainly, in the method, the first communication apparatus may alternatively be a sensing responder, and the second communication apparatus is a sensing initiator. This is not limited in this embodiment of this application.

As shown in FIG. 22, the information indication method in WLAN sensing may include but is not limited to the following steps:

S501: The first communication apparatus generates a first sensing element, where the first sensing element is used by the first communication apparatus to exchange sensing capability information with the second communication apparatus, the first sensing element includes a maximum number of supported trigger-based sensing measurement setups field and a maximum number of supported non-trigger-based sensing measurement setups field, the maximum number of supported trigger-based sensing measurement setups field in the first sensing element indicates a maximum total number of trigger-based sensing measurement setups that the first communication apparatus can set up with the second communication apparatus, and the maximum number of supported non-trigger-based sensing measurement setups field in the first sensing element indicates a maximum total number of non-trigger-based sensing measurement setups that the first communication apparatus can set up with the second communication apparatus.

S502: The first communication apparatus transmits the first sensing element to the second communication apparatus.

Correspondingly, the second communication apparatus receives the first sensing element.

S503: The second communication apparatus parses the first sensing element, to obtain the maximum total number of trigger-based sensing measurement setups that the first communication apparatus can set up with the second communication apparatus and the maximum total number of non-trigger-based sensing measurement setups that the first communication apparatus can set up with the second communication apparatus.

Optionally, the information indication method in WLAN sensing further includes:

S504: The second communication apparatus transmits a second sensing element to the first communication apparatus, where the second sensing element is used by the second communication apparatus to exchange sensing capability information with the first communication apparatus, a maximum number of supported trigger-based sensing measurement setups field included in the second sensing element indicates a maximum total number of trigger-based sensing measurement setups that the second communication apparatus can set up with the first communication apparatus, and a maximum number of supported non-trigger-based sensing measurement setups field included in the second sensing element indicates a maximum total number of non-trigger-based sensing measurement setups that the second communication apparatus can set up with the first communication apparatus.

Correspondingly, the first communication apparatus receives the second sensing element, and may parse the second sensing element to obtain the maximum total number of trigger-based sensing measurement setups that the second communication apparatus can set up with the first communication apparatus and the maximum total number of non-trigger-based sensing measurement setups that the second communication apparatus can set up with the first communication apparatus.

Optionally, the first communication apparatus and the second communication apparatus may exchange respective sensing capability information using a sensing element. For example, the first communication apparatus transmits the first sensing element that carries the sensing capability information of the first communication apparatus to the second communication apparatus; and the second communication apparatus transmits the second sensing element that carries the sensing capability information of the second communication apparatus to the first communication apparatus. Frame formats of the first sensing element and the second sensing element may be the same. In other words, fields included in the first sensing element and fields included in the second sensing element may be the same, but specific values of the fields may be different.

Optionally, both the first sensing element and the second sensing element may include a maximum number of supported trigger-based sensing measurement setups field and a maximum number of supported non-trigger-based sensing measurement setups field. The maximum number of supported trigger-based sensing measurement setups field may indicate a maximum total number of trigger-based (TB) sensing measurement setups that a device transmitting the sensing element can set up with a device receiving the sensing element. The maximum number of supported non-trigger-based sensing measurement setups field may indicate a maximum total number of non-trigger-based (non-TB) sensing measurement setups that the device transmitting the sensing element can set up with the device receiving the sensing element. For example, the maximum number of supported trigger-based sensing measurement setups field and the maximum number of supported non-trigger-based sensing measurement setups field may be located in sensing fields in the sensing element.

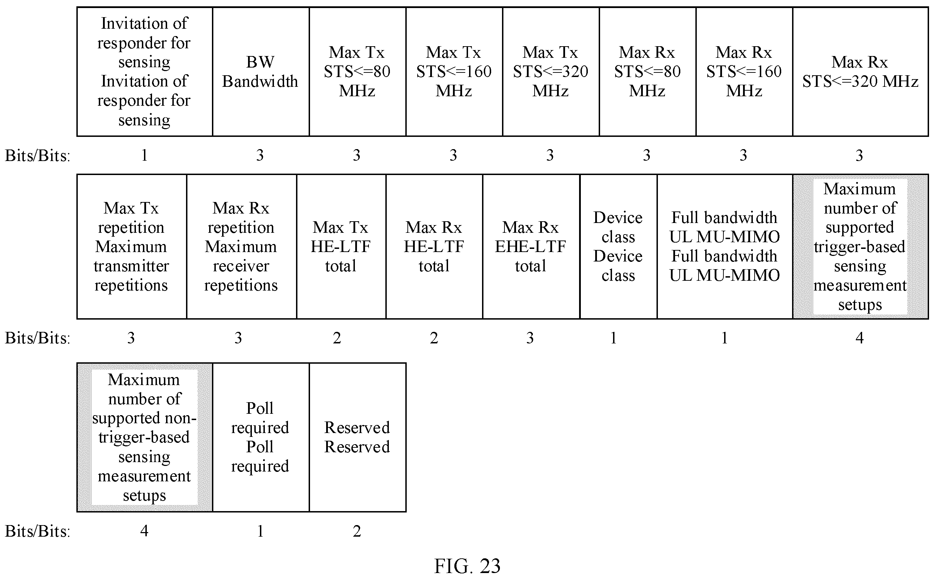

For example, FIG. 23 is a diagram of another frame format of a sensing field in a sensing element according to an embodiment of this application. As shown in FIG. 23, the sensing field includes but is not limited to a maximum number of supported trigger-based sensing measurement setups field and a maximum number of supported non-trigger-based sensing measurement setups field. A length of the maximum number of supported trigger-based sensing measurement setups field is 4 bits, and the 4 bits may represent 0 to 8 TB-type MSs. A length of the maximum number of supported non-trigger-based sensing measurement setups field is also 4 bits, and the 4 bits may represent 0 to 8 non-TB-type MSs. For example, when the maximum number of supported trigger-based sensing measurement setups field is 0000 (which is equivalent to 0 in decimal notation), it indicates that a total maximum number of TB sensing measurement setups that a device transmitting the sensing element can set up with a device receiving the sensing element is 0; when the maximum number of supported trigger-based sensing measurement setups field is 0001 (which is equivalent to 1 in decimal notation), it indicates that a total maximum number of TB sensing measurement setups that a device transmitting the sensing element can set up with a device receiving the sensing element is 1; the rest can be deduced by analogy; or when the maximum number of supported trigger-based sensing measurement setups field is 1000 (which is equivalent to 8 in decimal notation), it indicates that a total maximum number of TB sensing measurement setups that a device transmitting the sensing element can set up with a device receiving the sensing element is 8. The maximum number of supported non-trigger-based sensing measurement setups field is similar to the maximum number of supported trigger-based sensing measurement setups field. Details are not described again.

It may be understood that, for names and meanings of other fields that are not described in the sensing field shown in FIG. 23, refer to an existing standard, for example, the 802.11bf standard. Details are not described herein. It may be further understood that names, lengths, a sequence, and the like of the maximum number of supported trigger-based sensing measurement setups field and the maximum number of supported non-trigger-based sensing measurement setups field shown in FIG. 23 are merely examples. This is not limited in this embodiment of this application.

In this embodiment of this application, two fields are added to the sensing field in the sensing element, one field indicates a maximum total number of TB sensing measurement setups that the device transmitting the sensing element can set up with the device receiving the sensing element, and the other field indicates a maximum total number of non-TB sensing measurement setups that the device transmitting the sensing element can set up with the device receiving the sensing element. In this way, not only a total number of MSs that may be set up (that is, 0 MSs to 16 MSs) can be indicated, but also types of MSs can be distinguished. In addition, in this embodiment of this application, a length of the sensing field is not changed, thereby facilitating compatibility with an existing protocol.

In some scenarios, a sensing device may not only perform sensing, but also perform communication or another service. A non-sensing service may occupy a sensing resource, and a specific number of occupied resources is determined in real-time. Therefore, even if a sensing initiator and a sensing responder exchange sensing capability information, a new MS may not be set up due to insufficient resources during actual use. In a possible implementation, to set up a new MS, the sensing initiator or the sensing responder may terminate an existing MS to release a resource. In a process of terminating the MS, a sensing measurement setup termination (sensing measurement setup termination) frame needs to be transmitted, and signaling overheads are increased.

In view of this, this embodiment of this application further provides an information indication method in WLAN sensing, to dynamically indicate whether a new MS can be set up, so that sensing measurement setup efficiency can be improved, and signaling overheads can be reduced.

Optionally, both the sensing initiator and the sensing responder in this embodiment of this application may support a WLAN sensing protocol, for example, 802.11bf or a next-generation protocol of 802.11bf.

Embodiment 6

Embodiment 6 of this application mainly describes how to indicate, in a sensing measurement setup (sensing measurement setup) phase, whether a new MS can be set up.

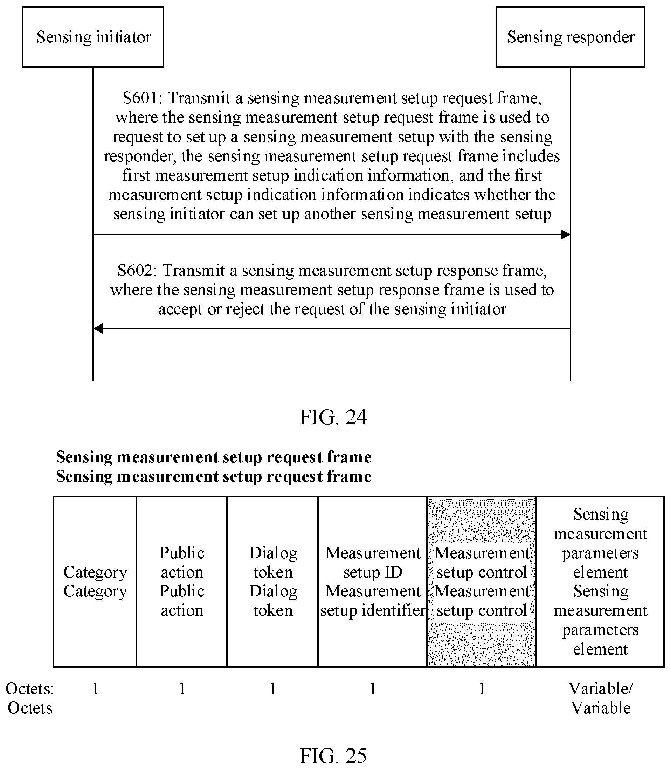

FIG. 24 is a sixth schematic flowchart of an information indication method in WLAN sensing according to an embodiment of this application. The method may be applied to a general sensing procedure (including TB-type sensing measurement and non-TB-type sensing measurement), or may be applied to a sensing by proxy procedure (TB-type sensing measurement). When the method is applied to the sensing by proxy procedure, the method may be jointly implemented with at least one of Embodiment 1 to Embodiment 3. When the method is applied to the sensing by proxy procedure, a sensing initiator in the method may be the AP in FIG. 2, and a sensing responder may be the non-AP STA 2 or the non-AP STA 3 in FIG. 2. When the method is applied to the general sensing procedure, the method may be jointly implemented with Embodiment 4 or Embodiment 5. Certainly, regardless of a sensing procedure to which the method is applied, the method may be separately implemented.

As shown in FIG. 24, the information indication method in WLAN sensing may include but is not limited to the following steps:

S601: The sensing initiator transmits a sensing measurement setup request frame, where the sensing measurement setup request frame is used to request to set up a sensing measurement setup with the sensing responder, the sensing measurement setup request frame includes first measurement setup indication information, and the first measurement setup indication information indicates whether the sensing initiator can set up another sensing measurement setup.

Correspondingly, the sensing responder receives the sensing measurement setup request frame.

S602: The sensing responder transmits a sensing measurement setup response frame, where the sensing measurement setup response frame is used to accept or reject the request of the sensing initiator.

Correspondingly, the sensing initiator receives the sensing measurement setup response frame.

Optionally, in a sensing measurement setup phase, the sensing initiator transmits the sensing measurement setup request (sensing measurement setup request) frame to the sensing responder, to request to set up a sensing measurement setup with the sensing responder. After receiving the sensing measurement setup request frame, the sensing responder replies with the sensing measurement setup response (sensing measurement setup response) frame, to indicate that the sensing measurement setup request (that is, the request of the sensing initiator) is accepted or rejected.

In a possible implementation, the sensing initiator may carry the first measurement setup indication information in the sensing measurement setup request frame, to indicate whether the sensing initiator can set up another sensing measurement setup, or indicate whether the sensing initiator can serve as a sensing responder to set up another sensing measurement setup. In other words, when setting up a current MS, the sensing initiator may indicate whether a new sensing measurement setup can be set up with a peer end. For example, a field may be added to the sensing measurement setup request frame to carry the first measurement setup indication information. FIG. 25 is a diagram of a frame format of a sensing measurement setup request frame according to an embodiment of this application. As shown in FIG. 25, the sensing measurement setup request frame includes but is not limited to a measurement setup control (measurement setup control) field. The measurement setup control field in the sensing measurement setup request frame may be used to carry the first measurement setup indication information. It may be understood that, for meanings of other fields that are not described in FIG. 25, refer to an existing standard. Details are not described herein. It may be further understood that a name and a length of the measurement setup control field in FIG. 25 are merely examples. This is not limited in this embodiment of this application.

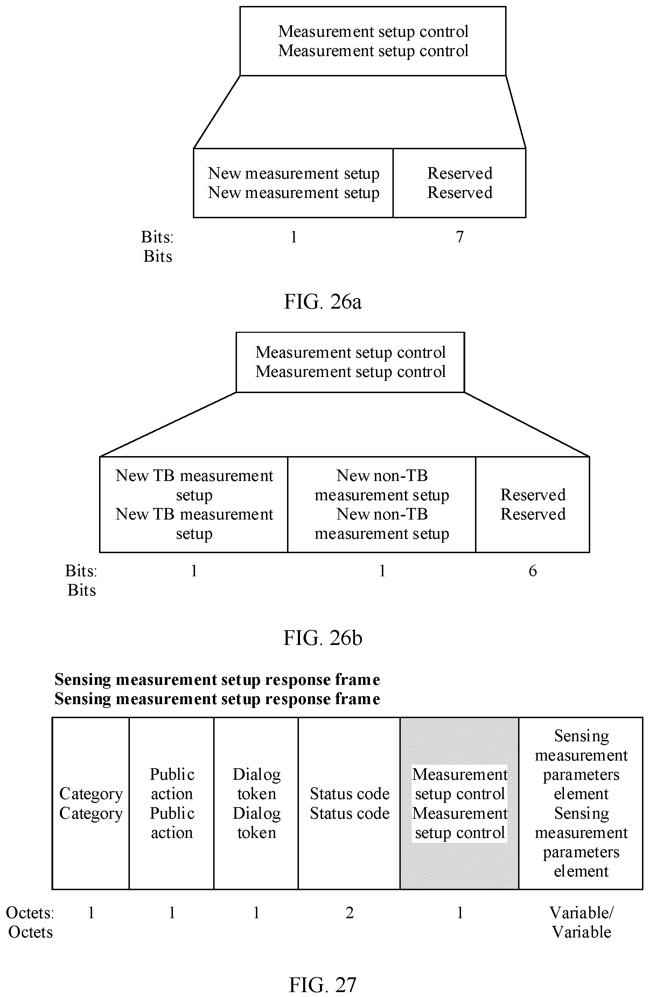

FIG. 26a and FIG. 26b are diagrams of two frame formats of a measurement setup control field according to an embodiment of this application. As shown in FIG. 26a, the measurement setup control field (for example, the first measurement setup indication information) includes but is not limited to a new measurement setup (new measurement setup) field. A length of the new measurement setup field may be 1 bit, and the 1 bit may indicate whether a device transmitting the measurement setup control field can set up a new sensing measurement setup. For example, if the device transmitting the measurement setup control field is an AP (or the sensing initiator is an AP), the new measurement setup field may indicate whether the AP can serve as a sensing responder to set up a new ("new" herein may refer to another) non-TB MS. If the device transmitting the measurement setup control field is a non-AP STA (or the sensing initiator is a non-AP STA), the new measurement setup field may indicate whether the non-AP STA can serve as a sensing responder to set up a new ("new" herein may refer to another) TB MS.

As shown in FIG. 26b, the measurement setup control field (for example, the first measurement setup indication information) includes but is not limited to a new TB measurement setup (new TB measurement setup) field and a new non-TB measurement setup (new non-TB measurement setup) field. A length of the new TB measurement setup field may be 1 bit, and the 1 bit may indicate whether a device transmitting the measurement setup control field can set up another TB-type sensing measurement setup. A length of the new non-TB measurement setup field may be 1 bit, and the 1 bit may indicate whether the device transmitting the measurement setup control field can set up another non-TB-type sensing measurement setup.

It may be understood that names and lengths of the fields in FIG. 26a and FIG. 26b are merely examples. This is not limited in this embodiment of this application.

Optionally, the sensing responder may also carry second measurement setup indication information in the sensing measurement setup response frame, to indicate whether the sensing responder can set up another sensing measurement setup, or indicate whether the sensing responder can serve as a sensing responder to set up another sensing measurement setup. In other words, when setting up a current MS, the sensing responder may also indicate whether a new sensing measurement setup can be set up with a peer end. For example, a field may be added to the sensing measurement setup response frame to carry the second measurement setup indication information. FIG. 27 is a diagram of a frame format of a sensing measurement setup response frame according to an embodiment of this application. As shown in FIG. 27, the sensing measurement setup response frame includes but is not limited to a measurement setup control (measurement setup control) field. The measurement setup control field in the sensing measurement setup response frame may be used to carry the second measurement setup indication information. For example, a frame format of the measurement setup control field is shown in FIG. 26a and FIG. 26b. Details are not described herein again. It may be understood that, for meanings of other fields that are not described in FIG. 27, refer to an existing standard. Details are not described herein. It may be further understood that a name, a length, a sequence, and the like of the measurement setup control field in FIG. 27 are merely examples. This is not limited in this embodiment of this application.

For example, when the measurement setup control field in the sensing measurement setup response frame uses the frame format shown in FIG. 26a, if the device transmitting the measurement setup control field is an AP (or the sensing responder is an AP), the new measurement setup field may indicate whether the AP can serve as a sensing responder to set up a new ("new" herein may refer to another) non-TB MS. If the device transmitting the measurement setup control field is a non-AP STA (or the sensing responder is a non-AP STA), the new measurement setup field may indicate whether the non-AP STA can serve as a sensing responder to set up a new ("new" herein may refer to another) TB MS.

In some possible implementations, before the sensing measurement setup phase, the sensing initiator and the sensing responder may perform coarse indication in the sensing session setup phase, to indicate whether the sensing initiator and the sensing responder can set up a TB-type sensing measurement setup and a non-TB-type sensing measurement setup. In this case, before step S601, the information indication method in WLAN sensing may further include: The sensing initiator and the sensing responder exchange respective sensing capability information using a sensing element (sensing element). The sensing element includes indication information A that indicates whether a device transmitting the sensing element supports to set up one or more of the following MSs: a TB-type MS or a non-TB-type MS. For example, a field may be added to the sensing field in the sensing element to carry the indication information A.

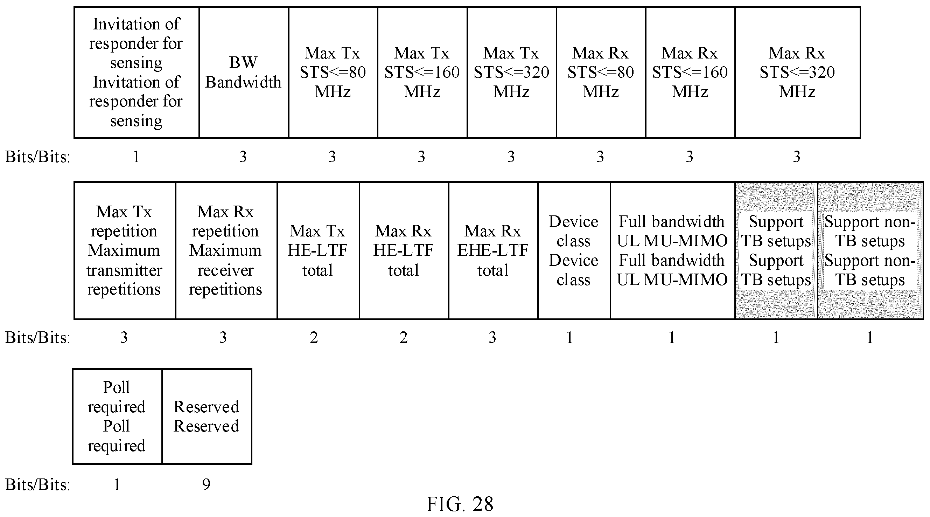

For example, FIG. 28 is a diagram of still another frame format of a sensing field in a sensing element according to an embodiment of this application. As shown in FIG. 28, the sensing field includes but is not limited to a support TB setups (support TB setups) field and a support non-TB setups (support non-TB setups) field. A length of the support TB setups field may be 1 bit, and the 1 bit may indicate whether the device transmitting the sensing element supports to set up the TB MS. A length of the support non-TB setups field may also be 1 bit, and the 1 bit may indicate whether the device transmitting the sensing element supports to set up the non-TB MS. It may be understood that, for meanings of other fields that are not described in FIG. 28, refer to an existing standard. Details are not described herein. It may be further understood that names and lengths of the support TB setups field and the support non-TB setups field in FIG. 28 are merely examples. This is not limited in this embodiment of this application.

It may be further understood that the indication information A in FIG. 28 is implemented using the support TB setups field and the support non-TB setups field.

In this embodiment of this application, in the sensing measurement setup phase, whether a new sensing measurement setup can be set up is indicated by measurement indication information, so that two exchange parties learn of respective capabilities, to avoid a case in which one party still transmits the sensing measurement setup request frame to the other party to request to set up a new sensing measurement setup when the other party cannot set up the new sensing measurement setup. In this way, sensing measurement setup efficiency is improved, and there is no need to terminate an existing sensing measurement setup to release a resource, that is, there is no need to transmit a sensing measurement setup termination frame, thereby reducing signaling overheads. In addition, if resources (for example, storage space) reserved by a device for a sensing service are not used up, but the device has notified, through the measurement indication information, another device that the device cannot set up a new sensing measurement setup, the device may release an unused resource in the resources reserved for the sensing service, to reduce impact on another service (that is, a non-sensing service).

The foregoing describes in detail the methods in this application. To better implement the foregoing solutions in embodiments of this application, embodiments of this application further provide corresponding apparatuses or devices.

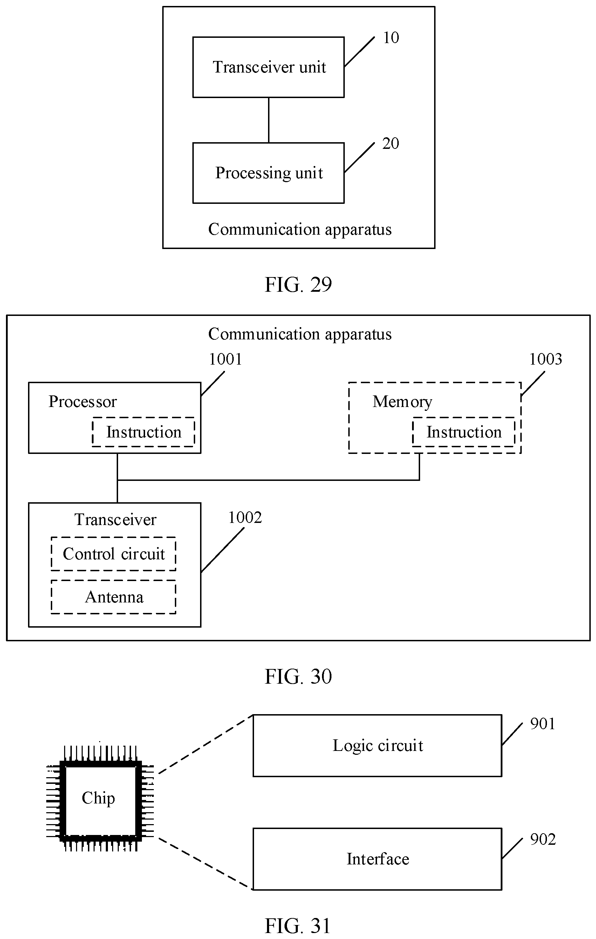

In this application, functional modules of the sensing by proxy initiator, the sensing by proxy responder, the first communication apparatus, the second communication apparatus, the sensing initiator, the sensing responder, and the like are divided based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, division into the modules is an example, and is merely logical function division. In actual implementation, another division manner may be used. The following describes in detail communication apparatuses in embodiments of this application with reference to FIG. 29 to FIG. 31.

FIG. 29 is a diagram of a structure of a communication apparatus according to an embodiment of this application. As shown in FIG. 29, the communication apparatus includes a transceiver unit 10 and a processing unit 20.

In some embodiments of this application, the communication apparatus may be the sensing by proxy initiator (non-AP STA) shown above or a chip in the sensing by proxy initiator, for example, a Wi-Fi chip. In other words, the communication apparatus shown in FIG. 29 may be configured to perform steps, functions, or the like performed by the sensing by proxy initiator (AP) in the foregoing method embodiments.

In a design, the transceiver unit 10 is configured to: transmit a sensing by proxy request frame, and receive a sensing by proxy response frame. The sensing by proxy request frame includes addresses of N sensing responders, an address of one sensing responder is used to identify one sensing responder, the sensing by proxy request frame further includes first indication information, and the first indication information indicates whether the N sensing responders participate in one or more of the following sensing measurement: TF sounding, NDPA sounding, or SR2SR sounding. N is an integer greater than or equal to 1.

Optionally, the processing unit 20 is configured to generate the sensing by proxy request frame.

For specific descriptions of the sensing by proxy request frame, the first indication information, the sensing by proxy response frame, and the like, refer to the method Embodiment 1 shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method Embodiment 1. Details are not described herein again. For example, the processing unit 20 may be configured to generate the sensing by proxy request frame transmitted in step S101 shown in FIG. 5, and the transceiver unit 10 may be configured to perform step S101 shown in FIG. 5.

In another design, the transceiver unit 10 is configured to: transmit a sensing by proxy request frame, and receive a sensing by proxy response frame. The sensing by proxy request frame includes addresses of N sensing responders, an address of one sensing responder is used to identify one sensing responder, the sensing by proxy request frame further includes role indication information, and the role indication information indicates roles of the N sensing responders in a sensing measurement instance. The role includes any one of the following: a sensing transmitter, a sensing receiver, and a sensing transmitter and a sensing receiver. N is an integer greater than or equal to 1.

Optionally, the processing unit 20 is configured to generate the sensing by proxy request frame.

For specific descriptions of the sensing by proxy request frame, the role indication information, the sensing by proxy response frame, and the like, refer to the method Embodiment 2 shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method Embodiment 2. Details are not described herein again. For example, the processing unit 20 may be configured to generate the sensing by proxy request frame transmitted in step S201 shown in FIG. 11, and the transceiver unit 10 may be configured to perform step S201 shown in FIG. 11.

FIG. 29 is reused. In some other embodiments of this application, the communication apparatus may be the sensing by proxy responder (AP) shown above, or a chip in the sensing by proxy responder (AP), for example, a Wi-Fi chip. In other words, the communication apparatus shown in FIG. 29 may be configured to perform steps, functions, or the like performed by the sensing by proxy responder (AP) in the foregoing method embodiments.

In a design, the transceiver unit 10 is configured to receive a sensing by proxy request frame, and transmit a sensing by proxy response frame. The sensing by proxy request frame includes addresses of N sensing responders, an address of one sensing responder is used to identify one sensing responder, the sensing by proxy request frame further includes first indication information, and the first indication information indicates whether the N sensing responders participate in one or more of the following sensing measurement: TF sounding, NDPA sounding, or SR2SR sounding. N is an integer greater than or equal to 1.

Optionally, the processing unit 20 is configured to generate the sensing by proxy response frame.

For specific descriptions of the sensing by proxy request frame, the first indication information, the sensing by proxy response frame, and the like, refer to the method Embodiment 1 shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method Embodiment 1. Details are not described herein again. For example, the processing unit 20 may be configured to generate the sensing by proxy response frame transmitted in step S102 shown in FIG. 5, and the transceiver unit 10 may be configured to perform step S102 shown in FIG. 5.

In another design, the transceiver unit 10 is configured to: receive a sensing by proxy request frame, and transmit a sensing by proxy response frame. The sensing by proxy request frame includes addresses of N sensing responders, an address of one sensing responder is used to identify one sensing responder, the sensing by proxy request frame further includes role indication information, and the role indication information indicates roles of the N sensing responders in a sensing measurement instance. The roles include any one of the following: a sensing transmitter, a sensing receiver, and a sensing transmitter and a sensing receiver. N is an integer greater than or equal to 1.

Optionally, the processing unit 20 is configured to generate the sensing by proxy response frame.

For specific descriptions of the sensing by proxy request frame, the role indication information, the sensing by proxy response frame, and the like, refer to the method Embodiment 2 shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method Embodiment 2. Details are not described herein again. For example, the processing unit 20 may be configured to generate the sensing by proxy response frame transmitted in step S202 shown in FIG. 11, and the transceiver unit 10 may be configured to perform step S202 shown in FIG. 11.

FIG. 29 is reused. In still some embodiments of this application, the communication apparatus may be the first communication apparatus shown above or a chip in the first communication apparatus, for example, a Wi-Fi chip. In other words, the communication apparatus shown in FIG. 29 may be configured to perform steps, functions, or the like performed by the first communication apparatus in the foregoing method embodiments.

In a design, the processing unit 20 is configured to generate a first sensing element, and the transceiver unit 10 is configured to transmit the first sensing element to a second communication apparatus. The first sensing element is used by a first communication apparatus to exchange sensing capability information with the second communication apparatus, the first sensing element includes a first field, a length of the first field is greater than 4 bits, and the first field indicates a maximum total number of sensing measurement setups that the first communication apparatus can set up with the second communication apparatus.

Optionally, the transceiver unit 10 is further configured to receive a second sensing element transmitted by the second communication apparatus. The second sensing element is used by the second communication apparatus to exchange sensing capability information with the first communication apparatus, the second sensing element includes a second field, a length of the second field is greater than 4 bits, and the second field indicates a maximum total number of sensing measurement setups that the second communication apparatus can set up with the first communication apparatus.

For specific descriptions of the first sensing element, the second sensing element, the first field, the second field, and the like, refer to the method Embodiment 4 shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method Embodiment 4. Details are not described herein again. For example, the processing unit 20 may be configured to perform step S401 shown in FIG. 20, and the transceiver unit 10 may be configured to perform step S402 and step S404 shown in FIG. 20.

In another design, the processing unit 20 is configured to generate a first sensing element, and the transceiver unit 10 is configured to transmit the first sensing element to a second communication apparatus. The first sensing element is used by a first communication apparatus to exchange sensing capability information with the second communication apparatus, the first sensing element includes a first field and a second field, the first field indicates a maximum total number of trigger-based sensing measurement setups that the first communication apparatus can set up with the second communication apparatus, and the second field indicates a maximum total number of non-trigger-based sensing measurement setups that the first communication apparatus can set up with the second communication apparatus.

Optionally, the transceiver unit 10 is further configured to receive a second sensing element transmitted by the second communication apparatus. The second sensing element is used by the second communication apparatus to exchange sensing capability information with the first communication apparatus, a third field included in the second sensing element indicates a maximum total number of trigger-based sensing measurement setups that the second communication apparatus can set up with the first communication apparatus, and a fourth field included in the second sensing element indicates a maximum total number of non-trigger-based sensing measurement setups that the second communication apparatus can set up with the first communication apparatus.

For specific descriptions of the first sensing element, the second sensing element, the first field, the second field, the third field, the fourth field, and the like, refer to the method Embodiment 5 shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method Embodiment 5. Details are not described herein again. For example, the processing unit 20 may be configured to perform step S501 shown in FIG. 22, and the transceiver unit 10 may be configured to perform step S502 and step S504 shown in FIG. 22.

FIG. 29 is reused. In still some other embodiments of this application, the communication apparatus may be the second communication apparatus shown above or a chip in the second communication apparatus, for example, a Wi-Fi chip. In other words, the communication apparatus shown in FIG. 29 may be configured to perform steps, functions, or the like performed by the second communication apparatus in the foregoing method embodiments.

In a design, the transceiver unit 10 is configured to receive a first sensing element transmitted by a first communication apparatus, where the first sensing element is used by the first communication apparatus to exchange sensing capability information with a second communication apparatus, and the processing unit 20 is configured to parse the first sensing element to obtain a maximum total number of sensing measurement setups that the first communication apparatus can set up with the second communication apparatus. The first sensing element includes a first field, a length of the first field is greater than 4 bits, and the first field indicates the maximum total number of sensing measurement setups that the first communication apparatus can set up with the second communication apparatus.

Optionally, the transceiver unit 10 is further configured to transmit a second sensing element to the first communication apparatus. The second sensing element is used by the second communication apparatus to exchange sensing capability information with the first communication apparatus, the second sensing element includes a second field, a length of the second field is greater than 4 bits, and the second field indicates a maximum total number of sensing measurement setups that the second communication apparatus can set up with the first communication apparatus.

For specific descriptions of the first sensing element, the second sensing element, the first field, the second field, and the like, refer to the method Embodiment 4 shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method Embodiment 4. Details are not described herein again. For example, the transceiver unit 10 may be configured to: receive the first sensing element, and transmit the second sensing element, and the processing unit 20 may be configured to perform step S403 shown in FIG. 20.

In another design, the transceiver unit 10 is configured to receive a first sensing element transmitted by a first communication apparatus, where the first sensing element is used by the first communication apparatus to exchange sensing capability information with a second communication apparatus; and the processing unit 20 is configured to parse the first sensing element, to obtain a maximum total number of trigger-based sensing measurement setups that the first communication apparatus can set up with the second communication apparatus and a maximum total number of non-trigger-based sensing measurement setups that the first communication apparatus can set up with the second communication apparatus. The first sensing element includes a first field and a second field, the first field indicates the maximum total number of trigger-based sensing measurement setups that the first communication apparatus can set up with the second communication apparatus, and the second field indicates the maximum total number of non-trigger-based sensing measurement setups that the first communication apparatus can set up with the second communication apparatus.

Optionally, the transceiver unit 10 is further configured to transmit a second sensing element to the first communication apparatus. The second sensing element is used by the second communication apparatus to exchange sensing capability information with the first communication apparatus, a third field included in the second sensing element indicates a maximum total number of trigger-based sensing measurement setups that the second communication apparatus can set up with the first communication apparatus, and a fourth field included in the second sensing element indicates a maximum total number of non-trigger-based sensing measurement setups that the second communication apparatus can set up with the first communication apparatus.

For specific descriptions of the first sensing element, the second sensing element, the first field, the second field, the third field, the fourth field, and the like, refer to the method Embodiment 5 shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method Embodiment 5. Details are not described herein again. For example, the transceiver unit 10 may be configured to: receive the first sensing element, and transmit the second sensing element, and the processing unit 20 may be configured to perform step S503 shown in FIG. 22.

FIG. 29 is reused. In still some other embodiments of this application, the communication apparatus may be the sensing initiator shown above or a chip in the sensing initiator, for example, a Wi-Fi chip. In other words, the communication apparatus shown in FIG. 29 may be configured to perform steps, functions, or the like performed by the sensing initiator in the foregoing method embodiments.

The transceiver unit 10 is configured to: transmit a sensing measurement setup request frame, and receive a sensing measurement setup response frame, where the sensing measurement setup response frame is used to accept or reject a request of the sensing initiator. The sensing measurement setup request frame is used to request to set up one sensing measurement setup with a sensing responder, the sensing measurement setup request frame includes first measurement setup indication information, and the first measurement setup indication information indicates whether the sensing initiator can set up another sensing measurement setup.

Optionally, the processing unit 20 is configured to generate the sensing measurement setup request frame.

For specific descriptions of the sensing measurement setup request frame, the sensing measurement setup response frame, the first measurement setup indication information, and the like, refer to the method Embodiment 6 shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method Embodiment 6. Details are not described herein again. For example, the processing unit 20 may be configured to generate the sensing measurement setup request frame transmitted in step S601 shown in FIG. 24, and the transceiver unit 10 may be configured to perform step S601 shown in FIG. 24.

FIG. 29 is reused. In still some other embodiments of this application, the communication apparatus may be the sensing responder shown above or a chip in the sensing responder, for example, a Wi-Fi chip. In other words, the communication apparatus shown in FIG. 29 may be configured to perform steps, functions, or the like performed by the sensing responder in the foregoing method embodiments.

The transceiver unit 10 is configured to: receive a sensing measurement setup request frame, and transmit a sensing measurement setup response frame, where the sensing measurement setup response frame is used to accept or reject a request of a sensing initiator. The sensing measurement setup request frame is used to request to set up one sensing measurement setup with the sensing responder, the sensing measurement setup request frame includes first measurement setup indication information, and the first measurement setup indication information indicates whether the sensing initiator can set up another sensing measurement setup.

Optionally, the processing unit 20 is configured to generate a sensing measurement setup response frame.

For specific descriptions of the sensing measurement setup request frame, the sensing measurement setup response frame, the first measurement setup indication information, and the like, refer to the method Embodiment 6 shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method Embodiment 6. Details are not described herein again. For example, the processing unit 20 may be configured to generate the sensing measurement setup response frame transmitted in step S602 shown in FIG. 24, and the transceiver unit 10 may be configured to perform step S602 shown in FIG. 24.

The foregoing describes the communication apparatus in embodiments of this application. The following describes a possible product form of the communication apparatus. It should be understood that any form of product that has a function of the communication apparatus in FIG. 29 falls within the protection scope of embodiments of this application. It should be further understood that the following descriptions are merely examples, and the product form of the communication apparatus in this embodiment of this application is not limited thereto.

In a possible implementation, in the communication apparatus shown in FIG. 29, the processing unit 20 may be one or more processors, and the transceiver unit 10 may be a transceiver; or the transceiver unit 10 may be a transmitting unit and a receiving unit, the transmitting unit may be a transmitter, the receiving unit may be a receiver, and the transmitting unit and the receiving unit are integrated into one device, for example, a transceiver. In this embodiment of this application, the processor and the transceiver may be coupled, or the like. A connection manner between the processor and the transceiver is not limited in this embodiment of this application. In a process of performing the foregoing methods, a process of transmitting information (for example, transmitting various frames or elements) in the foregoing methods may be understood as a process of outputting the foregoing information by the processor. When outputting the information, the processor outputs the information to the transceiver, so that the transceiver transmits the information. After the information is output by the processor, other processing may further need to be performed on the information before the information arrives at the transceiver. Similarly, a process of receiving information (for example, receiving various frames or elements) in the foregoing methods may be understood as a process of receiving the input information by the processor. When the processor receives the input information, the transceiver receives the information, and inputs the information into the processor. Further, after the transceiver receives the information, other processing may further need to be performed on the information before the information is input into the processor.

FIG. 30 is a diagram of another structure of a communication apparatus according to an embodiment of this application. The communication apparatus may be a sensing by proxy initiator, a sensing by proxy responder, a first communication apparatus, a second communication apparatus, a sensing initiator, a sensing responder, or a chip therein. FIG. 30 shows only main components of the communication apparatus. In addition to a processor 1001 and a transceiver 1002, the communication apparatus may further include a memory 1003 and an input/output apparatus (not shown in the figure).

The processor 1001 is mainly configured to: process a communication protocol and communication data, control the entire communication apparatus, execute a software program, and process data of the software program. The memory 1003 is mainly configured to store the software program and the data. The transceiver 1002 may include a control circuit and an antenna. The control circuit is mainly configured to: perform conversion between a baseband signal and a radio frequency signal, and process the radio frequency signal. The antenna is mainly configured to receive/transmit a radio frequency signal in a form of an electromagnetic wave. The input/output apparatus, for example, a touchscreen, a display, or a keyboard, is mainly configured to: receive data input by a user, and output data to the user.

After the communication apparatus is powered on, the processor 1001 may read the software program in the memory 1003, interpret and execute instructions of the software program, and process the data of the software program. When data needs to be transmitted wirelessly, the processor 1001 performs baseband processing on the to-be-transmitted data, and outputs a baseband signal to a radio frequency circuit; and the radio frequency circuit performs radio frequency processing on the baseband signal, and then transmits a radio frequency signal to the outside through the antenna in a form of an electromagnetic wave. When data is transmitted to the communication apparatus, the radio frequency circuit receives a radio frequency signal through the antenna, converts the radio frequency signal into a baseband signal, and outputs the baseband signal to the processor 1001; and the processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely independent of the communication apparatus.

The transceiver 1002 may include a receiver and a transmitter. The receiver is configured to perform a receiving function (or operation), and the transmitter is configured to perform a transmitting function (or operation). The transceiver is configured to communicate with another device/apparatus through a transmission medium.

The processor 1001, the transceiver 1002, and the memory 1003 may be connected through a communication bus.

For example, when the communication apparatus is configured to perform steps, methods, or functions performed by the sensing by proxy initiator, the transceiver 1002 is configured to: transmit a sensing by proxy request frame, and receive a sensing by proxy response frame. Optionally, the processor 1001 is configured to generate the sensing by proxy request frame. The sensing by proxy request frame includes addresses of N sensing responders, an address of one sensing responder is used to identify one sensing responder, the sensing by proxy request frame further includes first indication information, and the first indication information indicates whether the N sensing responders participate in one or more of the following sensing measurement: TF sounding, NDPA sounding, or SR2SR sounding.

For example, when the communication apparatus is configured to perform steps, methods, or functions performed by the sensing by proxy responder, the transceiver 1002 is configured to: receive a sensing by proxy request frame, and transmit a sensing by proxy response frame. Optionally, the processor 1001 is configured to generate the sensing by proxy response frame. The sensing by proxy request frame includes addresses of N sensing responders, an address of one sensing responder is used to identify one sensing responder, the sensing by proxy request frame further includes first indication information, and the first indication information indicates whether the N sensing responders participate in one or more of the following sensing measurement: TF sounding, NDPA sounding, or SR2SR sounding.

In this embodiment of this application, for descriptions of the sensing by proxy request frame, the sensing by proxy response frame, the first indication information, the sensing by proxy initiator, the sensing by proxy responder, and the like, refer to descriptions in the foregoing method Embodiment 1. Details are not described herein again. It may be understood that for specific descriptions of the processor and the transceiver, refer to descriptions of the processing unit and the transceiver unit shown in FIG. 29. Details are not described herein again.

For example, when the communication apparatus is configured to perform steps, methods, or functions performed by the sensing by proxy initiator, the transceiver 1002 is configured to: transmit a sensing by proxy request frame, and receive a sensing by proxy response frame. Optionally, the processor 1001 is configured to generate the sensing by proxy request frame. The sensing by proxy request frame includes addresses of N sensing responders, an address of one sensing responder is used to identify one sensing responder, the sensing by proxy request frame further includes role indication information, the role indication information indicates roles of the N sensing responders in a sensing measurement instance, and the roles include any one of the following: a sensing transmitter, a sensing receiver, and a sensing transmitter and a sensing receiver.

For example, when the communication apparatus is configured to perform steps, methods, or functions performed by the sensing by proxy responder, the transceiver 1002 is configured to: receive a sensing by proxy request frame, and transmit a sensing by proxy response frame. Optionally, the processor 1001 is configured to generate the sensing by proxy response frame. The sensing by proxy request frame includes addresses of N sensing responders, an address of one sensing responder is used to identify one sensing responder, the sensing by proxy request frame further includes role indication information, the role indication information indicates roles of the N sensing responders in a sensing measurement instance, and the roles include any one of the following: a sensing transmitter, a sensing receiver, and a sensing transmitter and a sensing receiver.

In this embodiment of this application, for descriptions of the sensing by proxy request frame, the sensing by proxy response frame, the role indication information, the sensing by proxy initiator, the sensing by proxy responder, and the like, refer to descriptions in the foregoing method Embodiment 2. Details are not described herein again. It may be understood that for specific descriptions of the processor and the transceiver, refer to descriptions of the processing unit and the transceiver unit shown in FIG. 29. Details are not described herein again.

For example, when the communication apparatus is configured to perform steps, methods, or functions performed by the first communication apparatus, the processor 1001 is configured to generate a first sensing element, and the transceiver 1002 is configured to transmit the first sensing element. The first sensing element is used by a first communication apparatus to exchange sensing capability information with a second communication apparatus, the first sensing element includes a first field, a length of the first field is greater than 4 bits, and the first field indicates a maximum total number of sensing measurement setups that the first communication apparatus can set up with the second communication apparatus.

For example, when the communication apparatus is configured to perform steps, methods, or functions performed by the second communication apparatus, the transceiver 1002 is configured to receive a first sensing element, where the first sensing element is used by a first communication apparatus to exchange sensing capability information with a second communication apparatus, and the processor 1001 is configured to parse the first sensing element, to obtain a maximum total number of sensing measurement setups that the first communication apparatus can set up with the second communication apparatus. The first sensing element includes a first field, a length of the first field is greater than 4 bits, and the first field indicates the maximum total number of sensing measurement setups that the first communication apparatus can set up with the second communication apparatus.

In this embodiment of this application, for descriptions of the first sensing element, the first field, the first communication apparatus, the second communication apparatus, and the like, refer to descriptions in the foregoing method Embodiment 4. Details are not described herein again. It may be understood that for specific descriptions of the processor and the transceiver, refer to descriptions of the processing unit and the transceiver unit shown in FIG. 29. Details are not described herein again.

For example, when the communication apparatus is configured to perform steps, methods, or functions performed by the first communication apparatus, the processor 1001 is configured to generate a first sensing element, and the transceiver 1002 is configured to transmit the first sensing element. The first sensing element is used by a first communication apparatus to exchange sensing capability information with a second communication apparatus, the first sensing element includes a first field and a second field, the first field indicates a maximum total number of trigger-based sensing measurement setups that the first communication apparatus can set up with the second communication apparatus, and the second field indicates a maximum total number of non-trigger-based sensing measurement setups that the first communication apparatus can set up with the second communication apparatus.

For example, when the communication apparatus is configured to perform steps, methods, or functions performed by the second communication apparatus, the transceiver 1002 is configured to receive a first sensing element, where the first sensing element is used by a first communication apparatus to exchange sensing capability information with a second communication apparatus, and the processor 1001 is configured to parse the first sensing element, to obtain a maximum total number of trigger-based sensing measurement setups that the first communication apparatus can set up with the second communication apparatus and a maximum total number of non-trigger-based sensing measurement setups that the first communication apparatus can set up with the second communication apparatus. The first sensing element includes a first field and a second field, the first field indicates the maximum total number of trigger-based sensing measurement setups that the first communication apparatus can set up with the second communication apparatus, and the second field indicates the maximum total number of non-trigger-based sensing measurement setups that the first communication apparatus can set up with the second communication apparatus.

In this embodiment of this application, for descriptions of the first sensing element, the first field, the second field, the first communication apparatus, the second communication apparatus, and the like, refer to descriptions in the foregoing method Embodiment 5. Details are not described herein again. It may be understood that for specific descriptions of the processor and the transceiver, refer to descriptions of the processing unit and the transceiver unit shown in FIG. 29. Details are not described herein again.

For example, when the communication apparatus is configured to perform steps, methods, or functions performed by the sensing initiator, the transceiver 1002 is configured to: transmit a sensing measurement setup request frame, and receive a sensing measurement setup response frame, where the sensing measurement setup response frame is used to accept or reject a request of a sensing initiator. Optionally, the processor 1001 is configured to generate the sensing measurement setup request frame. The sensing measurement setup request frame is used to request to set up one sensing measurement setup with a sensing responder, the sensing measurement setup request frame includes first measurement setup indication information, and the first measurement setup indication information indicates whether the sensing initiator can set up another sensing measurement setup.

For example, when the communication apparatus is configured to perform steps, methods, or functions performed by the sensing responder, the transceiver 1002 is configured to: receive a sensing measurement setup request frame, and transmit a sensing measurement setup response frame, where the sensing measurement setup response frame is used to accept or reject a request of a sensing initiator. Optionally, the processor 1001 is configured to generate the sensing measurement setup response frame. The sensing measurement setup request frame is used to request to set up one sensing measurement setup with a sensing responder, the sensing measurement setup request frame includes first measurement setup indication information, and the first measurement setup indication information indicates whether the sensing initiator can set up another sensing measurement setup.

In this embodiment of this application, for descriptions of the sensing measurement setup request frame, the sensing measurement setup response frame, the first measurement setup indication information, the sensing initiator, the sensing responder, and the like, refer to descriptions in the foregoing method Embodiment 6. Details are not described herein again. It may be understood that for specific descriptions of the processor and the transceiver, refer to descriptions of the processing unit and the transceiver unit shown in FIG. 29. Details are not described herein again.

Optionally, the processor 1001 may store instructions. The instructions may be a computer program. The computer program is run on the processor 1001, to enable the communication apparatus to perform the methods described in the foregoing method embodiments. The computer program may be solidified in the processor 1001. In this case, the processor 1001 may be implemented by hardware.

In an implementation, the communication apparatus may include a circuit. The circuit may implement the transmitting, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), gallium arsenide (GaAs), and the like.

It may be understood that the communication apparatus shown in this embodiment of this application may further have more components than those in FIG. 30. This is not limited in this embodiment of this application. The foregoing methods performed by the processor and the transceiver are merely examples. For specific steps performed by the processor and the transceiver, refer to descriptions in the foregoing method embodiments.

In another possible implementation, in the communication apparatus shown in FIG. 29, the processing unit 20 may be one or more logic circuits, and the transceiver unit 10 may be an input/output interface, or may be referred to as a communication interface, an interface circuit, an interface, or the like. Alternatively, the transceiver unit 10 may be a transmitting unit and a receiving unit. The transmitting unit may be an output interface, and the receiving unit may be an input interface. The transmitting unit and the receiving unit are integrated into one unit, for example, an input/output interface. FIG. 31 is a diagram of still another structure of a communication apparatus according to an embodiment of this application. As shown in FIG. 31, the communication apparatus shown in FIG. 31 includes a logic circuit 901 and an interface 902. In other words, the processing unit 20 may be implemented by using the logic circuit 901, and the transceiver unit 10 may be implemented by using the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 31 shows an example in which the communication apparatus is a chip, and the chip includes the logic circuit 901 and the interface 902.

In this embodiment of this application, the logic circuit and the interface may be coupled to each other. A specific connection manner between the logic circuit and the interface is not limited in this embodiment of this application.

For example, when the communication apparatus is configured to perform steps, methods, or functions performed by the sensing by proxy initiator, the interface 902 is configured to: transmit a sensing by proxy request frame, and receive a sensing by proxy response frame. Optionally, the logic circuit 901 is configured to generate the sensing by proxy request frame.

For example, when the communication apparatus is configured to perform steps, methods, or functions performed by the sensing by proxy responder, the interface 902 is configured to: receive a sensing by proxy request frame, and transmit a sensing by proxy response frame. Optionally, the logic circuit 901 is configured to generate the sensing by proxy response frame.

In this embodiment of this application, for descriptions of the sensing by proxy request frame, the sensing by proxy response frame, the sensing by proxy initiator, the sensing by proxy responder, and the like, refer to descriptions in the foregoing method Embodiment 1, method Embodiment 2, or method Embodiment 3. Details are not described herein again. It may be understood that for specific descriptions of the logic circuit 901 and the interface 902, refer to descriptions of the processing unit and the transceiver unit shown in FIG. 29. Details are not described herein again.

For example, when the communication apparatus is configured to perform steps, methods, or functions performed by the first communication apparatus, the logic circuit 901 is configured to generate a first sensing element, and the interface 902 is configured to transmit the first sensing element.

For example, when the communication apparatus is configured to perform steps, methods, or functions performed by the second communication apparatus, the interface 902 is configured to receive a first sensing element, where the first sensing element is used by a first communication apparatus to exchange sensing capability information with a second communication apparatus, and the logic circuit 901 is configured to parse the first sensing element.

In this embodiment of this application, for descriptions of the first sensing element, the first communication apparatus, the second communication apparatus, and the like, refer to descriptions in the foregoing method Embodiment 4 or method Embodiment 5. Details are not described herein again. It may be understood that for specific descriptions of the processor and the transceiver, refer to descriptions of the processing unit and the transceiver unit shown in FIG. 29. Details are not described herein again.

For example, when the communication apparatus is configured to perform steps, methods, or functions performed by the sensing initiator, the interface 902 is configured to: transmit a sensing measurement setup request frame, and receive a sensing measurement setup response frame, where the sensing measurement setup response frame is used to accept or reject a request of a sensing initiator. Optionally, the logic circuit 901 is configured to generate the sensing measurement setup request frame.

For example, when the communication apparatus is configured to perform steps, methods, or functions performed by the sensing responder, the interface 902 is configured to: receive a sensing measurement setup request frame, and transmit a sensing measurement setup response frame, where the sensing measurement setup response frame is used to accept or reject a request of a sensing initiator. Optionally, the logic circuit 901 is configured to generate the sensing measurement setup response frame.

In this embodiment of this application, for descriptions of the sensing measurement setup request frame, the sensing measurement setup response frame, the first measurement setup indication information, the sensing initiator, the sensing responder, and the like, refer to descriptions in the foregoing method Embodiment 6. Details are not described herein again. It may be understood that for specific descriptions of the processor and the transceiver, refer to descriptions of the processing unit and the transceiver unit shown in FIG. 29. Details are not described herein again.

It may be understood that the communication apparatus shown in this embodiment of this application may implement the methods provided in embodiments of this application in a form of hardware, or may implement the methods provided in embodiments of this application in a form of software. This is not limited in this embodiment of this application.

For specific implementations of embodiments shown in FIG. 31, refer to the foregoing embodiments. Details are not described herein.

An embodiment of this application further provides a wireless communication system. The wireless communication system includes a sensing by proxy initiator and a sensing by proxy responder. The sensing by proxy initiator and the sensing by proxy responder may be configured to perform the method in any one of the foregoing method Embodiments 1 to 3.

An embodiment of this application further provides a wireless communication system. The wireless communication system includes a first communication apparatus and a second communication apparatus. The first communication apparatus and the second communication apparatus may be configured to perform the method in the foregoing method Embodiment 4 or 5.

An embodiment of this application further provides a wireless communication system. The wireless communication system includes a sensing initiator and a sensing responder. The sensing initiator and the sensing responder may be configured to perform the method in the foregoing method Embodiment 6.

In addition, this application further provides a computer program. The computer program is used to implement operations and/or processing performed by the sensing by proxy initiator in the methods provided in this application.

This application further provides a computer program. The computer program is used to implement operations and/or processing performed by the sensing by proxy responder in the methods provided in this application.

This application further provides a computer program. The computer program is configured to implement operations and/or processing performed by the first communication apparatus in the methods provided in this application.

This application further provides a computer program. The computer program is used to implement operations and/or processing performed by the second communication apparatus in the methods provided in this application.

This application further provides a computer program. The computer program is configured to implement operations and/or processing performed by the sensing initiator in the methods provided in this application.

This application further provides a computer program. The computer program is configured to implement operations and/or processing performed by the sensing responder in the methods provided in this application.

This application further provides a computer-readable storage medium. The computer-readable storage medium stores computer code, and when the computer code is run on a computer, the computer is enabled to perform operations and/or processing performed by the sensing by proxy initiator in the methods provided in this application.

This application further provides a computer-readable storage medium. The computer-readable storage medium stores computer code, and when the computer code is run on a computer, the computer is enabled to perform operations and/or processing performed by the sensing by proxy responder in the methods provided in this application.

This application further provides a computer-readable storage medium. The computer-readable storage medium stores computer code, and when the computer code is run on a computer, the computer is enabled to perform operations and/or processing performed by the first communication apparatus in the methods provided in this application.

This application further provides a computer-readable storage medium. The computer-readable storage medium stores computer code, and when the computer code is run on a computer, the computer is enabled to perform operations and/or processing performed by the second communication apparatus in the methods provided in this application.

This application further provides a computer-readable storage medium. The computer-readable storage medium stores computer code, and when the computer code is run on a computer, the computer is enabled to perform operations and/or processing performed by the sensing initiator in the methods provided in this application.

This application further provides a computer-readable storage medium. The computer-readable storage medium stores computer code, and when the computer code is run on a computer, the computer is enabled to perform operations and/or processing performed by the sensing responder in the methods provided in this application.

This application further provides a computer program product. The computer program product includes computer code or a computer program, and when the computer code or the computer program is run on a computer, operations and/or processing performed by the sensing by proxy initiator in the methods provided in this application are/is performed.

This application further provides a computer program product. The computer program product includes computer code or a computer program, and when the computer code or the computer program is run on a computer, operations and/or processing performed by the sensing by proxy responder in the methods provided in this application are/is performed.

This application further provides a computer program product. The computer program product includes computer code or a computer program, and when the computer code or the computer program is run on a computer, operations and/or processing performed by the first communication apparatus in the methods provided in this application are/is performed.

This application further provides a computer program product. The computer program product includes computer code or a computer program, and when the computer code or the computer program is run on a computer, operations and/or processing performed by the second communication apparatus in the methods provided in this application are/is performed.

This application further provides a computer program product. The computer program product includes computer code or a computer program, and when the computer code or the computer program is run on a computer, operations and/or processing performed by the sensing initiator in the methods provided in this application are/is performed.

This application further provides a computer program product. The computer program product includes computer code or a computer program, and when the computer code or the computer program is run on a computer, operations and/or processing performed by the sensing responder in the methods provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, electrical connections, mechanical connections, or connections in other forms.

The units described as separate parts may or may not be physically separate, and parts displayed as units may or may not be physical units, may be located in one location, or may be distributed on a plurality of network units. Some or all of the units may be selected based on an actual requirement to implement the technical effect of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The foregoing readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information indication method in WLAN sensing, comprising:

   transmitting, by a sensing by proxy initiator, a sensing by proxy request frame, wherein the sensing by proxy request frame comprises addresses of N sensing responders, an address of one sensing responder is used to identify one sensing responder, the sensing by proxy request frame further comprises role indication information, the role indication information indicates roles of the N sensing responders in a sensing measurement instance, the roles comprise any one of the following: a sensing transmitter, a sensing receiver, and a sensing transmitter and a sensing receiver, and N is an integer greater than or equal to 1; and

receiving, by the sensing by proxy initiator, a sensing by proxy response frame.

2. An information indication method in WLAN sensing, comprising:

receiving, by a sensing by proxy responder, a sensing by proxy request frame, wherein the sensing by proxy request frame comprises addresses of N sensing responders, an address of one sensing responder is used to identify one sensing responder, the sensing by proxy request frame further comprises role indication information, the role indication information indicates roles of the N sensing responders in a sensing measurement instance, the roles comprise any one of the following: a sensing transmitter, a sensing receiver, and a sensing transmitter and a sensing receiver, and N is an integer greater than or equal to 1; and

transmitting, by the sensing by proxy responder, a sensing by proxy response frame.

3. The method according to claim 1 or 2, wherein the sensing by proxy request frame further comprises role present indication information, and the role present indication information indicates whether the role indication information is present; and

the role present indication information is a preset value, indicating that the role indication information is present.

4. The method according to any one of claims 1 to 3, wherein the sensing by proxy request frame further comprises mandatory role indication information, and the mandatory role indication information indicates whether the N sensing responders need to satisfy an indication of the role indication information.

5. The method according to any one of claims 1 to 4, wherein the sensing by proxy response frame comprises the role indication information.

6. An information indication method in WLAN sensing, comprising:

transmitting, by a sensing by proxy initiator, a sensing by proxy request frame, wherein the sensing by proxy request frame comprises an address of a sensing responder, the sensing by proxy request frame further comprises first indication information, and the first indication information indicates whether the sensing responder participates in one or more of the following sensing measurement: trigger frame TF sounding, null data packet announcement NDPA sounding, or sensing responder-to-sensing responder SR2SR sounding; and

receiving, by the sensing by proxy initiator, a sensing by proxy response frame.

7. An information indication method in WLAN sensing, comprising:

receiving, by a sensing by proxy responder, a sensing by proxy request frame, wherein the sensing by proxy request frame comprises an address of a sensing responder, the sensing by proxy request frame further comprises first indication information, and the first indication information indicates whether the sensing responder participates in one or more of the following sensing measurement: trigger frame TF sounding, null data packet announcement NDPA sounding, or sensing responder-to-sensing responder SR2SR sounding; and

transmitting, by the sensing by proxy responder, a sensing by proxy response frame.

8. The method according to claim 6 or 7, wherein the first indication information comprises one or more of the following: a first bitmap, a second bitmap, or a third bitmap, wherein a bit in the first bitmap indicates whether the sensing responder participates in TF sounding, a bit in the second bitmap indicates whether the sensing responder participates in NDPA sounding, and a bit in the third bitmap indicates whether the sensing responder participates in SR2SR sounding; or

the first indication information comprises a fourth bitmap, M bits in the fourth bitmap correspond to one sensing responder, and the M bits indicate whether the corresponding sensing responder participates in TF sounding, NDPA sounding, or SR2SR sounding.

9. The method according to claim 8, wherein the first indication information comprises L third bitmaps, and L is an integer greater than or equal to 1; and

one third bitmap corresponds to one SR2SR sounding pattern, and the SR2SR sounding pattern describes a transmitter and a receiver that are of a sensing physical layer protocol data unit PPDU in SR2SR sounding.

10. The method according to claim 6 or 7, wherein the first indication information comprises one or more of the following corresponding to the sensing responder: a first field, a second field, or a third field, wherein the first field indicates whether the sensing responder corresponding to the first field participates in TF sounding, the second field indicates whether the sensing responder corresponding to the second field participates in NDPA sounding, and the third field indicates whether the sensing responder corresponding to the third field participates in SR2SR sounding; or

the first indication information comprises a fourth field corresponding to the sensing responder, and the fourth field indicates whether the sensing responder corresponding to the fourth field participates in TF sounding, NDPA sounding, or SR2SR sounding.

11. The method according to claim 10, wherein a length of the third field is greater than or equal to L bits, and L is an integer greater than or equal to 1;

a bit in the third field indicates whether the sensing responder corresponding to the third field participates in SR2SR sounding respectively corresponding to L SR2SR sounding patterns; and

one SR2SR sounding pattern corresponds to one or more times of SR2SR sounding, and the SR2SR sounding pattern describes a transmitter and a receiver that are of a sensing PPDU in SR2SR sounding.

12. The method according to any one of claims 6 to 11, wherein the sensing by proxy request frame further comprises second indication information, and the second indication information indicates whether the first indication information is present; and

the second indication information is a preset value, indicating that the first indication information is present.

13. The method according to any one of claims 6 to 12, wherein the sensing by proxy request frame further comprises third indication information, and the third indication information indicates whether the sensing by proxy initiator requests to perform SR2SR sounding in a sensing by proxy procedure.

14. The method according to claim 9 or 11, wherein the sensing by proxy request frame further comprises fourth indication information, the fourth indication information indicates a number of SR2SR sounding patterns, and one SR2SR sounding pattern corresponds to one or more times of SR2SR sounding.

15. The method according to claim 14, wherein the sensing by proxy request frame further comprises fifth indication information, and the fifth indication information indicates a number of times of SR2SR sounding corresponding to each SR2SR sounding pattern.

16. An information indication method in WLAN sensing, comprising:

generating, by a first communication apparatus, a first sensing element, wherein the first sensing element is used by the first communication apparatus to exchange sensing capability information with a second communication apparatus, the first sensing element comprises a first field, a length of the first field is greater than 4 bits, and the first field indicates a maximum total number of sensing measurement setups that the first communication apparatus is capable of setting up with the second communication apparatus; and

transmitting, by the first communication apparatus, the first sensing element to the second communication apparatus.

17. The method according to claim 16, wherein the method further comprises:
receiving, by the first communication apparatus, a second sensing element transmitted by the second communication apparatus, wherein the second sensing element is used by the second communication apparatus to exchange sensing capability information with the first communication apparatus, the second sensing element comprises a second field, a length of the second field is greater than 4 bits, and the second field indicates a maximum total number of sensing measurement setups that the second communication apparatus is capable of setting up with the first communication apparatus.

18. An information indication method in WLAN sensing, comprising:

receiving, by a second communication apparatus, a first sensing element transmitted by a first communication apparatus, wherein the first sensing element is used by the first communication apparatus to exchange sensing capability information with the second communication apparatus; and

parsing, by the second communication apparatus, the first sensing element, wherein the first sensing element comprises a first field, a length of the first field is greater than 4 bits, and the first field indicates a maximum total number of sensing measurement setups that the first communication apparatus is capable of setting up with the second communication apparatus.

19. The method according to claim 18, wherein the method further comprises:
transmitting, by the second communication apparatus, a second sensing element to the first communication apparatus, wherein the second sensing element is used by the second communication apparatus to exchange the sensing capability information with the first communication apparatus, the second sensing element comprises a second field, a length of the second field is greater than 4 bits, and the second field indicates a maximum total number of sensing measurement setups that the second communication apparatus is capable of setting up with the first communication apparatus.

20. An information indication method in WLAN sensing, comprising:

generating, by a first communication apparatus, a first sensing element, wherein the first sensing element is used by the first communication apparatus to exchange sensing capability information with a second communication apparatus, the first sensing element comprises a first field and a second field, the first field indicates a maximum total number of trigger-based sensing measurement setups that the first communication apparatus is capable of setting up with the second communication apparatus, and the second field indicates a maximum total number of non-trigger-based sensing measurement setups that the first communication apparatus is capable of setting up with the second communication apparatus; and
transmitting, by the first communication apparatus, the first sensing element to the second communication apparatus.

21. The method according to claim 20, wherein the method further comprises:
receiving, by the first communication apparatus, a second sensing element transmitted by the second communication apparatus, wherein the second sensing element is used by the second communication apparatus to exchange the sensing capability information with the first communication apparatus, a third field comprised in the second sensing element indicates a maximum total number of trigger-based sensing measurement setups that the second communication apparatus is capable of setting up with the first communication apparatus, and a fourth field comprised in the second sensing element indicates a maximum total number of non-trigger-based sensing measurement setups that the second communication apparatus is capable of setting up with the first communication apparatus.

22. An information indication method in WLAN sensing, comprising:

receiving, by a second communication apparatus, a first sensing element transmitted by a first communication apparatus, wherein the first sensing element is used by the first communication apparatus to exchange sensing capability information with the second communication apparatus; and
parsing, by the second communication apparatus, the first sensing element, wherein the first sensing element comprises a first field and a second field, the first field indicates a maximum total number of trigger-based sensing measurement setups that the first communication apparatus is capable of setting up with the second communication apparatus, and the second field indicates a maximum total number of non-trigger-based sensing measurement setups that the first communication apparatus is capable of setting up with the second communication apparatus.

23. The method according to claim 22, wherein the method further comprises:
transmitting, by the second communication apparatus, a second sensing element to the first communication apparatus, wherein the second sensing element is used by the second communication apparatus to exchange sensing capability information with the first communication apparatus, a third field comprised in the second sensing element indicates a maximum total number of trigger-based sensing measurement setups that the second communication apparatus is capable of setting up with the first communication apparatus, and a fourth field comprised in the second sensing element indicates a maximum total number of non-trigger-based sensing measurement setups that the second communication apparatus is capable of setting up with the first communication apparatus.

24. An information indication method in WLAN sensing, comprising:

transmitting, by a sensing initiator, a sensing measurement setup request frame, wherein the sensing measurement setup request frame is used to request to set up a sensing measurement setup with a sensing responder, the sensing measurement setup request frame comprises first measurement setup indication information, and the first measurement setup indication information indicates whether the sensing initiator is capable of setting up another sensing measurement setup; and
receiving, by the sensing initiator, a sensing measurement setup response frame, wherein the sensing measurement setup response frame is used to accept or reject the request of the sensing initiator.

25. An information indication method in WLAN sensing, comprising:

receiving, by a sensing responder, a sensing measurement setup request frame, wherein the sensing measurement setup request frame is used to request to set up a sensing measurement setup with the sensing responder, the sensing measurement setup request frame comprises first measurement setup indication information, and the first measurement setup indication information indicates whether a sensing initiator is capable of setting another sensing measurement setup; and

transmitting, by the sensing responder, a sensing measurement setup response frame, wherein the sensing measurement setup response frame is used to accept or reject the request of the sensing initiator.

26. The method according to claim 24 or 25, wherein the sensing measurement setup response frame comprises second measurement setup indication information, and the second measurement setup indication information indicates whether the sensing responder is capable of setting another sensing measurement setup.

27. A communication apparatus, comprising a unit or a module configured to perform the method according to any one of claims 1 to 26.

28. A communication apparatus, comprising a processor and a memory, wherein

the memory is configured to store instructions; and
the processor is configured to execute the instructions, so that the method according to any one of claims 1 to 26 is implemented.

29. A communication apparatus, comprising a logic circuit and an interface, wherein the logic circuit is coupled to the interface; and
the interface is configured to input to-be-processed data, the logic circuit processes the to-be-processed data according to the method according to any one of claims 1 to 26, to obtain processed data, and the interface is configured to output the processed data.

30. A wireless communication system, comprising a sensing by proxy initiator configured to perform the method according to claim 1 or claim 11, and a sensing by proxy responder configured to perform the method according to claim 2 or claim 12;

the wireless communication system comprises a first communication apparatus configured to perform the method according to any one of claims 16 and 17, and claims 20 and 21, and a second communication apparatus configured to perform the method according to any one of claims 18 and 19, and claims 22 and 23; or
the wireless communication system comprises a sensing initiator configured to perform the method according to claim 24, and a sensing responder configured to perform the method according to claim 25.

31. A computer-readable storage medium, wherein the computer-readable storage medium is configured to store a computer program, and when the computer program is executed, the method according to any one of claims 1 to 26 is performed.

32. A computer program product, wherein when a computer program or computer code comprised in the computer program product is run on a computer, the method according to any one of claims 1 to 26 is performed.

FIG. 1

FIG. 2

**Sensing element Sensing element**

| Element ID Element identifier | Length Length | Element ID extension Element identifier extension | Sensing Sensing |
|---|---|---|---|

Octets/Octets:  1            1            1            9

| Invitation of responder for sensing Invitation of responder for sensing | BW Bandwidth | Max Tx STS<=80 MHz | Max Tx STS<=160 MHz | Max Tx STS<=320 MHz | Max Rx STS<=80 MHz | Max Rx STS<=160 MHz | Max Rx STS<=320 MHz |
|---|---|---|---|---|---|---|---|

Bits/Bits:    1        3        3        3        3        3        3        3

| Max Tx repetition Maximum transmitter repetitions | Max Rx repetition Maximum receiver repetitions | Max Tx HE-LTF total | Max Rx HE-LTF total | Max Rx EHE-LTF total | Device class Device class | Full bandwidth UL MU-MIMO Full bandwidth UL MU-MIMO | Max number of supported setups Maximum number of supported setups |
|---|---|---|---|---|---|---|---|

Bits/Bits:    3        3        2        2        3        1        1        4

| Poll required Poll required | Reserved Reserved |
|---|---|

Bits/Bits:    1        7

FIG. 3

EP 4 618 612 A1

Access point AP

| Medium access control (MAC) | Physical layer (PHY) |

FIG. 4a

Station STA

| Physical layer (PHY) | Medium access control (MAC) |

FIG. 4b

SBP initiator

SBP responder

S101: Transmit a sensing by proxy request frame, where the sensing by proxy request frame includes addresses of N sensing responders, an address of one sensing responder is used to identify one sensing responder, the sensing by proxy request frame further includes first indication information, and the first indication information indicates whether the N sensing responders participate in one or more of the following sensing measurement: TF sounding, NDPA sounding, or SR2SR sounding

S102: Transmit a sensing by proxy response frame

FIG. 5

**SBP request frame**
**Sensing by proxy request frame**

| Category | Public action | Dialog token | SBP parameters element | Sensing measurement parameters element |
|---|---|---|---|---|
| Category | Public action | Dialog token | SBP parameters element | Sensing measurement parameters element |

Octets/Octets:  1          1          1       Variable/Variable      Variable/Variable

FIG. 6a

**SBP response frame**
**Sensing by proxy response frame**

| Category Category | Public action Public action | Dialog token Dialog token | Status code Status code | Measurement setup ID Measurement setup ID | SBP parameters element SBP parameters element | Sensing measurement parameters element Sensing measurement parameters element |
|---|---|---|---|---|---|---|
| Octets/Octets:    1 | 1 | 1 | 2 | 0 or 1 | 0 or variable (variable) | 0 or variable/variable |

FIG. 6b

**SBP parameters element**
**SBP parameters element**

| Element ID Element identifier | Length Length | Element ID extension Element identifier extension | SBP parameters control SBP parameters control | Sensing responder addresses Sensing responder addresses | Sensing responder IDs Sensing responder identifiers | TF sounding responder bitmap TF sounding responder bitmap | NDPA sounding responder bitmap NDPA sounding responder bitmap | SR2SR sounding responder bitmap SR2SR sounding responder bitmap |
|---|---|---|---|---|---|---|---|---|
| Octets: 1 Octets | 1 | 1 | 2 | 0 or N*6 | 0 or variable (variable) | 0 or $\lceil N/8 \rceil$ | 0 or $\lceil N/8 \rceil$ | 0 or $\lceil N/8 \rceil$ |

FIG. 7a

**SBP parameters element**
**SBP parameters element**

| Element ID Element identifier | Length Length | Element ID extension Element identifier extension | SBP parameters control SBP parameters control | Sensing responder addresses Sensing responder addresses | Sensing responder IDs Sensing responder identifiers | TF sounding responder bitmap TF sounding responder bitmap | NDPA sounding responder bitmap NDPA sounding responder bitmap | SR2SR sounding bitmap SR2SR sounding bitmap |
|---|---|---|---|---|---|---|---|---|
| Octets: 1 Octets | 1 | 1 | 2 | 0 or N*6 | 0 or variable (variable) | 0 or $\lceil N/8 \rceil$ | 0 or $\lceil N/8 \rceil$ | 0 or $\lceil N/8 \rceil * L$ |

FIG. 7b

| SBP parameters control SBP parameters control | | | | | | | |
|---|---|---|---|---|---|---|---|
| SBP request SBP request | Sensing responder Sensing responder | Number of sensing responders Number of sensing responders | Mandatory number of responders Mandatory number of responders | Preferred responder list Preferred responder list | Number of preferred responders Number of preferred responders | Mandatory preferred responder Mandatory preferred responder | SR2SR sounding request SR2SR sounding request |

Bits:    1     1     4     1     1     4     1     1
Bits

| Number of SR2SR sounding patterns Number of SR2SR sounding patterns | TF sounding responder bitmap present TF sounding responder bitmap present | NDPA sounding responder bitmap present NDPA sounding responder bitmap present | SR2SR sounding responder bitmap present SR2SR sounding responder bitmap present | SR2SR periodicity SR2SR periodicity | SR2SR sounding bitmap present SR2SR sounding bitmap present |
|---|---|---|---|---|---|

Bits:    4     1     1     1     2     1
Bits

FIG. 8

**SBP parameters element**

| Element ID<br>Element<br>identifier | Length<br>Length | Element ID<br>extension<br>Element identifier<br>extension | SBP parameters<br>control<br>SBP parameters<br>control | Sensing responder parameters<br>Sensing responder parameters |
|---|---|---|---|---|

Octets:         1            1            1            3            8*N
Octets

**Sensing responder parameters**

| Sensing responder<br>address<br>Sensing responder<br>address | Sensing responder ID<br>Sensing responder<br>identifier | TF sounding<br>responder<br>TF sounding<br>responder | NDPA sounding<br>responder<br>NDPA sounding<br>responder | SR2SR sounding<br>responder<br>SR2SR sounding<br>responder |
|---|---|---|---|---|

Bits:         48            12            1            1            1
Bits

FIG. 9a

**SBP parameters element**
**SBP parameters element**

| Element ID Element identifier | Length Length | Element ID extension Element identifier extension | SBP parameters control SBP parameters control | Sensing responder parameters Sensing responder parameters |
|---|---|---|---|---|

Octets:    1        1        1        3        10*N
Octets

**Sensing responder parameters**
**Sensing responder parameters**

| Sensing responder address Sensing responder address | Sensing responder ID Sensing responder identifier | TF sounding responder TF sounding responder | NDPA sounding responder NDPA sounding responder | SR2SR sounding measurement bitmap SR2SR sounding measurement bitmap |
|---|---|---|---|---|

Bits:    48       12      1      1      16
Bits

FIG. 9b

EP 4 618 612 A1

| SBP request SBP request | Sensing responder Sensing responder | Number of sensing responders Number of sensing responders | Mandatory number of responders Mandatory number of responders | Preferred responder list Preferred responder list | Number of preferred responders Number of preferred responders | Mandatory preferred responder Mandatory preferred responder | SR2SR sounding request SR2SR sounding request | Number of SR2SR sounding patterns Number of SR2SR sounding patterns | SR2SR periodicity SR2SR periodicity | Reserved Reserved |
|---|---|---|---|---|---|---|---|---|---|---|
| Bits: 1 Bits | 1 | 4 | 1 | 1 | 4 | 1 | 1 | 4 | 2 | 4 |

SBP parameters control
SBP parameters control

FIG. 10

| SBP initiator | | SBP responder |
|---|---|---|

S201: Transmit a sensing by proxy request frame, where the sensing by proxy request frame includes addresses of N sensing responders, an address of one sensing responder is used to identify one sensing responder, the sensing by proxy request frame further includes role indication information, the role indication information indicates roles of the N sensing responders in a sensing measurement instance, and the roles include any one of the following: a sensing transmitter, a sensing receiver, and a sensing transmitter and a sensing receiver.

S202: Transmit a sensing by proxy response frame

FIG. 11

**SBP parameters element**
**SBP parameters element**

| Element ID / Element identifier | Length / Length | Element ID extension / Element identifier extension | SBP parameters control / SBP parameters control | Sensing responder addresses / Sensing responder addresses | Sensing responder IDs / Sensing responder identifiers | Role bitmap / Role bitmap |
|---|---|---|---|---|---|---|
| 1 | 1 | 1 | 2 | 0 or N*6 | 0 or variable (variable) | 0 or variable (variable) |

Octets:
Octets

FIG. 12

SBP parameters element
SBP parameters element

| Element ID Element identifier | Length Length | Element ID extension Element identifier extension | SBP parameters control SBP parameters control | Sensing responder addresses Sensing responder addresses | Sensing responder IDs Sensing responder identifiers | Number of TX responders Number of TX responders |
|---|---|---|---|---|---|---|

Octets:  1          1          1                    2            0 or N*6        0 or variable      0 or $\lceil \left( log_2^{N} \right)/8 \rceil$
Octets                                                                          (variable)

| Number of RX responders Number of RX responders | Number of TX and RX responders Number of TX and RX responders |
|---|---|

0 or $\lceil \left( log_2^{N} \right)/8 \rceil$      0 or $\lceil \left( log_2^{N} \right)/8 \rceil$

FIG. 13

| SBP request SBP request | Sensing responder Sensing responder | Number of sensing responders Number of sensing responders | Mandatory number of responders Mandatory number of responders | Preferred responder list Preferred responder list | Number of preferred responders Number of preferred responders | Mandatory preferred responder Mandatory preferred responder | Role indication Role indication | Role mandatory Role mandatory | Reserved Reserved |
|---|---|---|---|---|---|---|---|---|---|

**SBP parameters control**
**SBP parameters control**

Bits:  1    1    4    1    1    4    1    1    1    1
Bits

FIG. 14

**SBP parameters element**

| Element ID Element identifier | Length Length | Element ID extension Element identifier extension | SBP parameters control SBP parameters control | Sensing responder parameters Sensing responder parameters |
|---|---|---|---|---|

Octets:     1        1        1            2             8*N
Octets

**Sensing responder parameters**

| Sensing responder address Sensing responder address | Sensing responder ID Sensing responder identifier | Role Role |
|---|---|---|

Bits:         48            12         2
Bits

FIG. 15

| SBP initiator | SBP responder |
|---|---|

S301: Transmit a sensing by proxy request frame, where the sensing by proxy request frame includes addresses of N sensing responders, an address of one sensing responder is used to identify one sensing responder, the sensing by proxy request frame further includes first indication information and role indication information, the first indication information indicates whether the N sensing responders participate in SR2SR sounding, and the role indication information indicates a role of a sensing responder participating in SR2SR sounding in a sensing measurement instance

S302: Transmit a sensing by proxy response frame

FIG. 16

**SBP parameters element**
**SBP parameters element**

| Element ID Element identifier | Length Length | Element ID extension Element identifier extension | SBP parameters control SBP parameters control | Sensing responder addresses Sensing responder addresses | Sensing responder IDs Sensing responder identifiers | SR2SR sounding bitmap SR2SR sounding bitmap | SR2SR role bitmap SR2SR role bitmap |
|---|---|---|---|---|---|---|---|
| Octets: Octets    1 | 1 | 1 | 2 | 0 or N*6 | 0 or variable (variable) | 0 or $\lceil N/8 \rceil * L$ | 0 or $\lceil N/8 \rceil * L$ |

FIG. 17

| SBP request SBP request | Sensing responder Sensing responder | Number of sensing responders Number of sensing responders | Mandatory number of responders Mandatory number of responders | Preferred responder list Preferred responder list | Number of preferred responders Number of preferred responders | Mandatory preferred responder Mandatory preferred responder | SR2SR sounding request SR2SR sounding request |
|---|---|---|---|---|---|---|---|

Bits:     1          1          4          1          1          4          1          1
Bits

| Number of SR2SR sounding patterns Number of SR2SR sounding patterns | SR2SR sounding bitmap present SR2SR sounding bitmap present | SR2SR role bitmap present SR2SR role bitmap present | SR2SR role mandatory SR2SR role mandatory | SR2SR periodicity SR2SR periodicity | Reserved Reserved |
|---|---|---|---|---|---|

Bits:     4          1          1          1          2          1
Bits

FIG. 18

**SBP parameters element**

| Element ID Element identifier | Length Length | Element ID extension Element identifier extension | SBP parameters control SBP parameters control | Sensing responder parameters Sensing responder parameters |
|---|---|---|---|---|

Octets: 1     1     1     3     12*N

**Sensing responder parameters**

| Sensing responder address Sensing responder address | Sensing responder ID Sensing responder identifier | SR2SR sounding measurement bitmap SR2SR sounding measurement bitmap | SR2SR role measurement bitmap SR2SR role measurement bitmap |
|---|---|---|---|

Bits: 48     12     16     16

FIG. 19

71

| First communication apparatus | Second communication apparatus |
|---|---|

S401: Generate a first sensing element, where the first sensing element is used by the first communication apparatus to exchange sensing capability information with the second communication apparatus, the first sensing element includes a maximum number of supported sensing measurement setups field, a length of the maximum number of supported sensing measurement setups field in the first sensing element is greater than 4 bits, and the maximum number of supported sensing measurement setups field in the first sensing element indicates a maximum total number of sensing measurement setups that the first communication apparatus can set up with the second communication apparatus

S402: Transmit the first sensing element

S403: Parse the first sensing element to obtain the maximum total number of sensing measurement setups that the first communication apparatus can set up with the second communication apparatus

S404: Transmit a second sensing element, where the second sensing element is used by the second communication apparatus to exchange sensing capability information with the first communication apparatus, the second sensing element includes a maximum number of supported sensing measurement setups field, a length of the maximum number of supported sensing measurement setups field in the second sensing element is greater than 4 bits, and the maximum number of supported sensing measurement setups field in the second sensing element indicates a maximum total number of sensing measurement setups that the second communication apparatus can set up with the first communication apparatus

FIG. 20

| Invitation of responder for sensing | BW Bandwidth | Max Tx STS<=80 MHz | Max Tx STS<=160 MHz | Max Tx STS<=320 MHz | Max Rx STS<=80 MHz | Max Rx STS<=160 MHz | Max Rx STS<=320 MHz |
|---|---|---|---|---|---|---|---|
| 1 | 3 | 3 | 3 | 3 | 3 | 3 | 3 |

Bits/Bits:

| Max Tx repetition Maximum transmitter repetitions | Max Rx repetition Maximum receiver repetitions | Max Tx HE-LTF total | Max Rx HE-LTF total | Max Rx EHE-LTF total | Device class Device class | Full bandwidth UL MU-MIMO Full bandwidth UL MU-MIMO | Max number of supported setups Maximum number of supported setups |
|---|---|---|---|---|---|---|---|
| 3 | 3 | 2 | 2 | 3 | 1 | 1 | 5 |

Bits/Bits:

| Poll required Poll required | Reserved Reserved |
|---|---|
| 1 | 6 |

Bits/Bits:

FIG. 21

| First communication apparatus | | Second communication apparatus |
|---|---|---|

S501: Generate a first sensing element, where the first sensing element is used by the first communication apparatus to exchange sensing capability information with the second communication apparatus, the first sensing element includes a maximum number of supported trigger-based sensing measurement setups field and a maximum number of supported non-trigger-based sensing measurement setups field, the maximum number of supported trigger-based sensing measurement setups field in the first sensing element indicates a maximum total number of trigger-based sensing measurement setups that the first communication apparatus can set up with the second communication apparatus, and the maximum number of supported non-trigger-based sensing measurement setups field in the first sensing element indicates a maximum total number of non-trigger-based sensing measurement setups that the first communication apparatus can set up with the second communication apparatus

S502: Transmit the first sensing element

S503: Parse the first sensing element to obtain the maximum total number of trigger-based sensing measurement setups that the first communication apparatus can set up with the second communication apparatus and the maximum total number of non-trigger-based sensing measurement setups that the first communication apparatus can set up with the second communication apparatus

S504: Transmit a second sensing element, where the second sensing element is used by the second communication apparatus to exchange sensing capability information with the first communication apparatus, a maximum number of supported trigger-based sensing measurement setups field included in the second sensing element indicates a maximum total number of trigger-based sensing measurement setups that the second communication apparatus can set up with the first communication apparatus, and a maximum number of supported non-trigger-based sensing measurement setups field included in the second sensing element indicates a maximum total number of non-trigger-based sensing measurement setups that the second communication apparatus can set up with the first communication apparatus

FIG. 22

| Invitation of responder for sensing Invitation of responder for sensing | BW Bandwidth | Max Tx STS<=80 MHz | Max Tx STS<=160 MHz | Max Tx STS<=320 MHz | Max Rx STS<=80 MHz | Max Rx STS<=160 MHz | Max Rx STS<=320 MHz |
|---|---|---|---|---|---|---|---|

Bits/Bits:  1   3   3   3   3   3   3   3

| Max Tx repetition Maximum transmitter repetitions | Max Rx repetition Maximum receiver repetitions | Max Tx HE-LTF total | Max Rx HE-LTF total | Max Rx EHE-LTF total | Device class Device class | Full bandwidth UL MU-MIMO Full bandwidth UL MU-MIMO | Maximum number of supported trigger-based sensing measurement setups |
|---|---|---|---|---|---|---|---|

Bits/Bits:  3   3   2   2   3   1   1   4

| Maximum number of supported non-trigger-based sensing measurement setups | Poll required Poll required | Reserved Reserved |
|---|---|---|

Bits/Bits:  4   1   2

FIG. 23

Sensing initiator

Sensing responder

S601: Transmit a sensing measurement setup request frame, where the sensing measurement setup request frame is used to request to set up a sensing measurement setup with the sensing responder, the sensing measurement setup request frame includes first measurement setup indication information, and the first measurement setup indication information indicates whether the sensing initiator can set up another sensing measurement setup

S602: Transmit a sensing measurement setup response frame, where the sensing measurement setup response frame is used to accept or reject the request of the sensing initiator

FIG. 24

**Sensing measurement setup request frame**
**Sensing measurement setup request frame**

| Category Category | Public action Public action | Dialog token Dialog token | Measurement setup ID Measurement setup identifier | Measurement setup control Measurement setup control | Sensing measurement parameters element Sensing measurement parameters element |
|---|---|---|---|---|---|

Octets:   1         1         1         1         1        Variable/
Octets                                                  Variable

FIG. 25

| Measurement setup control Measurement setup control | |
|---|---|
| New measurement setup New measurement setup | Reserved Reserved |

Bits:      1          7
Bits

## FIG. 26a

| Measurement setup control Measurement setup control | | |
|---|---|---|
| New TB measurement setup New TB measurement setup | New non-TB measurement setup New non-TB measurement setup | Reserved Reserved |

Bits:      1          1          6
Bits

## FIG. 26b

**Sensing measurement setup response frame**
**Sensing measurement setup response frame**

| Category Category | Public action Public action | Dialog token Dialog token | Status code Status code | Measurement setup control Measurement setup control | Sensing measurement parameters element Sensing measurement parameters element |
|---|---|---|---|---|---|
| | | | | | |

Octets:   1      1      1      2      1      Variable/
Octets                                                 Variable

## FIG. 27

| Invitation of responder for sensing Invitation of responder for sensing | BW Bandwidth | Max Tx STS<=80 MHz | Max Tx STS<=160 MHz | Max Tx STS<=320 MHz | Max Rx STS<=80 MHz | Max Rx STS<=160 MHz | Max Rx STS<=320 MHz |
|---|---|---|---|---|---|---|---|
| Bits/Bits: 1 | 3 | 3 | 3 | 3 | 3 | 3 | 3 |

| Max Tx repetition Maximum transmitter repetitions | Max Rx repetition Maximum receiver repetitions | Max Tx HE-LTF total | Max Rx HE-LTF total | Max Rx EHE-LTF total | Device class Device class | Full bandwidth UL MU-MIMO Full bandwidth UL MU-MIMO | Support TB setups Support TB setups | Support non-TB setups Support non-TB setups |
|---|---|---|---|---|---|---|---|---|
| Bits/Bits: 3 | 3 | 2 | 2 | 3 | 1 | 1 | 1 | 1 |

| Poll required Poll required | Reserved Reserved |
|---|---|
| Bits/Bits: 1 | 9 |

FIG. 28

Transceiver unit — 10

Processing unit — 20

Communication apparatus

FIG. 29

Communication apparatus

Processor — 1001

Instruction

Memory — 1003

Instruction

Transceiver — 1002

Control circuit

Antenna

FIG. 30

Chip

Logic circuit — 901

Interface — 902

FIG. 31

## INTERNATIONAL SEARCH REPORT

International application No.

**PCT/CN2023/136627**

### A. CLASSIFICATION OF SUBJECT MATTER

H04W 24/08(2009.01)i

According to International Patent Classification (IPC) or to both national classification and IPC

### B. FIELDS SEARCHED

Minimum documentation searched (classification system followed by classification symbols)

IPC:H04W,H04B

Documentation searched other than minimum documentation to the extent that such documents are included in the fields searched

Electronic data base consulted during the international search (name of data base and, where practicable, search terms used)

IEEE, CNTXT, DWPI, ENTXT, ENTXTC: NDPA探测, R2R探测, SR2SR探测, TF探测, 测量, 测量建立, 测量配置, 测量设置, 代理, 地址, 发起, 发射, 发送, 分类, 感知, 感知建立, 感知设置, 感知元素, 角色, 接收, 类型, 能力, 数, 响应, 指示, 种类, 最大, address, by, initiator, measurement, NDPA, proxy, R2R, responder, role, SBP, sensing, setup, souding, sounding, SR2SR, TF

### C. DOCUMENTS CONSIDERED TO BE RELEVANT

| Category* | Citation of document, with indication, where appropriate, of the relevant passages | Relevant to claim No. |
|---|---|---|
| A | CN 114731679 A (BEIJING XIAOMI MOBILE SOFTWARE CO., LTD.) 08 July 2022 (2022-07-08) <br> description, paragraphs 37-91 | 1-32 |
| A | CN 115243307 A (CHENGDU XGIMI TECHNOLOGY CO., LTD.) 25 October 2022 (2022-10-25) <br> description, paragraphs 63-172 | 1-32 |
| A | CN 114760653 A (CHENGDU XGIMI TECHNOLOGY CO., LTD.) 15 July 2022 (2022-07-15) <br> entire document | 1-32 |
| A | CN 114828075 A (CHENGDU XGIMI TECHNOLOGY CO., LTD.) 29 July 2022 (2022-07-29) <br> entire document | 1-32 |
| A | WO 2022124869 A1 (LG ELECTRONICS INC.) 16 June 2022 (2022-06-16) <br> entire document | 1-32 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 February 2024** | **20 February 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/136627** |

**Box No. III    Observations where unity of invention is lacking (Continuation of item 3 of first sheet)**

This International Searching Authority found multiple inventions in this international application, as follows:

This International Authority is of the opinion that the claims comprise three inventions set forth in independent claims (1, 2, 6, 7), (16, 18, 20, 22) and (24, 25), wherein the invention set forth in independent claims (1, 2, 6, 7) and the two inventions set forth in independent claims (16, 18, 20, 22) and (24, 25) do not have a same or corresponding technical feature, and the same or corresponding technical feature between the invention set forth in independent claims (16, 18, 20, 22) and the invention set forth in independent claims (24, 25) is: sensing and measurement setup. However, the technical feature is disclosed in D1 (CN 114731679 A). Therefore, the three inventions do not have a same or corresponding special technical feature that defines a contribution which the inventions make over the prior art, do not have a technical relationship therebetween, do not fall within a single general inventive concept, and therefore do not comply with the requirement of unity of invention and do not comply with PCT Rule 13.1.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
Information on patent family members

International application No.

**PCT/CN2023/136627**

| Patent document cited in search report | | | Publication date (day/month/year) | Patent family member(s) | | | Publication date (day/month/year) |
|---|---|---|---|---|---|---|---|
| CN | 114731679 | A | 08 July 2022 | WO | 2023159612 | A1 | 31 August 2023 |
| CN | 115243307 | A | 25 October 2022 | None | | | |
| CN | 114760653 | A | 15 July 2022 | WO | 2023071250 | A1 | 04 May 2023 |
| CN | 114828075 | A | 29 July 2022 | None | | | |
| WO | 2022124869 | A1 | 16 June 2022 | JP | 2023554323 | A | 27 December 2023 |
| | | | | EP | 4262267 | A1 | 18 October 2023 |
| | | | | KR | 20230114266 | A | 01 August 2023 |

Form PCT/ISA/210 (patent family annex) (July 2022)

**EP 4 618 612 A1**

**Patent documents cited in the description**

- CN 202211557914